(19) Europäisches Patentamt
European Patent Office
Office européen des brevets

(11) **EP 4 432 593 A1**

(12) **EUROPEAN PATENT APPLICATION**

(43) Date of publication:
**18.09.2024 Bulletin 2024/38**

(21) Application number: **24163633.1**

(22) Date of filing: **14.03.2024**

(51) International Patent Classification (IPC):
**H04L 5/00** *(2006.01)* **H04B 7/06** *(2006.01)*
**H04W 72/23** *(2023.01)*

(52) Cooperative Patent Classification (CPC):
**H04B 7/0695; H04L 5/001; H04L 5/0023;
H04L 5/0035; H04L 5/0053; H04L 5/0094;**
H04W 72/232

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2023 US 202363452073 P**

(71) Applicant: **Comcast Cable Communications LLC
Philadelphia, Pennsylvania 19103 (US)**

(72) Inventors:
• **CIRIK, Ali Cagatay
Philadelphia, 19103 (US)**
• **ZHOU, Hua
Philadelphia, 19103 (US)**
• **DINAN, Esmael Hejazi
Philadelphia, 19103 (US)**
• **JEON, Hyoungsuk
Philadelphia, 19103 (US)**
• **PRASAD, Gautham
Philadelphia, 19103 (US)**

(74) Representative: **V.O.
P.O. Box 87930
2508 DH Den Haag (NL)**

(54) **BEAM MANAGEMENT IN SCHEDULING OF MULTIPLE CELLS**

(57) A wireless device may communicate with a base station via a set of cells. One or more configuration parameters may indicate transmission configuration indicator states for the set of cells. An activation command may activate one or more transmission configuration indicator states for a cell of the set of cells. Information scheduling communication via the cell may indicate a transmission configuration indicator state, of the transmission configuration indicator states, that is not of the one or more activated transmission configuration indicator states for the cell. A default transmission configuration indicator state may be used for communication via the cell and/or communication via the cell may be ignored/dropped.

FIG. 20

**Description**

CROSS-REFERENCE TO RELATED APPLICATIONS

This application claims the benefit of U.S. Provisional Application No. 63/452,073 filed on March 14, 2023. The above-referenced application is hereby incorporated by reference in its entirety.

BACKGROUND

A wireless device communicates with a base station. The wireless device receives configuration parameters indicating a plurality of transmission configuration indicator states for communicating via a plurality of cells. One or more of the plurality of transmission configuration indicator states are activated for use in communicating via the plurality of cells.

SUMMARY

The following summary presents a simplified summary of certain features. The summary is not an extensive overview and is not intended to identify key or critical elements.

A set of transmission configuration indicator states may be configured for use by a wireless device in communications via a plurality of cells. A communication via a cell may be scheduled for the wireless device. The set of transmission configuration indicator states may include a first transmission configuration indicator state configured for the cell, but the first transmission configuration indicator state may or may not be activated for the cell. If the first transmission configuration indicator state is activated for the cell, the first transmission configuration indicator state may be used in communications via the cell. If the first transmission configuration indicator state is not activated for the cell, an activated default transmission configuration indicator state may be used for communications, and/or communications may be ignored or skipped. By using an activated default transmission configuration indicator state for communications,, for example, if a message schedules the communications based on an inactive transmission configuration indicator state, advantages may result, such as reduced error rates, increased data rates, reduced retransmissions, reduced battery consumption, and/or reduce latency.

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of TCI state activation.

FIG. 18 shows an example of TCI state activation.

FIG. 19 shows an example of beam management in multi-cell scheduling.

FIG. 20 shows an example flow chart of beam management in multi-cell scheduling.

FIG. 21 shows an example flow chart of beam management in multi-cell scheduling.

FIG. 22 shows an example flow chart of beam management in multi-cell scheduling.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems.

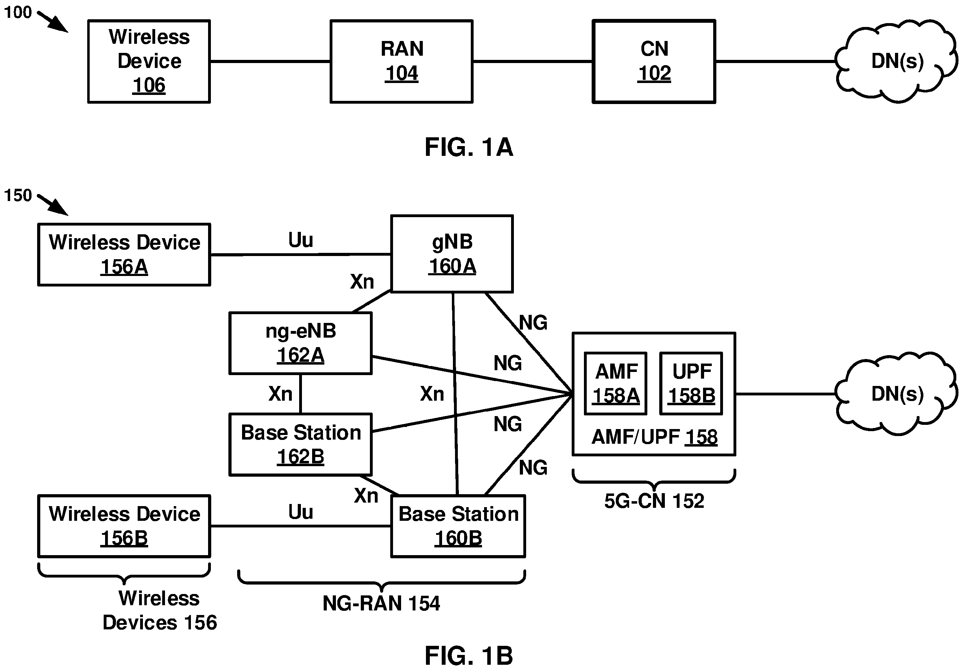

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

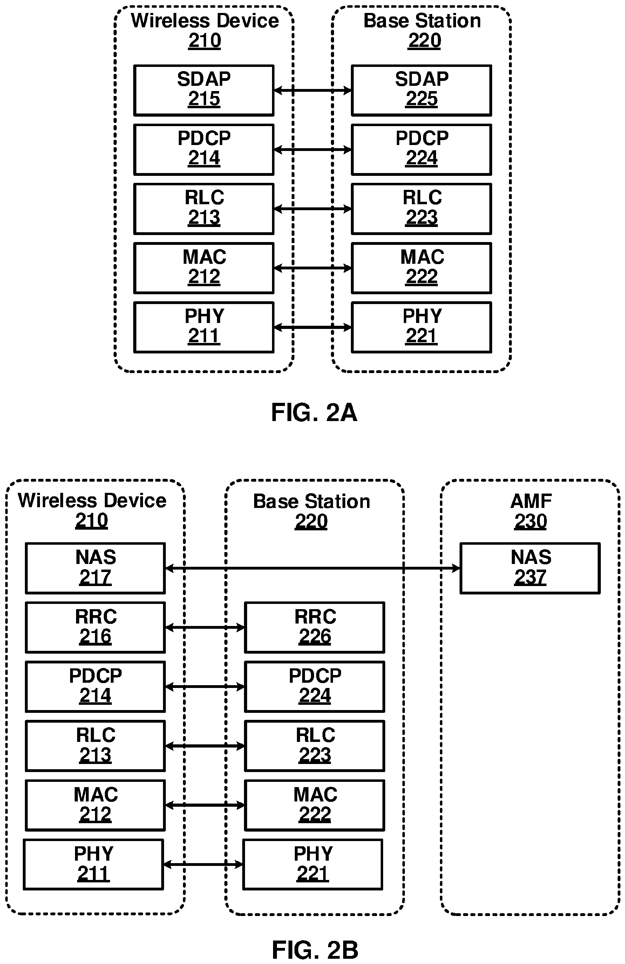

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

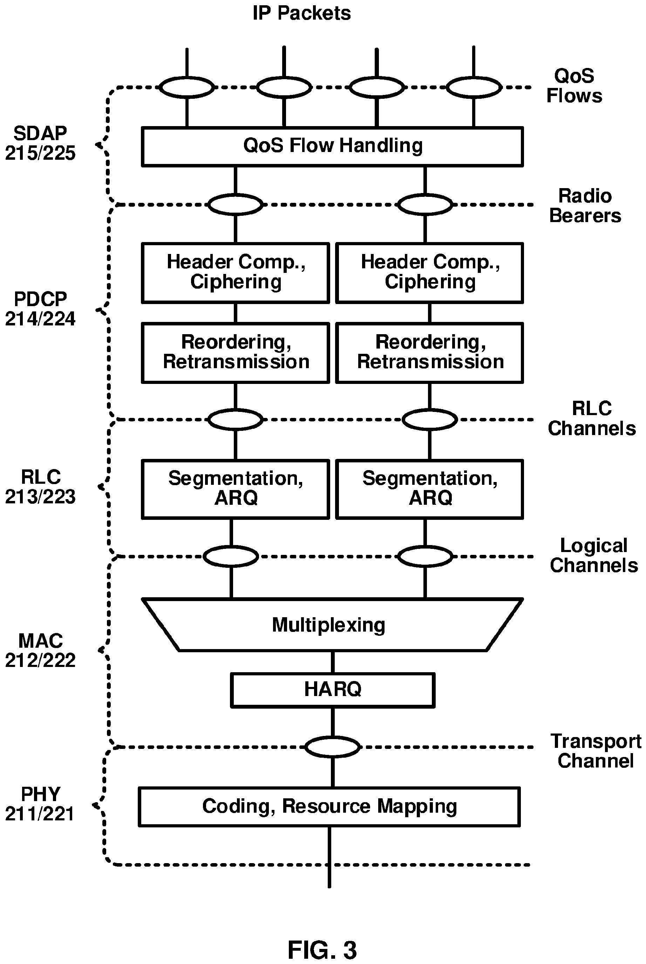

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)).The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

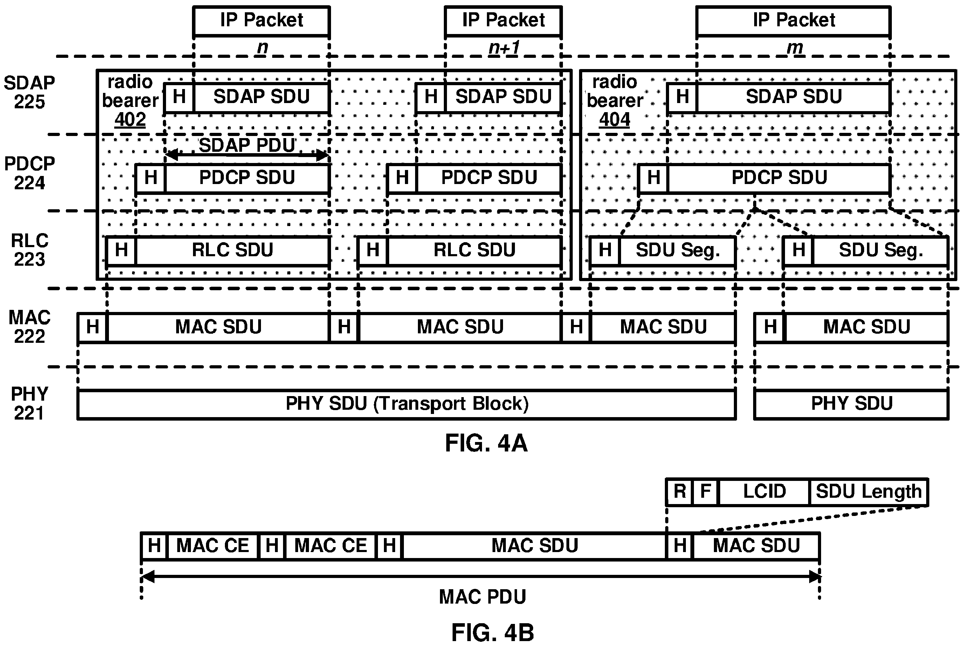

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

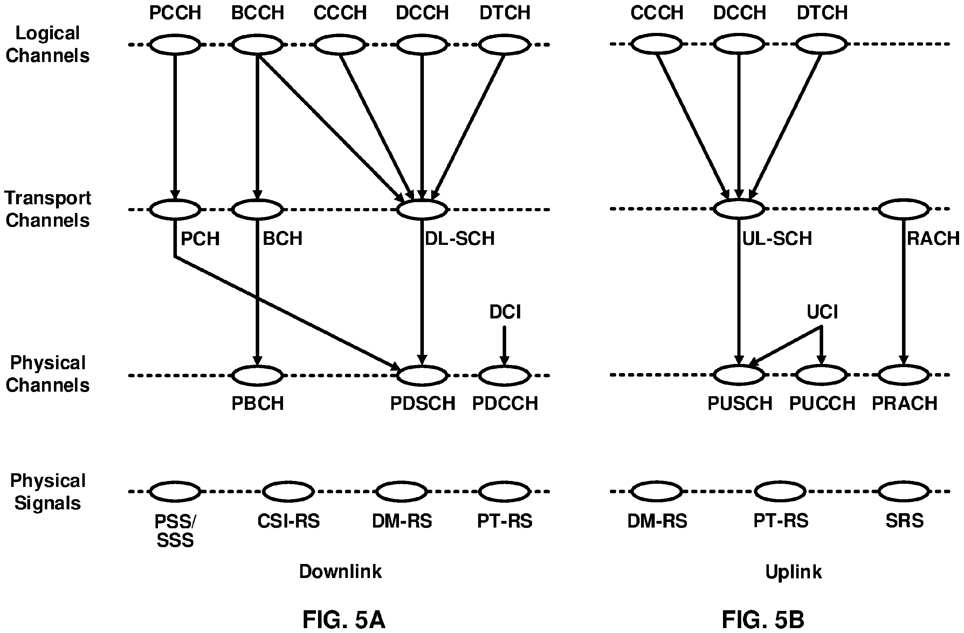

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

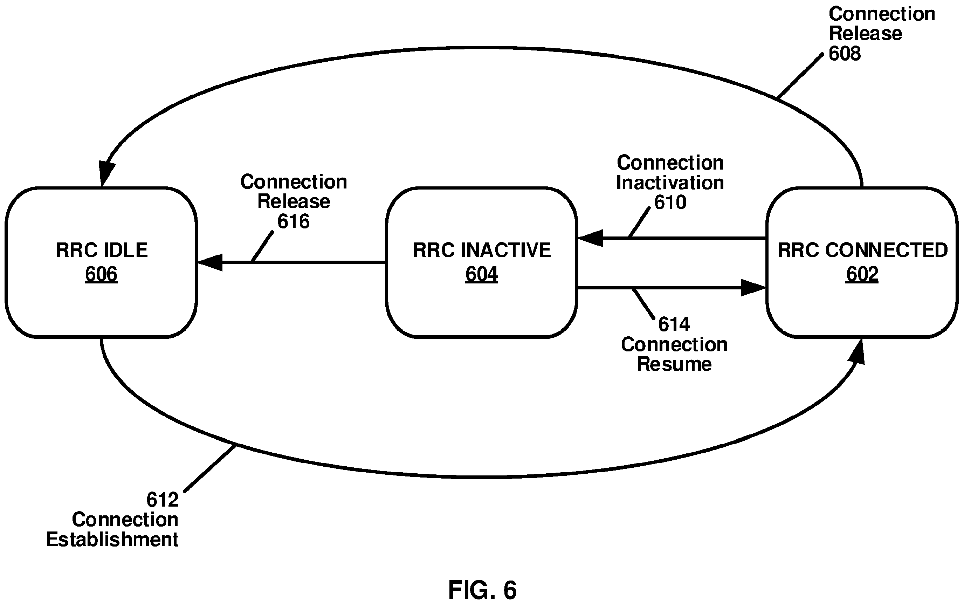

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

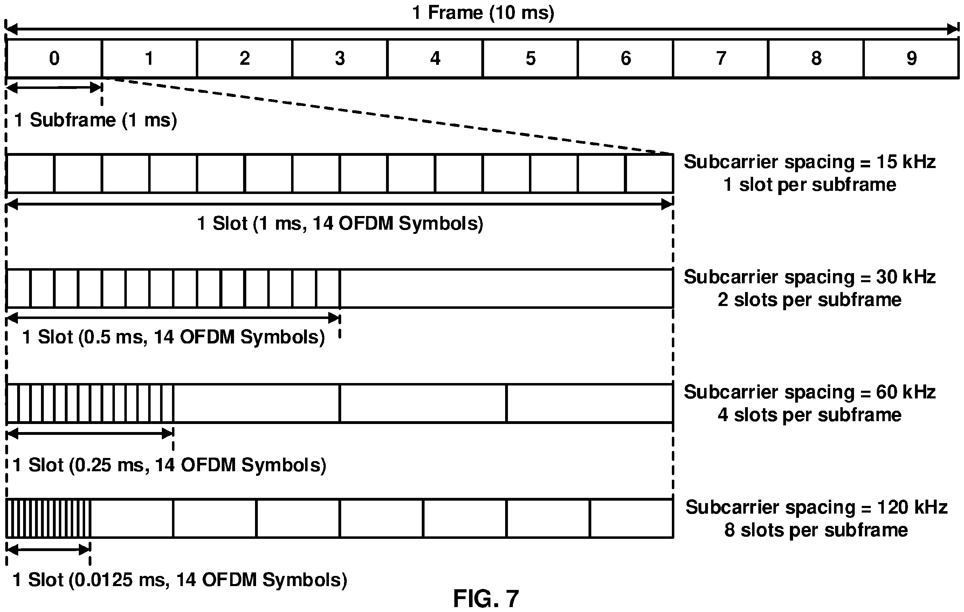

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

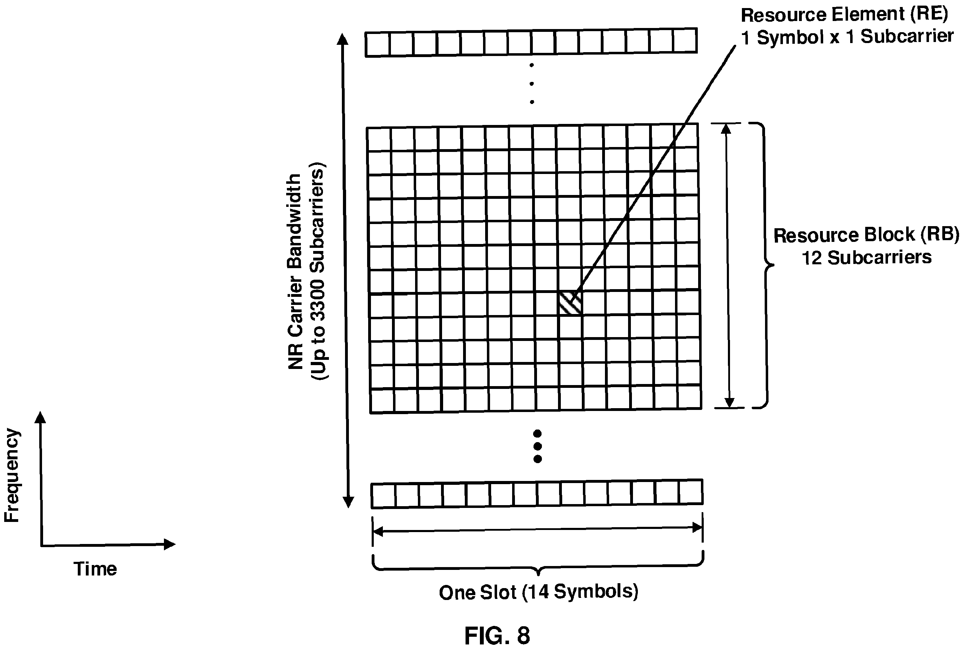

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG.

8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

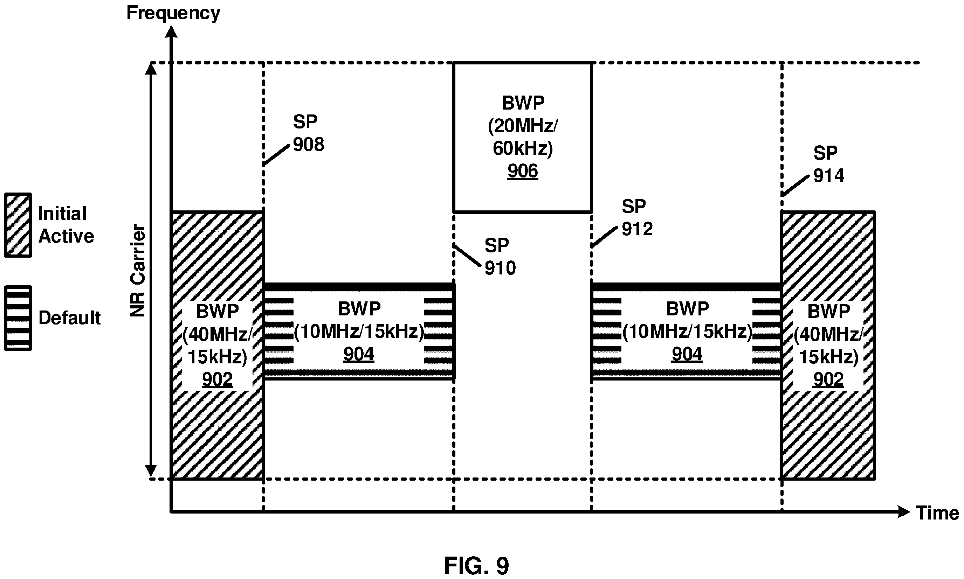

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

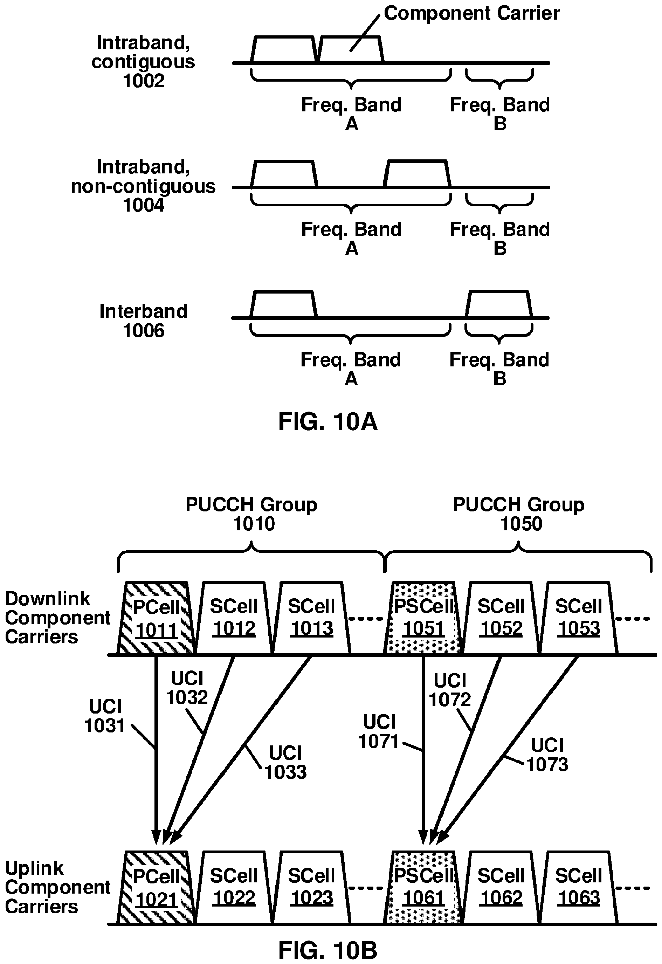

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

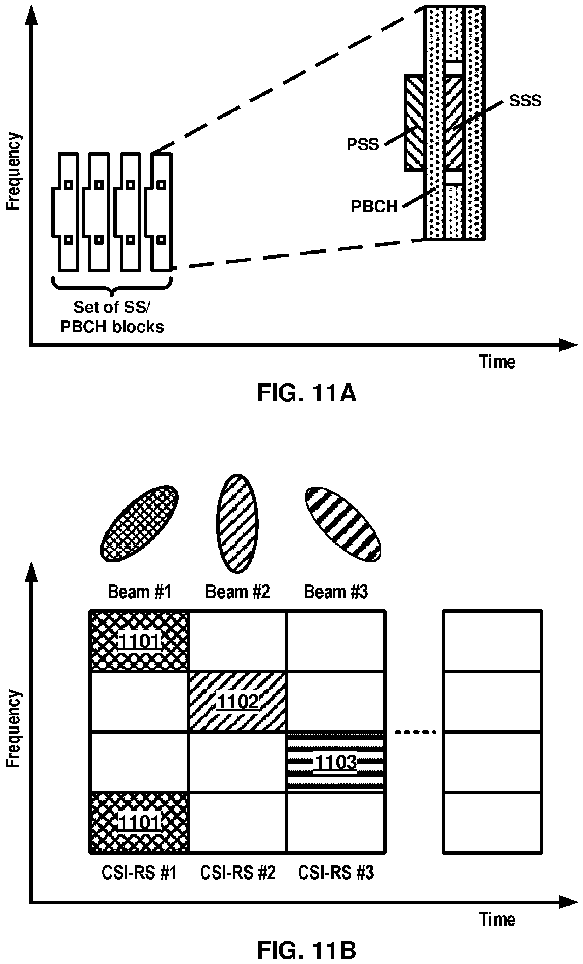

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the S S/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1.The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI.A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

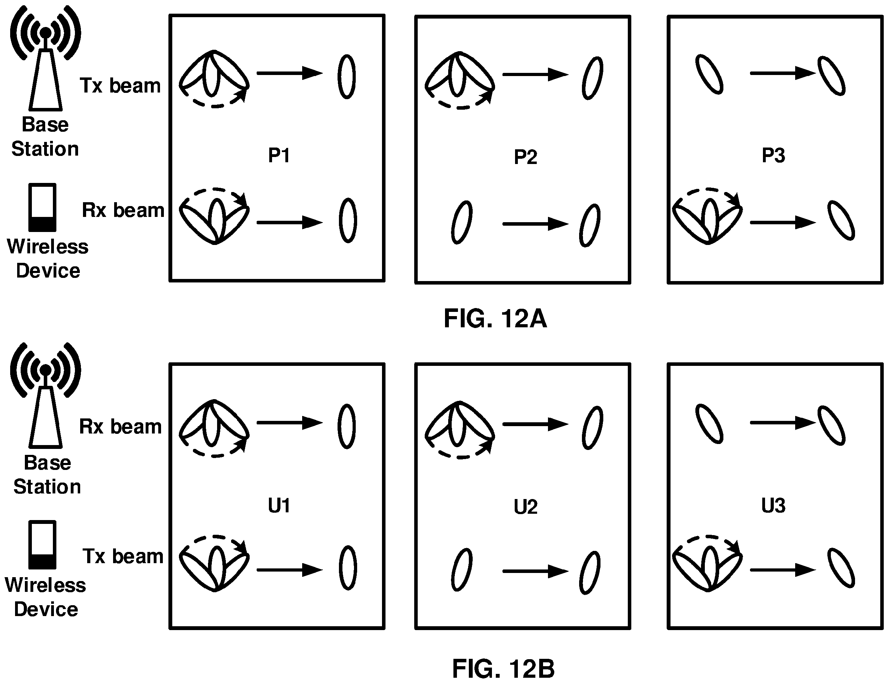

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

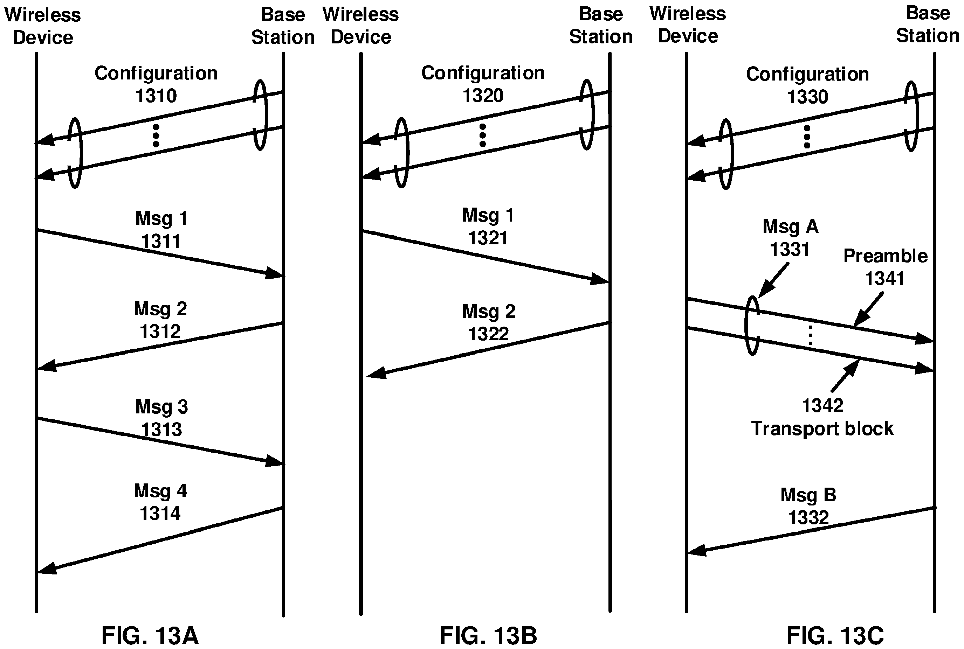

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC CONNECTED) state and/or in an RRC inactive (e.g., an RRC INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

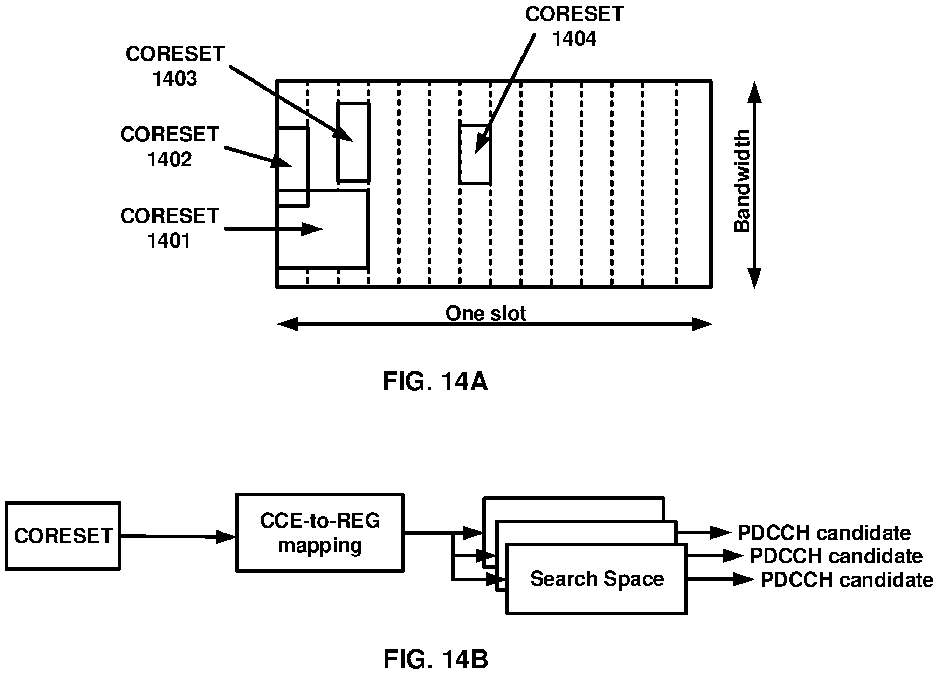

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to abase station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

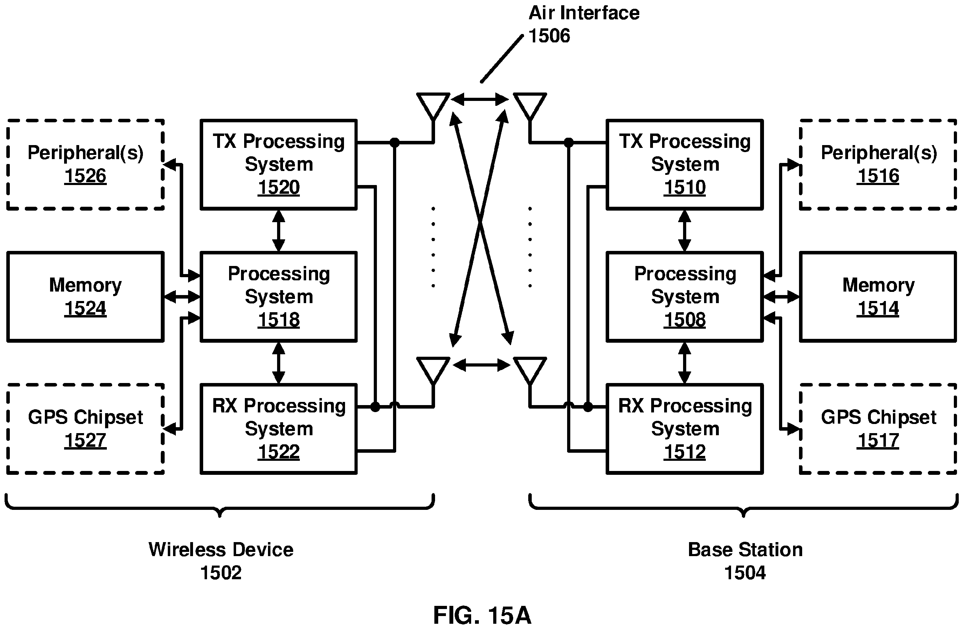

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

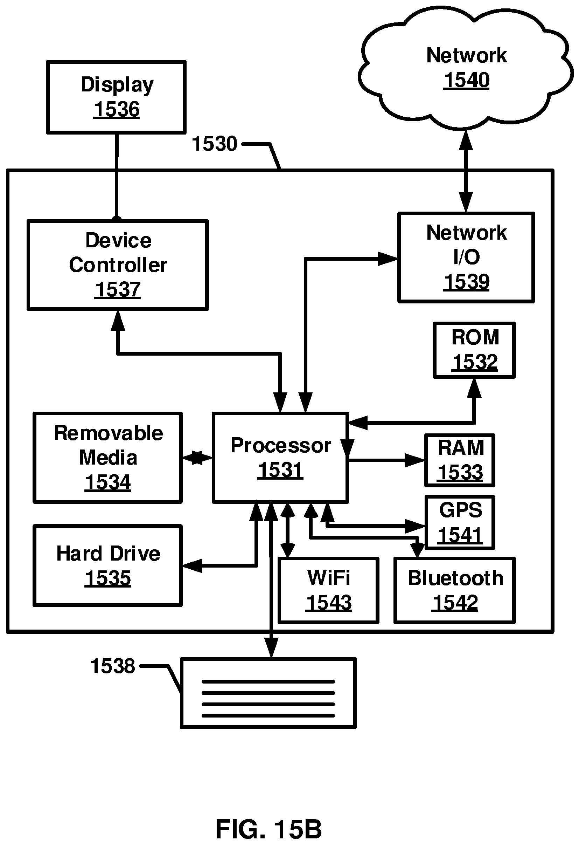

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

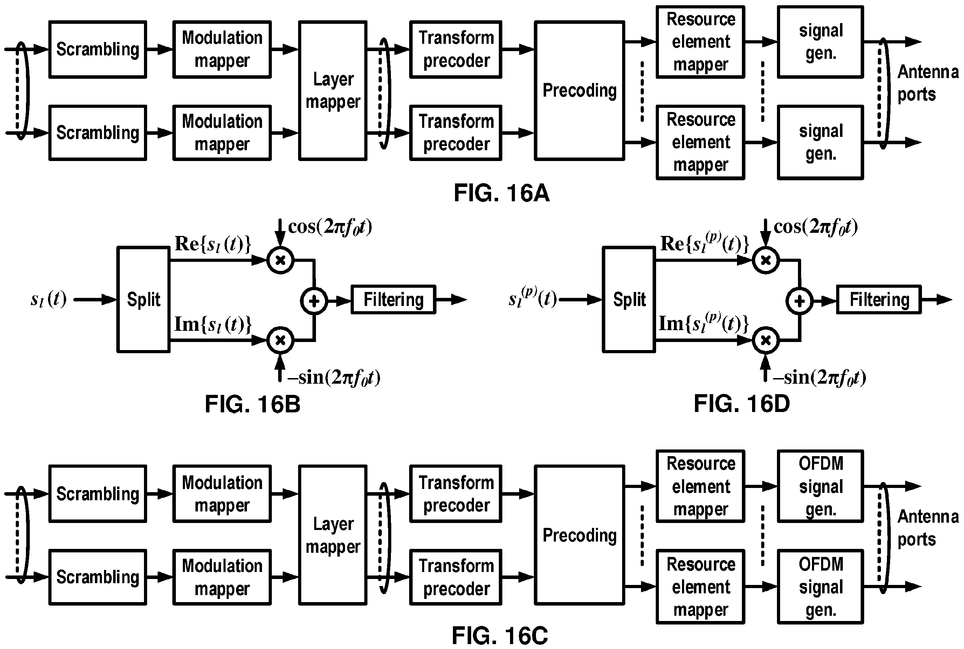

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may receive, from a base station, one or more messages (e.g., RRC messages, or RRC reconfiguration messages). The one or more messages may comprise one or more configuration parameters for a set of cells (e.g., a plurality of cells). The one or more configuration parameters may indicate a plurality of TCI states for the set of cells, wherein the plurality of TCI states comprises one or more TCI states for the cell.

The wireless device may receive an activation command (e.g., DCI, MAC-CE) indicating activation of a subset of TCI states of the plurality of TCI states. The wireless device may map the subset of TCI states to one or more TCI codepoints of the cell. The base station may change/update (e.g., dynamically) a number (e.g., quantity) of the one or more TCI codepoints via the activation command and/or one or more other activation commands (e.g., via/by each activation command). For example, if the wireless device is close to a base station and/or a TRP, the number of the one or more TCI codepoints may be (e.g., may be set as) low (e.g., 1 TCI codepoint, 2 TCI codepoints, etc.). If the wireless device is close to a cell edge (e.g., far from a corresponding base station and/or a corresponding TRP), the number of the one or more TCI codepoints may be (e.g., may be set as) high (e.g., 6 TCI codepoints, 7 TCI codepoints, 8 TCI codepoints, etc.).

The one or more configuration parameters may indicate, for the set of cells, a TCI state table and/or a TCI codepoint table. The TCI state table and/or TCI codepoint table may indicate one or more combinations of TCI codepoints and/or combinations of TCI states for the set of cells. For example, a (e.g., each) row of the TCI state table may indicate/comprise TCI codepoints for the set of cells. Different (e.g., each of the) columns of the TCI state table may indicate/comprise TCI codepoints for a respective cell of the set of cells. The TCI state table may indicate/comprise at least one TCI codepoint for each cell. A column of the TCI state table may indicate/comprise the at least one TCI codepoint for the cell.

The wireless device may receive a DCI scheduling downlink reception(s) and/or uplink transmission(s) via one or more cells (e.g., one or more co-scheduled cells) comprising a cell corresponding to a column of the TCI state table. The DCI may indicate a row in the TCI state table. The row may comprise/indicate a TCI codepoint for the cell.

In at least some wireless communication technologies, one or more TCI codepoints, for a cell, indicated/updated/activated based on (e.g., via, by) an activation command (e.g., DCI, MAC-CE) for the cell may not comprise the TCI codepoint, of the cell, in the TCI state table indicated by the one or more configuration parameters (e.g., RRC configuration parameters). For example, the one or more TCI codepoints may not comprise the TCI codepoint if the maximum TCI codepoint of the one or more TCI codepoints is less than the TCI codepoint, of the cell and in the TCI state table, indicated by the one or more configuration parameters. The wireless device may not (e.g., be able to) determine an accurate transmission power for an uplink transmission via the cell, for example, based on the one or more TCI codepoints not comprising the TCI codepoint (e.g., if/because of the one or more TCI codepoints not comprising the TCI codepoint). This may increase interference for other wireless devices and/or other cells. The wireless device may not (e.g., accurately) determine a spatial domain transmission/transmit filter/beam for an uplink transmission via the cell, for example, based on the one or more TCI codepoints not comprising the TCI codepoint. The DCI may schedule, for example, the uplink transmission via the cell. The wireless device may not determine and/or may not accurately determine a spatial domain reception/receive filter/beam for a downlink reception via the cell, for example, based on the one or more TCI codepoints not comprising the TCI codepoint (e.g., if/because of the one or more TCI codepoints not comprising the TCI codepoint). The DCI may schedule, for example, the downlink reception via the cell. This may increase error rates, which may lead to reduced data rates, and/or increase retransmissions, which may lead to increased battery consumption and/or latency.

As described herein, uplink transmission and/or downlink reception via the cell may be enhanced if (e.g., in an example where) the one or more TCI codepoints of the cell do not comprise the TCI codepoint, of the cell, in the TCI state table. If the one or more TCI codepoints of the cell do not comprise the TCI codepoint, of the cell, in the TCI state table, the wireless device may use (e.g., apply) a default TCI state. For example, if the one or more TCI codepoints of the cell do not comprise the TCI codepoint, of the cell, in the TCI state table, the wireless device may apply a TCI state, among the subset of TCI states, with a lowest TCI state index to uplink/downlink transmission/reception via the cell (e.g., the TCI state with the lowest TCI state index as the default TCI state). If the one or more TCI codepoints of the cell do not comprise the TCI codepoint, of the cell, in the TCI state table, the wireless device may use (e.g., apply) a TCI state indicated by (and/or mapped to) a lowest TCI codepoint among the one or more TCI codepoints to uplink/downlink transmission/reception via the cell (e.g., the TCI state indicated by the lowest TCI codepoint as the default TCI state). If the one or more TCI codepoints of the cell do not comprise the TCI codepoint, of the cell, in the TCI state table, the wireless device may apply, to uplink/downlink transmission/reception via the cell, a TCI state indicated by (and/or mapped to) a first TCI codepoint among activated TCI codepoints, of the cell, in the TCI state table (e.g., the TCI state indicated by the first TCI codepoint as the default TCI state). The first TCI codepoint may occur in the lowest row among at least one row of the activated TCI codepoints. The one or more TCI codepoints may comprise the activated TCI codepoints.

Also, or alternatively, the wireless device may discard/ignore the uplink/downlink transmission/reception via the cell if the one or more TCI codepoints of the cell do not comprise the TCI codepoint, of the cell, in the TCI state table. Also, or alternatively, the base station may make sure that the maximum TCI codepoint of the one or more TCI codepoints activated by the activation command is equal to or larger than each TCI codepoint of the at least one TCI codepoint in the column associated with the cell.

Coordinating the one or more TCI codepoints of/for the cell with the TCI codepoint, of/for the cell, in the TCI state table, as described herein, may reduce interference with other wireless devices and/or other cells, reduce error rates, which may lead to/allow for increased data rates, and/or reduce retransmissions, which may lead to/allow for reduced battery consumption and/or latency.

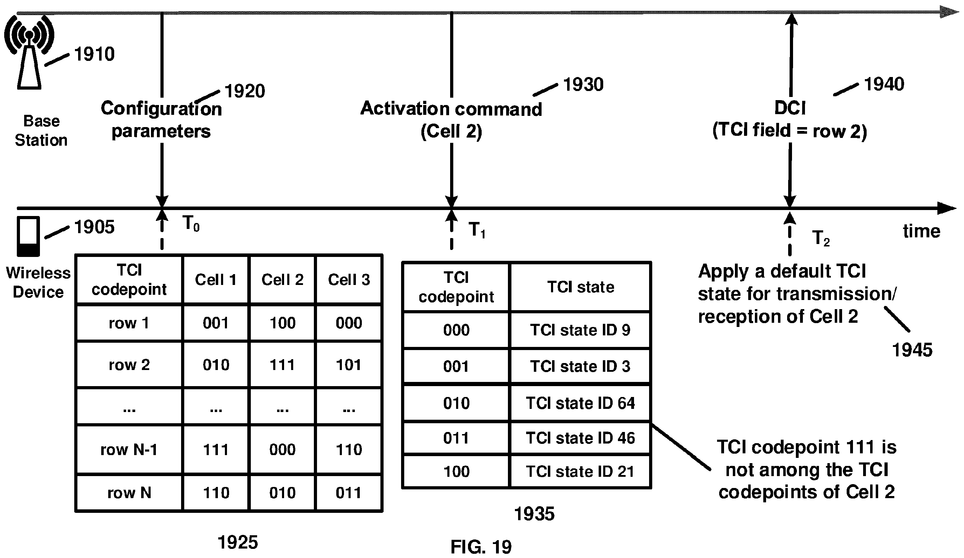

The one or more configuration parameters may indicate at least two cells of the set of cells in a simultaneous TCI update cell list. The one or more configuration parameters may indicate, for the at least two cells of the set of cells, the simultaneous TCI update cell list. The wireless device may receive a DCI scheduling the at least two cells (e.g., a row in the first table in FIG. 19 may comprise/indicate the at least two cells, such as at least one of Cell 1, Cell 2 and/or Cell 3 in FIG. 19).

In at least some wireless communication technologies, the one or more configuration parameters may indicate different TCI codepoints, in a row of the TCI state table, for the at least two cells. If the DCI scheduling the at least two cells indicates the row with different TCI codepoints, the wireless device may not know which TCI codepoint to apply for each of the at least two cells. This may result in beam misalignment between the base station and the wireless device resulting in increased error rates or reduced data rate.

Wireless communication technologies described herein may enhance configuration of the TCI state table if at least two cells of the set of cells are in a simultaneous TCI update ell list. The one or more configuration parameters may indicate the same TCI codepoint, in a row of the TCI state table, for the at least two cells, for example. The one or more configuration parameters may indicate the same TCI codepoint, in each row of the TCI state table, for the at least two cells, for example. This may result in beam alignment between the base station and the wireless device, which may result in reduced error rates and/or increased data rate.

In at least some wireless technologies, the one or more configuration parameters may indicate, for a first cell, a default enabling parameter (e.g., *enableDefaultBeamForMultiCellScheduling, enableDefaultBeamForMCS, enable-DefaultBeamForCCS*). The one or more configuration parameters may or may not comprise/indicate, for a first coreset scheduling the first cell, a TCI-present-in-DCI field. The one or more configuration parameters may or may not comprise/indicate, for the first coreset scheduling the first cell, the TCI-present-in-DCI field, for example, based on the one or more configuration parameters indicating, for the first cell, the default enabling parameter. The one or more configuration parameters may not indicate, for a second cell, a default enabling parameter (e.g., *enableDefaultBeamForMultiCellScheduling, enableDefaultBeamForMCS, enableDefaultBeamForCCS*). The one or more configuration parameters may comprise/indicate, for a second coreset scheduling the second cell, a TCI-present-in-DCI field. The one or more configuration parameters may comprise/indicate, for the second coreset scheduling the second cell, the TCI-present-in-DCI field, for example, based on the one or more configuration parameters not indicating, for the second cell, the default enabling parameter. The at least some wireless communication technologies may not be efficient if a coreset schedules both the first cell with the default enabling parameter and the second cell without the default enabling parameter.

As described herein, the one or more configuration parameters may comprise/indicate, for the coreset scheduling both the first cell and the second cell, a TCI-present-in-DCI field. The one or more configuration parameters may comprise/indicate, for the coreset scheduling both the first cell and the second cell, the TCI-present-in-DCI field, for example, based on the one or more configuration parameters not indicating, for at least one cell among the first cell and the second cell, the default enabling parameter.

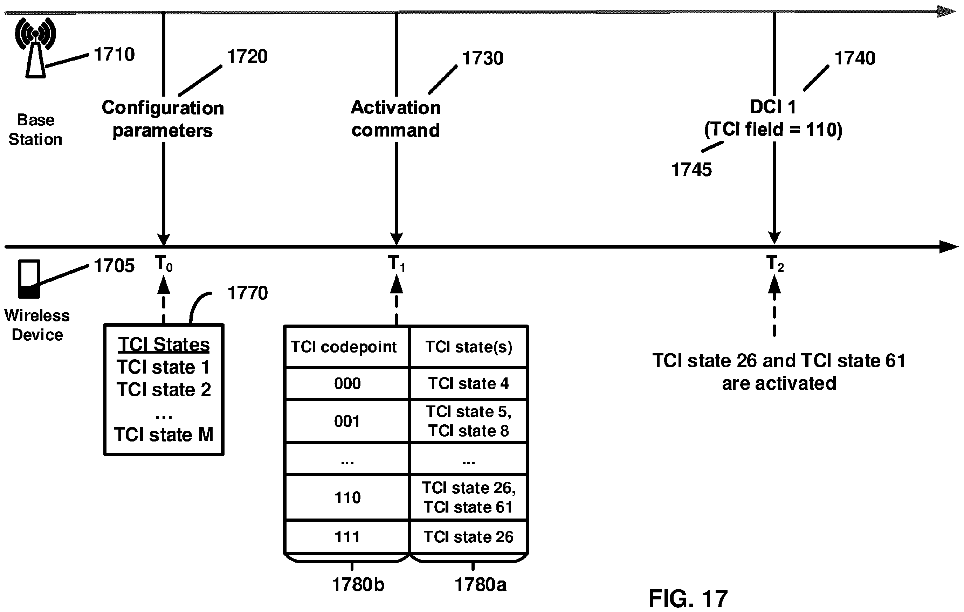

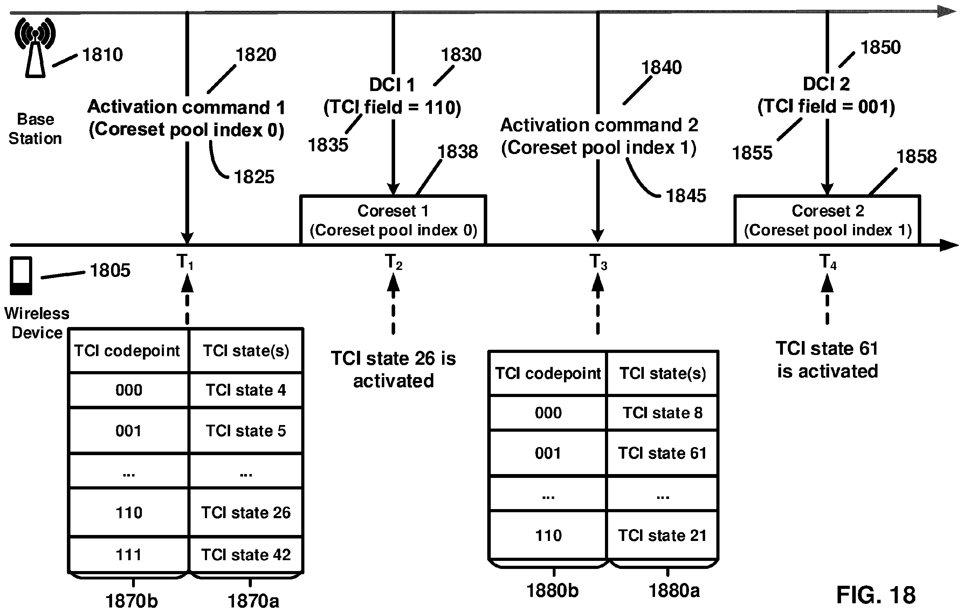

FIG. 17 and FIG. 18 show examples of TCI state activation. A wireless device may receive one or more messages. FIG. 17 shows an example of TCI state activation. The wireless device 1705 may receive the one or more messages from a base station 1710. The wireless device 1705 may receive the one or more messages from a relay node. The wireless device 1705 may receive the one or more messages from another wireless device (e.g., TRP, vehicle, remote radio head, etc.). The one or more messages may comprise one or more configuration parameters 1720 (e.g., Configuration parameters at time $T_0$ as described herein in FIG. 17).

The one or more configuration parameters 1720 may be RRC configuration parameters. The one or more configuration parameters may be one or more RRC reconfiguration parameters (e.g., *RRCReconfiguration, reconfigurationWithSync*). The one or more messages may be one or more RRC messages. The one or more messages may be one or more RRC reconfiguration messages (e.g., *RRCReconfiguration, reconfigurationWithSync*).

The one or more configuration parameters 1720 may be RRC reconfiguration parameters. The one or more configuration parameters 1720 may be for a set of cells. The set of cells may comprise a cell. The cell may be, for example, a serving cell. At least one configuration parameter of the one or more configuration parameters 1720 may be for the cell. The cell may be a primary cell (PCell). The cell may be a primary secondary cell (PSCell). The cell may be a secondary cell (SCell). The cell may be a secondary cell configured with PUCCH (e.g., PUCCH SCell). The set of cells may be (and/or may be interchangeably used with) a plurality of cells. The cell may be a special Cell (SpCell). For dual connectivity (DC) operation, the SpCell may refer to (or indicate) the PCell of the MCG or the PSCell of the SCG. The SpCell may refer to (or indicate) the PCell. The cell may be a primary SCG cell (PSCell). For dual connectivity operation, the wireless device may, for example, perform a random-access procedure via the PSCell if performing the Reconfiguration with Sync procedure.

The cell may be an unlicensed cell (e.g., operating in an unlicensed band). The cell may be a licensed cell (e.g., operating in a licensed band). The cell may operate in a first frequency range (FR1). The FR1 may, for example, comprise frequency bands below 6 GHz. The cell may operate in a second frequency range (FR2). The FR2 may, for example, comprise frequency bands from 24 GHz to 52.6 GHz. The cell may operate in a third frequency range (FR3). The FR3 may, for example, comprise frequency bands from 52.6 GHz to 71 GHz. The FR3 may, for example, comprise frequency bands starting from 52.6 GHz.

A wireless device 1705 may perform uplink transmissions (e.g., PUSCH, PUCCH, PUCCH) via and/or of the cell in a first time and/or in a first frequency. The wireless device 1705 may perform downlink receptions (e.g., PDCCH, PDSCH) via and/or of the cell in a second time and/or in a second frequency. The cell may operate in a time-division duplex (TDD) mode. In the TDD mode, the first frequency and the second frequency may be the same. In the TDD mode, the first time and the second time may be different. The cell may operate in a frequency-division duplex (FDD) mode. In the FDD mode, the first frequency and the second frequency may be different. In the FDD mode, the first time and the second time may be the same. The wireless device 1705 may be in an RRC connected mode. The wireless device 1705 may be in an RRC idle mode. The wireless device 1705 may be in an RRC inactive mode.

A cell may comprise a plurality of BWPs. The plurality of BWPs may comprise one or more uplink BWPs comprising an uplink BWP (UL BWP) of the cell. The plurality of BWPs may comprise one or more downlink BWPs comprising a downlink BWP of the cell. The BWP of the plurality of BWPs may be in one of an active state and an inactive state (or a deactivated state). In the active state of a downlink BWP of the one or more downlink BWPs, for example, a wireless device 1705 may monitor a downlink channel and/or signal (e.g., PDCCH, DCI, CSI-RS, PDSCH) on, for, and/or via the downlink BWP. in the active state of a downlink BWP of the one or more downlink BWPs, the wireless device 1705 may receive a PDSCH on, for, and/or via the downlink BWP. In the inactive state of a downlink BWP of the one or more downlink BWPs, the wireless device 1705 may not monitor a downlink channel and/or signal (e.g., PDCCH, DCI, CSI-RS, PDSCH) on, for, and/or via the downlink BWP. In the inactive state of a downlink BWP of the one or more downlink BWPs, the wireless device may stop monitoring and/or receiving a downlink channel and/or signal (e.g., PDCCH, DCI, CSI-RS, PDSCH) on, for, and/or via the downlink BWP. In the inactive state of a downlink BWP of the one or more downlink BWPs, the wireless device 1705 may not receive a PDSCH on, for, and/or via the downlink BWP. In the inactive state of a downlink BWP of the one or more downlink BWPs, the wireless device 1705 may stop receiving a PDSCH on, for, and/or via the downlink BWP.

In an active state of an uplink BWP of one or more uplink BWPs, a wireless device 1705 may send (e.g., transmit) an uplink channel and/or signal (e.g., PUCCH, preamble, PUSCH, PRACH, PUCCH, etc.) on and/or via the uplink BWP. in the inactive state of an uplink BWP of the one or more uplink BWPs, the wireless device may not send (e.g., transmit) an uplink channel and/or signal (e.g., PUCCH, preamble, PUSCH, PRACH, PUCCH, etc.) on and/or via the uplink BWP.

A wireless device 1705 may activate a downlink BWP of one or more downlink BWPs of a cell. The activating the downlink BWP may comprise setting and/or switching to the downlink BWP as an active downlink BWP of the cell. The activating the downlink BWP may comprise setting the downlink BWP in the active state. The activating the downlink BWP may comprise switching the downlink BWP from the inactive state to the active state.

A wireless device 1705 may activate an uplink BWP of one or more uplink BWPs of a cell. The activating the uplink BWP may comprise the wireless device 1705 setting and/or switching to the uplink BWP as an active uplink BWP of the cell. The activating the uplink BWP may comprise setting the uplink BWP in the active state. The activating the uplink BWP may comprise switching the uplink BWP from the inactive state to the active state.

One or more configuration parameters may be for a downlink BWP (e.g., an active downlink BWP) of the cell. At least one configuration parameter of the one or more configuration parameters may be for the downlink BWP of the cell. The one or more configuration parameters may indicate a subcarrier spacing and/or a numerology for the downlink BWP.

One or more configuration parameters may be for a uplink BWP (e.g., an active uplink BWP) of a cell. At least one configuration parameter of the one or more configuration parameters may be for the uplink BWP of the cell. The one or more configuration parameters may indicate a subcarrier spacing and/or a numerology for the uplink BWP.

A value of the subcarrier spacing, of the downlink BWP and/or the uplink BWP, may be and/or indicate, for example, 15 kHz (mu = 0). A value of the subcarrier spacing may be and/or indicate, for example, 30 kHz (mu = 1). A value of the subcarrier spacing may be and/or indicate, for example, 60 kHz (mu = 2). A value of the subcarrier spacing may be and/or indicate, for example, 120 kHz (mu = 3). A value of the subcarrier spacing may be and/or indicate, for example, 240 kHz (mu = 4). A value of the subcarrier spacing may be and/or indicate, for example, 480 kHz (mu = 5). A value of the subcarrier spacing may be and/or indicate, for example, 960 kHz (mu = 6). 480 kHz may be valid and/or applicable in FR3. 960 kHz may be valid and/or applicable in FR3. 240 kHz may be valid and/or applicable in FR3. 120 kHz may be valid and/or applicable in FR3.

One or more configuration parameters may indicate a plurality of control resource sets (coresets). The one or more configuration parameters may indicate the plurality of coresets for a downlink BWP (e.g., an active downlink BWP) of a cell. The downlink BWP (e.g., the active downlink BWP) may comprise the plurality of coresets. The one or more configuration parameters may indicate a plurality of coreset indexes, identifiers, and/or indicators (e.g., provided by a higher layer parameter ControlResourceSetId) for the plurality of coresets. Each coreset of the plurality of coresets may be identified and/or indicated by a respective coreset index of the plurality of coreset indexes. A first coreset of the plurality of coresets may be identified by a first coreset index of the plurality of coreset indexes. A second coreset 1858 of the plurality of coresets may be identified by a second coreset index of the plurality of coreset indexes.

One or more configuration parameters 1720 may indicate one or more coreset pool indexes (e.g., provided by a higher layer parameter CoresetPoolIndex) for a plurality of coresets. Each coreset of the plurality of coresets may be configured by, be indicated by, and/or comprise the one or more configuration parameters by a respective coreset pool index of the one or more coreset pool indexes (e.g., 0, 1, etc.). The one or more configuration parameters 1720 may indicate, for each coreset of the plurality of coresets, a respective coreset pool index of the one or more coreset pool indexes. The one or more configuration parameters 1720 may indicate, for a first coreset of the plurality of coresets, for example, a first coreset pool index 1825 (CoresetPoolIndex = 0). The one or more configuration parameters may indicate, for a second coreset of the plurality of coresets, a second coreset pool index 1845 (CoresetPoolIndex = 1). The one or more coreset pool indexes may comprise the first coreset pool index 1825 and the second coreset pool index 1845.

Also, or alternatively, one or more configuration parameters 1720 may not indicate, for a coreset of the plurality of coresets, a coreset pool index. A higher layer parameter CoresetPoolIndex may be absent in configuration parameters of the coreset. A 1805 wireless device may determine a value (e.g., a default value) of a coreset pool index of the coreset as a first coreset pool index 1825 (CoresetPoolIndex = 0). The first coreset pool index 1825 (CoresetPoolIndex = 0) may be the coreset pool index of the coreset, for example, based on the one or more configuration parameters not indicating, for the coreset, a coreset pool index. The wireless device 1805 may determine the value (e.g., the default value) of the coreset pool index of the coreset as the first coreset pool index 1825, for example, based on the one or more configuration parameters not indicating, for the coreset, a coreset pool index.

A first coreset pool (e.g., Coreset pool 0) may comprise one or more first coresets with a coreset pool index that may be equal to a first coreset pool index 1825 (e.g., CoresetPoolIndex = 0). One or more configuration parameters 1720 may indicate the first coreset pool index 1825 for each coreset of the one or more first coresets in the first coreset pool. The plurality of coresets may comprise the one or more first coresets.

A second coreset pool (e.g., Coreset pool 1) may comprise one or more second coresets with a coreset pool index that is equal to a second coreset pool index 1845 (e.g., CoresetPoolIndex = 1). One or more configuration parameters 1720 may indicate the second coreset pool index 1845 for each coreset of the one or more second coresets in the second coreset pool. The plurality of coresets may comprise the one or more second coresets.

One or more configuration parameters 1820 may not indicate a coreset pool index for a coreset of the plurality of coresets. A wireless device 1805 may determine a default value for the coreset pool index of the coreset, for example, based on the one or more configuration 1820 parameters not indicating the coreset pool index for the coreset. The default value may be equal to zero (e.g., CoresetPoolIndex = 0). The default value may be equal to the first coreset pool index 1825 (e.g., zero). The first coreset pool may comprise the coreset, for example, based on the one or more configuration parameters not indicating, for the coreset, the coreset pool index. The first coreset pool may comprise the coreset based on the default value of the coreset pool index of the coreset being equal to the first coreset pool index 1825.

A first coreset pool index 1825 of a first coreset and a second coreset pool index 1845 of a second coreset 1858 may be the same. One more configuration parameters may indicate the same coreset pool index for the first coreset and the second coreset 1858. A plurality of coresets may comprise the first coreset and the second coreset 1858. One or more coreset pool indexes may comprise the first coreset pool index 1825 and the second coreset pool index 1845. A wireless device 1805 may group the first coreset and the second coreset 1858 in a same coreset pool (e.g., Coreset-PoolIndex = 0 or CoresetPoolIndex = 1), for example, based on the first coreset pool index 1825 of the first coreset and the second coreset pool index 1840 of the second coreset 1858 being the same. A first coreset pool comprising the first coreset and a second coreset pool comprising the second coreset 1858 may be the same, for example, based on the first coreset pool index 1825 of the first coreset and the second coreset pool index 1840 of the second coreset 1858 being the same.

A first coreset pool index 1825 of a first coreset and a second coreset pool index 1840 of a second coreset 1858 may be different. A plurality of coresets may comprise the first coreset and the second coreset 1858. One or more coreset pool indexes may comprise the first coreset pool index 1825 and the second coreset pool index 1840. A wireless device 1805 may group the first coreset and the second coreset 1858 in different coreset pools, for example, based on the first coreset pool index 1825 of the first coreset and the second coreset pool index 1840 of the second coreset 1858 being different. The wireless device 1805 may group the first coreset in a first coreset pool (e.g., CoresetPoolIndex = 0). The wireless device 1805 may group the second coreset 1858 in a second coreset pool (e.g., CoresetPoolIndex = 1) that is different from the first coreset pool, for example, based on the first coreset pool index 1825 and the second coreset pool index 1840 being different. The first coreset pool and the second coreset pool may be different, for example, based on the first coreset pool index 1825 of the first coreset and the second coreset pool index 1840 of the second coreset 1858 being different.

One or more configuration parameters 1820 may indicate at least two coreset pool indexes (e.g., 0 and 1) for a higher layer parameter CORESETPoolIndex. The one or more configuration parameters 1820 may comprise the higher layer parameter CORESETPoolIndex with and/or set to the at least two coreset pool indexes. The at least two coreset pool indexes may comprise a first coreset pool index 1825 (e.g., 0) for one or more first coresets of a plurality of coresets. The at least two coreset pool indexes may comprise a second coreset pool index 1840 (e.g., 1), different from the first coreset pool index 1825 for one or more second coresets of the plurality of coresets. The one or more first coresets may comprise one or more third coresets, of the plurality of coresets, without a value for a higher layer parameter CORESETPoolIndex. The one or more configuration parameters 1820 may not comprise the higher layer parameter CORESETPoolIndex for the one or more third coresets.

A cell may comprise a plurality of transmission and reception points (TRPs). The plurality of TRPs may serve the cell and/or a wireless device 1805 in, via, and/or of the cell. At least one TRP of the plurality of TRPs may serve the cell and/or the wireless device in, via, and/or of the cell. The plurality of TRPs may comprise a first TRP and a second TRP. The first TRP may send (e.g., transmit) a downlink transmission and/or signal (e.g., PDSCH, PDCCH, DCI) via a first coreset pool. Transmitting the downlink transmission and/or signal (e.g., PDCCH, DCI) via the first coreset pool may comprise the first TRP transmitting the downlink transmission and/or signal via a first coreset having and/or being associated with the first coreset pool index. The first TRP may not send (e.g., transmit) a downlink transmission and/or signal (e.g., PDSCH, PDCCH, DCI) via a second coreset pool. Not transmitting the downlink transmission and/or signal (e.g., PDSCH, PDCCH, DCI) via the second coreset pool may comprise the first TRP does not sending (e.g., transmitting) the downlink transmission and/or signal via a second coreset 1858 having and/or being associated with the second coreset pool index.

A second TRP may send (e.g., transmit) a downlink transmission and/or signal (e.g., PDSCH, PDCCH, DCI) via a second coreset pool. Transmitting the downlink transmission and/or signal (e.g., PDCCH, DCI) via the second coreset pool may comprise the second TRP sending (e.g., transmitting) the downlink transmission and/or signal via a second coreset 1858 having and/or being associated with the second coreset pool index. The second TRP may not send (e.g., transmit) a downlink transmission and/or signal (e.g., PDCCH, DCI) via the first coreset pool. Not transmitting the downlink transmission and/or signal (e.g., PDCCH, DCI) via the first coreset pool may comprise the second TRP does not sending (e.g., transmitting) the downlink transmission and/or signal via a first coreset having and/or being associated with the first coreset pool index.

One or more configuration parameters may indicate a plurality of uplink resources (e.g., PUCCH-Resource, SRS-Resource, etc.). The one or more configuration parameters may indicate the plurality of uplink resources for the uplink BWP (e.g., an active uplink BWP) of a cell. The uplink BWP (e.g., an active uplink BWP) may comprise the plurality of uplink resources. The uplink BWP (e.g., an active uplink BWP) of an uplink carrier (e.g., NUL, SUL) of the cell may comprise the plurality of uplink resources. A plurality of uplink resources may comprise, for example, a plurality of PUCCH resources. The plurality of uplink resources may comprise, for example, a plurality of SRS resources. The plurality of uplink resources may comprise, for example, a plurality of PUSCH resources.

One or more configuration parameters may indicate one or more uplink resource sets and/or groups (e.g., PUCCH-ResourceGroup, SRS-ResourceSet). The one or more uplink resource sets and/or groups may comprise a plurality of uplink resources. Each uplink resource set and/or group of the one or more uplink resource sets and/or groups may comprise respective uplink resources of the plurality of uplink resources. a first uplink resource set and/or group of the one or more uplink resource sets and/or groups may comprise one or more first uplink resources of the plurality of uplink resources. A second uplink resource set and/or group of the one or more uplink resource sets and/or groups may comprise one or more second uplink resources of the plurality of uplink resources. The first uplink resource set and/or group and the second uplink resource set and/or group may not comprise (e.g., share) a common (e.g., shared, same, etc.) uplink resource of the plurality of uplink resources. A first uplink resource that may be in the first uplink resource set and/or group may not be in the second uplink resource set and/or group.

One or more configuration parameters may indicate a plurality of uplink resource indexes, identifiers, and/or indicators (e.g., provided by a higher layer parameter PUCCH-ResourceId, SRS-ResourceId) for a plurality of uplink resources. Each uplink resource of the plurality of uplink resources may be identified and/or indicated by a respective uplink resource index of the plurality of uplink resource indexes. A first uplink resource of the plurality of uplink resources may be identified by a first uplink resource index of the plurality of uplink resource indexes. A second uplink resource of the plurality of uplink resources may be identified by a second uplink resource index of the plurality of uplink resource indexes.

One or more configuration parameters may indicate one or more uplink resource set and/or group indexes, identifiers, and/or indicators (e.g., provided by a higher layer parameter PUCCH-ResourceGroupId, SRS-ResourceSetId) for one or more uplink resource sets and/or groups. Each uplink resource set and/or group of the one or more uplink resource sets and/or groups may be identified and/or indicated by a respective uplink resource set and/or group index of the one or more uplink resource set and/or group indexes. A first uplink resource set and/or group of the one or more uplink resource sets and/or groups may be identified by a first uplink resource set and/or group index of the one or more uplink resource set and/or group indexes. A second uplink resource set and/or group of the one or more uplink resource sets and/or groups may be identified by a second uplink resource set and/or group index of the one or more uplink resource set and/or group indexes.

One or more configuration parameters may indicate one or more coreset pool indexes (e.g., provided by a higher layer parameter CoresetPoolIndex) for a plurality of uplink resources. Each uplink resource of the plurality of uplink resources may comprise, be configured by, and/or be indicated by the one or more configuration parameters by a respective coreset pool index of the one or more coreset pool indexes (e.g., 0, 1). The one or more configuration parameters may indicate, for each uplink resource of the plurality of uplink resources, a respective coreset pool index of the one or more coreset pool indexes. The one or more configuration parameters may indicate, for a first uplink resource of the plurality of uplink resources, for example, a first coreset pool index (CoresetPoolIndex = 0). The one or more configuration parameters may indicate, for a second uplink resource of the plurality of uplink resources, for example, a second coreset pool index (CoresetPoolIndex = 1). The one or more coreset pool indexes may comprise the first coreset pool index and the second coreset pool index.

One or more configuration parameters may not indicate, for an uplink resource of the plurality of uplink resources, a coreset pool index. A higher layer parameter CoresetPoolIndex may be absent in configuration parameters of the uplink resource. A wireless device 1805 may determine a value (e.g., a default value) of a coreset pool index of the uplink resource as the first coreset pool index (CoresetPoolIndex = 0). The wireless device may determine the value (e.g., the default value) of the coreset pool index of the uplink resource as the first coreset pool index, for example, based on the one or more configuration parameters not indicating, for the uplink resource, a coreset pool index. The first coreset pool index (CoresetPoolIndex = 0) may be the coreset pool index of the uplink resource, for example, based on the one or more configuration parameters not indicating, for the uplink resource, a coreset pool index.

One or more configuration parameters may indicate at least two coreset pool indexes (e.g., 0 and 1) for a higher layer parameter CORESETPoolIndex. The one or more configuration parameters may comprise the higher layer parameter CORESETPoolIndex with and/or set to the at least two coreset pool indexes. The at least two coreset pool indexes may comprise a first coreset pool index (e.g., 0) for one or more first uplink resources of the plurality of uplink resources. The at least two coreset pool indexes may comprise a second coreset pool index (e.g., 1), different from the first coreset pool index, for one or more second uplink resources of the plurality of uplink resources. The one or more first uplink resources may comprise one or more third uplink resources, of the plurality of uplink resources, without a value for a higher layer parameter CORESETPoolIndex. The one or more configuration parameters may not comprise the higher layer parameter CORESETPoolIndex for the one or more third uplink resources.

A cell may comprise a plurality of transmission and reception points (TRPs). The plurality of TRPs may serve the cell and/or the wireless device in, via, and/or of the cell. At least one TRP of the plurality of TRPs may serve the cell and/or the wireless device in, via, and/or of the cell. The plurality of TRPs may comprise a first TRP and a second TRP.

A first TRP may receive an uplink transmission and/or signal (e.g., PUSCH, PUCCH, SRS, UCI, PRACH) via a first uplink resource, of the plurality of uplink resources, having and/or being associated with the first coreset pool index. The first TRP may not receive an uplink transmission and/or signal (e.g., PUSCH, PUCCH, SRS, UCI, PRACH) via a second uplink resource, of the plurality of uplink resources, having and/or being associated with the second coreset pool index.

A second TRP may receive an uplink transmission and/or signal (e.g., PUSCH, PUCCH, SRS, UCI, PRACH) via a second uplink resource, of the plurality of uplink resources, having and/or being associated with the second coreset pool index. The second TRP may not receive an uplink transmission and/or signal (e.g., PUSCH, PUCCH, SRS, UCI, PRACH) via a first uplink resource, of the plurality of uplink resources, having and/or being associated with the first coreset pool index.

One or more configuration parameters may indicate one or more coreset pool indexes (e.g., provided by a higher layer parameter CoresetPoolIndex) for one or more uplink resource sets and/or groups. Each uplink resource set and/or group of the one or more uplink resource sets and/or groups may comprise, be configured by, and/or be indicated by the one or more configuration parameters by a respective coreset pool index of the one or more coreset pool indexes (e.g., 0, 1). The one or more configuration parameters may indicate, for each uplink resource set and/or group of the one or more uplink resource sets and/or groups, a respective coreset pool index of the one or more coreset pool indexes. One or more configuration parameters may indicate, for a first uplink resource set and/or group of the one or more uplink resource sets and/or groups, for example, a first coreset pool index 1825 (CoresetPoolIndex = 0). The one or more configuration parameters may indicate, for a second uplink resource set and/or group of the one or more uplink resource sets and/or groups, for example, a second coreset pool index 1845 (CoresetPoolIndex = 1). The one or more coreset pool indexes may comprise the first coreset pool index and the second coreset pool index.

One or more configuration parameters may not indicate, for an uplink resource set and/or group of the one or more uplink resource sets and/or groups, a coreset pool index. A higher layer parameter CoresetPoolIndex may be absent in configuration parameters of the uplink resource set and/or group. A wireless device 1805 may determine a value (e.g., a default value) of a coreset pool index of the uplink resource set and/or group as the first coreset pool index 1825 (CoresetPoolIndex = 0). The wireless device may determine the value (e.g., the default value) of the coreset pool index of the uplink resource set and/or group as the first coreset pool index, for example, based on the one or more configuration parameters not indicating, for the uplink resource set and/or group, a coreset pool index. The first coreset pool index 1825 (CoresetPoolIndex = 0) may be the coreset pool index of the uplink resource set and/or group, for example, based on the one or more configuration parameters not indicating, for the uplink resource set and/or group, a coreset pool index.

One or more configuration parameters may indicate at least two coreset pool indexes (e.g., 0 and 1) for a higher layer parameter CORESETPoolIndex. The one or more configuration parameters may comprise the higher layer parameter CORESETPoolIndex with and/or set to the at least two coreset pool indexes. The at least two coreset pool indexes may comprise a first coreset pool index (e.g., 0) for one or more first uplink resource sets and/or groups of the one or more uplink resource sets and/or groups. The at least two coreset pool indexes may comprise a second coreset pool index (e.g., 1), different from the first coreset pool index, for one or more second uplink resource sets and/or groups of the one or more uplink resource sets and/or groups. The one or more first uplink resource sets and/or groups may comprise one or more third uplink resource sets and/or groups, of the one or more uplink resource sets and/or groups, without a value for a higher layer parameter CORESETPoolIndex. The one or more configuration parameters may not comprise the higher layer parameter CORESETPoolIndex for one or more third uplink resource sets and/or groups.

A cell may comprise a plurality of transmission and reception points (TRPs). The plurality of TRPs may serve the cell and/or a wireless device in/via/of the cell. At least one TRP of the plurality of TRPs may serve the cell and/or the wireless device in, via, and/or of the cell. The plurality of TRPs may comprise a first TRP and a second TRP.

A first TRP may receive an uplink transmission and/or signal (e.g., PUSCH, PUCCH, SRS, UCI, PRACH) via an uplink resource of a first uplink resource set and/or group, of the one or more uplink resource sets and/or groups, having and/or being associated with the first coreset pool index. The first TRP may not receive an uplink transmission and/or signal (e.g., PUSCH, PUCCH, SRS, UCI, PRACH) via an uplink resource in a second uplink resource set and/or group, of the one or more uplink resource sets and/or groups, having and/or being associated with the second coreset pool index.

A second TRP may receive an uplink transmission and/or signal (e.g., PUSCH, PUCCH, SRS, UCI, PRACH) via an uplink resource in a second uplink resource set and/or group, of the one or more uplink resource sets and/or groups, having and/or being associated with the second coreset pool index. The second TRP may not receive an uplink transmission and/or signal (e.g., PUSCH, PUCCH, SRS, UCI, PRACH) via an uplink resource in a first uplink resource set and/or group, of the one or more uplink resource sets and/or groups, having and/or being associated with the first coreset pool index.

A wireless device may send (e.g., transmit), via an uplink resource, an uplink transmission and/or signal (e.g., PUSCH/PUCCH/SRS transmission). A plurality of uplink resources may comprise the uplink resource. An uplink resource set and/or group of the one or more uplink resource sets and/or groups may comprise the uplink resource.

A wireless device 1805 may receive, via a coreset of the plurality of coresets, downlink control information (DCI) 1830 scheduling, triggering, and/or indicating transmission of the uplink transmission and/or signal. The DCI 1830 may schedule, trigger, and/or indicate transmission of the uplink transmission and/or signal via the uplink resource. The DCI may indicate the uplink resource. The DCI may comprise a field indicating the uplink resource.

An uplink transmission and/or signal may be a PUSCH transmission (e.g., transport block). An uplink resource may be a PUSCH resource. DCI 1830 may schedule transmission of the PUSCH transmission. An uplink transmission and/or signal may be a PUCCH transmission (e.g., HARQ-ACK information feedback). The uplink resource may be a PUCCH resource. The DCI 1830 may schedule reception of a transport block (e.g., a PDSCH reception). The uplink transmission and/or signal may be a HARQ-ACK information feedback of the transport block. An uplink transmission and/or signal may be a SRS. The uplink resource may be a SRS resource. The DCI 1830 may schedule transmission of the SRS. The SRS may be, for example, an aperiodic SRS.

A coreset that a wireless device 1805 receives the DCI from may be associated with a coreset pool index. One or more coreset pool indexes may comprise the coreset pool index. The one or more configuration parameters may indicate, for the coreset, the coreset pool index. The one or more configuration parameters may not indicate, for the coreset, the coreset pool index (CoresetPoolIndex = 0 or CoresetPoolIndex = 1). A value (e.g., a default value) of the coreset pool index of the coreset may be equal to the first coreset pool index (CoresetPoolIndex = 0), for example, based on the one or more configuration parameters not indicating, for the coreset, a coreset pool index.

An uplink resource may be associated with the coreset pool index. The uplink resource may be associated with the coreset pool index, for example, based on receiving, via the coreset associated with the coreset pool index, the DCI scheduling, triggering, and/or indicating transmission of the uplink transmission and/or signal via the uplink resource.

An uplink resource set and/or group comprising an uplink resource may be associated with a coreset pool index. The uplink resource set and/or group may be associated with the coreset pool index, for example, based on receiving, via the coreset associated with the coreset pool index, DCI scheduling, triggering, and/or indicating transmission of the uplink transmission and/or signal via the uplink resource in (that belongs to) the uplink resource set and/or group. The uplink resource set and/or group may comprise one or more uplink resources that comprise the uplink resource. The one or more uplink resources may be associated with the coreset pool index, for example, based on the uplink resource set and/or group comprising the one or more uplink resources being associated with the coreset pool index. Each uplink resource of the one or more uplink resources may be associated with the coreset pool index, for example, based on the uplink resource set and/or group being associated with the coreset pool index.

An uplink transmission and/or signal may be associated with a coreset pool index. The uplink transmission and/or signal may be associated with the coreset pool index, for example, based on receiving, via the coreset associated with the coreset pool index, DCI 1830 scheduling, triggering, and/or indicating transmission of the uplink transmission and/or signal.

One or more configuration parameters may indicate a plurality of TCI states 1770. The one or more configuration parameters may indicate a TCI state list (e.g., provided by a higher layer (e.g., RRC) parameter *dl-OrJoint-TCIStateList*) comprising the plurality of TCI states. The one or more configuration parameters 1720 may comprise one or more PDSCH configuration parameters, for example, indicating the plurality of TCI states 1770 (e.g., a plurality of TCI states that are TCI state 1, TCI state 2, ..., and TCI state M, as described herein in FIG. 17). The one or more configuration parameters may indicate, for the plurality of TCI states, a plurality of TCI state indexes/identifiers/identities (e.g., *TCI-StateId*). The one or more configuration parameters may indicate, for each TCI state of the plurality of TCI states, a respective TCI state index of the plurality of TCI state indexes. Each TCI state of the plurality of TCI states 1770 may be indicated/identified by a respective TCI state index of the plurality of TCI state indexes. For example, the one or more configuration parameters may indicate, for a first TCI state of the plurality of TCI states, a first TCI state index of the plurality of TCI state indexes. The one or more configuration parameters may indicate, for a second TCI state of the plurality of TCI states, a second TCI state index of the plurality of TCI state indexes.

One or more configuration parameters 1720 may indicate a plurality of TCI states 1770 that indicate a unified TCI state for a cell. The one or more configuration parameters 1720 may comprise the one or more PDSCH configuration parameters, for example, for the downlink BWP of the cell. The one or more configuration parameters 1720 may indicate the plurality of TCI states 1770 for a downlink BWP of the cell.

One or more configuration parameters 1720 may comprise one or more PDSCH configuration parameters, for example, for a second downlink BWP of a second cell. The one or more configuration 1720 parameters may indicate a plurality of TCI states 1770 for the second downlink BWP of the second cell. The set of cells may comprise the second cell. The one or more configuration parameters may comprise, for the downlink BWP of the cell, a reference unified TCI state list parameter (e.g., *unifiedTCI-StateRef*) indicating the second downlink BWP of the second cell. The reference unified TCI state list parameter may comprise a BWP index (e.g., BWP-Id) identifying (e.g., indicating) the second downlink BWP. The reference unified TCI state list parameter may comprise a cell index (e.g., *ServCellIndex*) identifying (e.g., indicating) the second cell. The second downlink BWP of the second cell may be a reference BWP of a reference cell for the downlink BWP of the cell. The downlink BWP of the cell may be a target BWP of a target cell. The one or more PDSCH configuration parameters of the downlink BWP of the cell may not comprise a higher layer (e.g., RRC) parameter *dl-OrJoint-TCIStateList*, for example, based on the one or more configuration parameters comprising, for the downlink BWP of the cell, the reference unified TCI state list parameter.

One or more configuration parameters 1720 may comprise a unified-TCI-state-type parameter (e.g., unifiedTCI-StateType as described herein in FIG. 17). The one or more configuration parameters may comprise one or more serving cell parameters (e.g., ServingCellConfig) comprising the unified-TCI-state-type parameter. The unified-TCI-state-type parameter may indicate the unified TCI state type of the cell.

A unified-TCI-state-type parameter may be set to "Joint." A wireless device 1805 may use (e.g., apply) the plurality of TCI states 1770 (e.g., provided and/or indicated by *dl-orJoint-TCIStateList*) for both uplink transmissions (e.g., PUSCH/PUCCH/SRS transmissions) of the cell and downlink receptions (e.g., PDCCH/PDSCH/CSI-RS receptions) of the cell, for example, based on the one or more configuration parameters comprising the unified-TCI-state-type parameter set to "Joint."

A unified-TCI-state-type parameter may be set to "Separate." A wireless device 1805 may use (e.g., apply) the plurality of TCI states (e.g., provided and/or indicated by a higher layer parameter *dl-orJoint-TCIStateList*) for downlink receptions (e.g., PDCCH/PDSCH/CSI-RS receptions) of the cell, for example, based on the one or more configuration parameters comprising the unified-TCI-state-type parameter set to "Separate." The wireless device may not use (e.g., apply) the plurality of TCI states for uplink transmissions (e.g., PUSCH/PUCCH/SRS transmissions) of the cell, for example, based on the one or more configuration parameters comprising the unified-TCI-state-type parameter set to "Separate."

One or more configuration parameters 1720 may indicate a second plurality of TCI states 1770. The one or more configuration parameters may indicate an uplink TCI state list (e.g., provided and/or indicated by a higher layer parameter *ul-TCIStateList*) comprising the second plurality of TCI states. The one or more configuration parameters 1720 may comprise one or more uplink BWP configuration parameters, for example, indicating the second plurality of TCI states 1770 (e.g., a second plurality of TCI states may be TCI state 1, TCI state 2,..., and TCI state M as described herein in FIG. 17).

One or more configuration parameters 1720 may comprise one or more uplink BWP configuration parameters, for example, for an uplink BWP of a cell. The one or more configuration parameters 1720 may indicate a second plurality of TCI states 1770 for the uplink BWP of the cell.

One or more configuration parameters 1720 may comprise one or more uplink BWP configuration parameters, for example, for a second uplink BWP of a second cell. The one or more configuration parameters 1720 may indicate a second plurality of TCI states 1770 for the second uplink BWP of the second cell. The set of cells may comprise the second cell. The one or more configuration parameters 1720 may comprise, for the uplink BWP of the cell, a reference unified TCI state list parameter (e.g., unifiedtci-StateType) indicating the second uplink BWP of the second cell. The reference unified TCI state list parameter may comprise a BWP index (e.g., BWP-Id) identifying (e.g., indicating) the second uplink BWP. The reference unified TCI state list parameter may comprise a cell index (e.g., ServCellIndex) identifying (e.g., indicating) the second cell. The second uplink BWP of the second cell may be a reference BWP of a reference cell for the uplink BWP of the cell. The uplink BWP of the cell may be a target BWP of a target cell. The one or more uplink BWP configuration parameters for the uplink BWP of the cell may not comprise a higher layer (e.g., RRC) parameter, such as a ul-TCI-StateList, for example, based on the one or more configuration parameters comprising, for the uplink BWP of the cell, the reference unified TCI state list parameter.

A wireless device 1705 may use (e.g., apply) a second plurality of TCI states 1770 for uplink transmissions (e.g., PUSCH/PUCCH/SRS transmissions) of a cell, for example, based on one or more configuration parameters comprising a unified-TCI-state-type parameter set to "Separate." The wireless device 1705 may not use (e.g., apply) the second plurality of TCI states 1770 for downlink receptions (e.g., PDCCH/PDSCH/CSI-RS receptions) of the cell, for example, based on the one or more configuration parameters comprising the unified-TCI-state-type parameter set to "Separate."

A wireless device 1705 may use, for downlink receptions via a downlink BWP of the cell, a plurality of TCI states 1770, for example, based on one or more configuration parameters 1720 indicating the plurality of TCI states 1770 for the downlink BWP of the cell.

A wireless device 1705 may use, for uplink transmissions receptions via an uplink BWP of a cell, a plurality of TCI states 1770, for example, based on one or more configuration parameters 1720 indicating the plurality of TCI states 1770 for the downlink BWP of the cell.

A wireless device 1705 may use, for downlink receptions via a downlink BWP of the cell, a plurality of TCI states 1770 of a second downlink BWP of a second cell, for example, based on a reference unified TCI state list parameter indicating, for the downlink BWP of the cell, the second downlink BWP of the second cell. The wireless device 1705 may use, for uplink transmissions receptions via an uplink BWP of the cell, the plurality of TCI states 1770 of the second downlink BWP of the second cell, for example, based on the reference unified TCI state list parameter indicating, for the downlink BWP of the cell, the second downlink BWP of the second cell.

A wireless device 1705 may use, for uplink transmissions receptions via an uplink BWP of the cell, a second plurality of TCI states 1770, for example based on one or more configuration parameters 1720 indicating the second plurality of TCI states 1770 for the uplink BWP of the cell. The wireless device 1705 may use, for uplink transmissions receptions via the uplink BWP of the cell, the second plurality 1770 of TCI states of the second uplink BWP of the second cell, for example, based on the reference unified TCI state list parameter indicating, for the uplink BWP of the cell, the second uplink BWP of the second cell.

One or more configuration parameters 1720 may indicate, for a cell, a physical cell identifier (PCI). The one or more configuration parameters 1720 may indicate, for a set of cells, one or more PCIs. The one or more PCIs may comprise the PCI of the cell. The one or more configuration parameters 1720 may comprise a higher layer (e.g., RRC) parameter physCellId indicating the one or more PCIs for the set of cells. The one or more configuration parameters may indicate, for each cell of the set of cells, a respective PCI of the one or more PCIs. The one or more configuration parameters may comprise the higher layer (e.g., RRC) parameter physCellId indicating a respective PCI of the one or more PCIs for each cell of the set of cells. The one or more configuration parameters may indicate, for a first cell of the set of cells, a first PCI of the one or more PCIs. The first PCI may identify a physical cell identity of the first cell. The one or more configuration parameters may indicate, for a second cell of the set of cells, a second PCI of the one or more PCIs. The second PCI may identify a physical cell identity of the second cell.

One or more configuration parameters may indicate a list of PCI sets (e.g., indicated by a RRC parameter additionalPCI-ToAddModList as described herein in FIG. 17). The one or more configuration parameters may comprise one or more serving cell parameters (e.g., ServingCellConfig as described herein in FIG. 17) indicating the list of PCI sets. The one or more serving cell parameters may comprise MIMO parameters (e.g., MIMOParam as described herein in FIG. 17) comprising and/or indicating the list of PCI sets. The list of PCI sets may comprise at least one PCI set (e.g., provided and/or indicated by a higher layer parameter SSB-MTC-AdditionalPCI in FIG. 17). The list of PCI sets may be associated with SSBs with different PCI than PCI of the cell.

A list of PCI sets may comprise and/or indicate at least one PCI (e.g., additionalPCI or PhysCellId as described herein in FIG. 17) of one or more PCIs. Each PCI set (e.g., SSB-MTC-AdditionalPCI) of the list of PCI sets may comprise and/or indicate a respective PCI of the at least one PCI. One or more configuration parameters may indicate, for each PCI set of the list of PCI sets, a respective PCI of the at least one PCI. The at least one PCI may not comprise the PCI of the cell. Each PCI of the at least one PCI may be different from the PCI of the cell. The one or more PCIs may comprise the at least one PCI and the PCI of the cell. The at least one PCI may indicate (e.g., identify, etc.) at least one cell of the set of cells. Each PCI of the at least one PCI may indicate (e.g., identify, etc.) a respective cell of the at least one cell. A first PCI set of the list of PCI sets may comprise a first PCI of the at least one PCI. The first PCI may indicate (e.g., identify, etc.) a first cell of the at least one cell. A second PCI set of the list of PCI sets may comprise a second PCI of the at least one PCI. The second PCI may indicate (e.g., identify, etc.) a second cell of the at least one cell. The at least one cell may not comprise the cell. Each cell of the at least one cell may be different from the cell. The set of cells may comprise the at least one cell and the cell.

At least one cell may comprise, for example, at least one non-serving cell. The at least one cell may comprise, for example, at least one neighboring cell. The at least one cell may comprise, for example, at least one candidate and/or assisting cell.

A maximum size and/or length (e.g., maxNrofAdditionalPCI) of a list of PCI sets may be equal to a value (e.g., 7). A maximum quantity of PCI sets in the list of PCI sets may be equal to a value (e.g., 7).

A list of at least one PCI set may comprise and/or indicate at least one additional PCI index (e.g., additionalPCIIndex in FIG. 17). Each PCI set (e.g., SSB-MTC-AdditionalPCI) of the list of PCI sets may comprise and/or indicate a respective additional PCI index of the at least one additional PCI index. One or more configuration parameters may indicate the at least one additional PCI index for the list of PCI sets. The one or more configuration parameters may indicate, for each PCI set of the list of PCI sets, a respective additional PCI index of the at least one additional PCI index. Each PCI set of the list of PCI sets may be identified and/or indicated by a respective additional PCI index of the at least one additional PCI index. a first PCI set of the list of PCI sets may be identified and/or indicated by a first additional PCI index of the at least one additional PCI index. A second PCI set of the list of PCI sets may be identified and/or indicated by a second additional PCI index of the at least one additional PCI index.

One or more configuration parameters may indicate a list of PCI sets, for example, for inter-cell beam management. The one or more configuration parameters may indicate the list of PCI sets, for example, for inter-cell multi-TRP operation/mode.

A list of PCI sets, for example, may be equal to [{1, PCI 5}, {2, PCI 2}, {3, PCI 4}, {4, PCI 10}, {5, PCI 21}]. The PCI of a cell may be different from PCI 5, PCI 2, PCI 4, PCI 10, and PCI 21. The following conditions may apply:

- {1, PCI 5) may be a first PCI set of a list of PCI sets. '1' may be a first additional PCI index of a first PCI set. PCI 5 may be a first PCI indicating, identifying, and/or of a first cell.

- {2, PCI 2) may be a second PCI set of a list of PCI sets. '2' may be a second additional PCI index of a second PCI set. PCI 2 indicating, identifying, and/or of a second PCI indicating, identifying, and/or of a second cell.

- {3, PCI 4) may be a third PCI set of a list of PCI sets. '3' may be a third additional PCI index of a third PCI set. PCI 4 may be a third PCI indicating, identifying, and/or of a third cell.

- {4, PCI 10) may be a fourth PCI set of a list of PCI sets. '4' may be a fourth additional PCI index of a fourth PCI set. PCI 10 may be a fourth PCI indicating, identifying, and/or of a fourth cell.

- {5, PCI 21) may be a fifth PCI set of a list of PCI sets. '5' may be a fifth additional PCI index of the fifth PCI set. PCI 21 may be a fifth PCI indicating, identifying, and/or of a fifth cell.

  ◦ At least one additional PCI index may comprise a first additional PCI index (1), a second additional PCI index (2), a third additional PCI index (3), a fourth additional PCI index (4), a fifth additional PCI index (5).

  ◦ At least one PCI may comprise PCI 5, PCI 2, PCI 4, PCI 10, and/or PCI 21.

  ◦ At least one cell may comprise a first cell, a second cell, a third cell, a fourth cell and/or a fifth cell.

  ◦ One or more cells may comprise the at least one cell and the cell.

At least one additional PCI index may comprise a first additional PCI index (1), a second additional PCI index (2), a third additional PCI index (3), a fourth additional PCI index (4), a fifth additional PCI index (5). At least one PCI may comprise PCI 5, PCI 2, PCI 4, PCI 10, and/or PCI 21. At least one cell may comprise a first cell, a second cell, a third cell, a fourth cell and/or a fifth cell. One or more cells may comprise the at least one cell and the cell.

One or more configuration parameters may indicate, for one or more TCI states of a plurality of TCI states and/or a second plurality of TCI states, at least one additional PCI index. The one or more configuration parameters may indicate, for each TCI state of the one or more TCI states, a respective additional PCI index (e.g., additionalPCI, AdditionalPCIIndex) of the at least one additional PCI index. The one or more configuration parameters may indicate, for a first TCI state of the one or more TCI states, a first additional PCI index (e.g., 1) of the at least one additional PCI index. The first additional PCI index may indicate (e.g., identify, etc.) a first PCI set of the list of PCI sets. The one or more configuration parameters may indicate, for a second TCI state of the one or more TCI states, a second additional PCI index (e.g., 2) of the at least one additional PCI index. The second additional PCI index may indicate (e.g., identify, etc.) a second PCI set of the list of PCI sets. The one or more configuration parameters may indicate, for a third TCI state of the one or more TCI states, a third additional PCI index (e.g., 3) of the at least one additional PCI index, and so on. The third additional PCI index may indicate (e.g., identify, etc.) a third PCI set of the list of PCI sets.

A TCI state of the one or more TCI states may be associated with an additional PCI index of at least one additional PCI index, for example, based on one or more configuration parameters indicating, for a TCI state, the additional PCI index. The TCI state may comprise the additional PCI index. The additional PCI index may indicate (e.g., identify, etc.) a PCI set of a list of at least one PCI set. The PCI set may comprise and/or indicate a second PCI of the at least one PCI. The second PCI may indicate (e.g., identify, etc.) a second cell of the at least one cell. The TCI state may be associated with the second PCI and/or the second cell, for example, based on the one or more configuration parameters indicating, for the TCI state, the additional PCI index indicating the second PCI and/or the second cell. The second PCI of the second cell may be, for example, different from the PCI of the cell.

One or more configuration parameters 1720 may not indicate, for one or more TCI states of a plurality of TCI states 1770, an additional PCI index of at least one additional PCI index. An additional PCI index may be absent (e.g., not present) in configuration parameters of the one or more TCI states. The one or more configuration parameters 1720 may comprise the configuration parameters of the one or more TCI states. The one or more TCI states of the plurality of TCI states may not be associated with an additional PCI index. The one or more TCI states may not comprise an additional PCI index. Each TCI state of the one or more TCI states may not comprise an additional PCI index. The one or more TCI states may be associated with the cell and/or the PCI of the cell, for example, based on the one or more configuration parameters not indicating, for the one or more TCI states of the plurality of TCI states, an additional PCI index. The one or more TCI states may be associated with the cell and/or the PCI of the cell, for example, based on the one or more configuration parameters not indicating, for each TCI state of the one or more TCI states, an additional PCI index. The one or more TCI states may be associated with the cell and/or the PCI of the cell, for example, based on the one or more configuration parameters not indicating, for each TCI state of the one or more TCI states, an additional PCI index of the at least one additional PCI index.

A wireless device 1705 may receive an activation command 1730 (e.g., MAC-CE, DCI, RRC, downlink control command/message, control command/message, Unified TCI States Activation/Deactivation MAC CE, Activation command at time $T_1$ as described herein in FIG. 17, etc.). The activation command 1730 may indicate activation of a subset of TCI states 1780a of a plurality of TCI states (e.g., *DLorJoint-TCIStateList*). The activation command may indicate activation of a subset of TCI states 1780 of a second plurality of TCI states (e.g., *ul-TCI-StateList*).

A wireless device may map a subset of TCI states 1780a to one or more TCI codepoints 1780b. The activation command may indicate mapping of the subset of TCI states to the one or more TCI codepoints. The wireless device may map respective TCI states of the subset of TCI states 1780a to a respective TCI codepoint of the one or more TCI codepoints 1780b. The one or more TCI codepoints 1780b may indicate and/or comprise the subset of TCI states 1780a. Each TCI codepoint of the one or more TCI codepoints 1780b may indicate and/or be mapped to respective TCI states of the subset of TCI states 1780a. Each TCI codepoint of the one or more TCI codepoints 1780b may indicate, comprise, and/or be mapped to one or more TCI states.

In FIG. 17, for example, a subset of TCI states 1780a may be TCI state 4, TCI state 5, TCI state 8, TCI state 26, and TCI state 61. One or more TCI codepoints 1780b may comprise a first TCI codepoint (e.g., TCI codepoint 000), a second TCI codepoint (e.g., TCI codepoint 001), a third TCI codepoint (e.g., TCI codepoint 110), and a fourth TCI codepoint (e.g., TCI codepoint 111). The first TCI codepoint (e.g., TCI codepoint 000) may comprise and/or indicate the TCI state 4. The second TCI codepoint (e.g., TCI codepoint 001) may comprise and/or indicate the TCI state 5 and the TCI state 8. The third TCI codepoint (e.g., TCI codepoint 110) may comprise and/or indicate the TCI state 26 and TCI state 61. The fourth TCI codepoint (e.g., TCI codepoint 111) may comprise and/or indicate the TCI state 26. The first TCI codepoint (e.g., TCI codepoint 000) and the fourth TCI codepoint (e.g., TCI codepoint 111) indicate a single TCI state. The second TCI codepoint (e.g., TCI codepoint 001) and the third TCI codepoint (e.g., TCI codepoint 110) indicate two TCI states (e.g., two joint TCI states, two uplink TCI states, two downlink TCI states, etc.).

A quantity of the one or more TCI codepoints 1780b may be equal to one. The one or more TCI codepoints 1780b may be a single TCI codepoint. The wireless device may not receive a DCI indicating activation of one or more TCI states among the subset of TCI states, for example, based on the number of the one or more TCI codepoints being equal to one. The single TCI codepoint may indicate, comprise, and/or be mapped to at least two TCI states of the plurality of TCI states 1770. The subset of TCI states 1780a may be the at least two TCI states. The wireless device 1705 may not receive DCI 1740 indicating activation of one or more TCI states among the subset of TCI states 1780a, for example, based on the activation command indicating activation of the at least two TCI states. The at least two TCI states may comprise a first TCI state and a second TCI state.

The single TCI codepoint may indicate/comprise (and/or may be mapped to) a TCI state of the plurality of TCI states. The TCI state may be a single TCI state. The subset of TCI states may be the TCI state. The wireless device may not receive a DCI indicating activation of one or more TCI states among the subset of TCI states, for example, based on the activation command indicating activation of the TCI state. The TCI state may be/comprise a first TCI state.

A quantity of one or more TCI codepoints 1780b may be greater than one. A wireless device 1705 may receive DCI 1740 (e.g., DCI at time $T_2$ as described herein in FIG. 17). The DCI 1740 may comprise a TCI field 1745. The TCI field 1745 may indicate a TCI codepoint of the one or more TCI codepoints 1780b. A value of the TCI field 1745 (e.g., TCI field = 110 as described herein in FIG. 17) may indicate and/or be equal to the TCI codepoint.

A TCI codepoint (e.g., TCI codepoint 110 in FIG. 17) may comprise, indicate, and/or be mapped to at least two TCI states (e.g., TCI state 26 and TCI state 61 in FIG. 17). The subset of TCI states 1780a may comprise the at least two TCI states of the TCI codepoint. The DCI 1740 may indicate activation of the at least two TCI states. The at least two TCI states may comprise a first TCI state (e.g., TCI state 26 in FIG. 17) and a second TCI state (e.g., TCI state 61 in FIG. 17).

The TCI codepoint (e.g., TCI codepoint 111 in FIG. 17) may comprise/indicate, and/or may be mapped to, a TCI state (e.g., TCI state 26 in FIG. 17). The subset of TCI states may comprise the TCI state of and/or in the TCI codepoint. The DCI may indicate activation of the TCI state. The TCI state may be/comprise a first TCI state (e.g., TCI state 26 in FIG. 17).

The first TCI state may be (and/or may be interchangeably used with) a first unified TCI state. The first TCI state may be (and/or may be interchangeably used with) a first joint TCI state. The first TCI state may be (and/or may be interchangeably used with) a first downlink TCI state. The first TCI state may be (and/or may be interchangeably used with) a first joint/downlink TCI state. The first TCI state may be (and/or may be interchangeably used with) a first uplink TCI state.

The second TCI state may be (and/or may be interchangeably used with) a second unified TCI state. The second TCI state may be (and/or may be interchangeably used with) a second joint TCI state. The second TCI state may be (and/or may be interchangeably used with) a second downlink TCI state. The second TCI state may be (and/or may be interchangeably used with) a second joint/downlink TCI state. The second TCI state may be (and/or may be interchangeably used with) a second uplink TCI state.

FIG. 18 shows an example of TCI state activation. A wireless device 1805 may receive a first activation command 1820 (e.g., MAC-CE, DCI, downlink control command/message, RRC, control command/message, Unified TCI States Activation/Deactivation MAC CE, Activation command 1 at time T1 as described herein in FIG. 18, etc.). The first activation command 1820 may activate, select, indicate, update and/or indicate activation of a first subset of TCI states 1870a of the plurality of TCI states 1770 (e.g., *DLorJoint-TCIStateList)*. The first activation command 1820 may activate, select, indicate, update and/or indicate activation of a first subset of TCI states 1870a of the second plurality of TCI states 1770 (e.g., *UL-TCIStateList*).

A first activation command 1820 may comprise a field (e.g., CoresetPoolID) with a first coreset pool index 1825 (e.g., Coreset pool index 0). A value in the field may be equal to the first coreset pool index 1825. The first coreset pool index 1825 may be, for example, equal to zero. The first subset of TCI states 1870a may be associated with the first coreset pool index 1825. The first subset of TCI states 1870a may be associated with the first coreset pool index 1825, for example, based on the first activation command 1820, indicating activation of the first subset of TCI states 1870a, comprising the field with the first coreset pool index 1825. The wireless device may activate the first subset of TCI states 1870a for the first coreset pool index 1825.

A wireless device 1805 may map a first subset of TCI states 1870a to one or more first TCI codepoints 1870b. The first activation command may indicate mapping of the first subset of TCI states to the one or more first TCI codepoints. The wireless device 1805 may map respective TCI states of the first subset of TCI states 1870a to a respective TCI codepoint of the one or more first TCI codepoints 1870b. The one or more first TCI codepoints 1870b may indicate and/or comprise the first subset of TCI states 1870a. Each TCI codepoint of the one or more first TCI codepoints 1870b may comprise, indicate, and/or be mapped to respective TCI states of the first subset of TCI states 1870a. Each TCI codepoint of the one or more first TCI codepoints 1870b may comprise, indicate, and/or be mapped to one or more TCI states. The one or more first TCI codepoints 1870b may be associated with the first coreset pool index 1825.

In FIG. 18, for example, a first subset of TCI states 1870a may comprise TCI state 4, TCI state 5, TCI state 26, and/or TCI state 42. One or more first TCI codepoints 1870b may comprise a first TCI codepoint (e.g., TCI codepoint 000), a second TCI codepoint (e.g., TCI codepoint 001), a third TCI codepoint (e.g., TCI codepoint 110), and a fourth TCI codepoint (e.g., TCI codepoint 111). The first TCI codepoint (e.g., TCI codepoint 000) may comprise and/or indicate the TCI state 4. The second TCI codepoint (e.g., TCI codepoint 001) may comprise and/or indicate the TCI state 5. The third TCI codepoint (e.g., TCI codepoint 110) may comprise and/or indicate the TCI state 26. The fourth TCI codepoint (e.g., TCI codepoint 111) may comprise and/or indicate the TCI state 42. The first TCI codepoint (e.g., TCI codepoint 000), the second TCI codepoint (e.g., TCI codepoint 001), the third TCI codepoint (e.g., TCI codepoint 110) and the fourth TCI codepoint (e.g., TCI codepoint 111) indicate a single TCI state (e.g., a single joint TCI state, a single uplink TCI state, a single downlink TCI state, etc.).

A quantity of one or more first TCI codepoints 1870b may be equal to one. The one or more first TCI codepoints 1870b may be a single TCI codepoint. The single TCI codepoint may indicate a first TCI state of a plurality of TCI states. The first subset of TCI states 1870a may be the first TCI state. The wireless device may not receive DCI indicating activation of one or more TCI states among the first subset of TCI states 1870a, for example, based on the quantity of the one or more first TCI codepoints 1870b being equal to one. The wireless device 1805 may not receive DCI indicating activation of one or more TCI states among the first subset of TCI states 1870a, for example, based on the first activation command 1820 indicating activation of the first TCI state.

A quantity of one or more first TCI codepoints 1870b may be greater than one. A wireless 1805 device may receive a first DCI (e.g., DCI 1 at time T2 in FIG. 18. The wireless device may receive, via a first coreset 1838 (e.g., Coreset 1 in FIG. 18) with the first coreset 1838 pool index 1825 (e.g., Coreset pool index 0), the first DCI 1830. The plurality of coresets may comprise the first coreset 1838. The one or more configuration parameters may indicate, for the first coreset 1838, the first coreset pool index 1825. The one or more configuration parameters may not indicate, for the first coreset 1838, a coreset pool index. The first coreset 1838 may be associated with the first coreset pool index 1825 (e.g., Coreset pool index 0), for example, based on the one or more configuration parameters not indicating, for the first coreset 1838, a coreset pool index. A default value for coreset pool index of the first coreset 1838 may be equal to the first coreset pool index 1825 (e.g., Coreset pool index 0), for example, based on the one or more configuration parameters not indicating, for the first coreset 1838, a coreset pool index.

First DCI 1830 (e.g., DCI 1 as described herein in FIG. 18) may be, for example, DCI format 1_1. The first DCI 1830 may be, for example, DCI format 1_2. The first DCI 1830 may be, for example, DCI format 1_x, if x = 0, 1, 2 ... The first DCI 1830 may be, for example, DCI format 0_x, if x = 0, 1, 2 ....

First DCI 1830 may comprise a first TCI field 1835. The first TCI field 1835 may indicate a first TCI codepoint in the one or more first TCI codepoints 1870b. The first TCI field 1835 may indicate the first TCI codepoint of the one or more first TCI codepoints 1870b associated with the first coreset pool index 1825, for example, based on the receiving the first DCI 1830 via the first coreset 1838 with the first coreset pool index 1825. A value of the first TCI field 1835 (e.g., 110 in FIG. 18) may be, for example, equal to the first TCI codepoint. The value of the first TCI field 1835 may be, for example, indicate the first TCI codepoint. The first TCI codepoint (e.g., 110) may indicate, comprise, and/or be mapped to a first TCI state (e.g., TCI state 26 in FIG. 18). The first subset of TCI states 1870a may comprise the first TCI state. The first DCI 1830 may activate and/or indicate activation of the first TCI state. The first DCI 1830 may indicate activation of the first TCI state. The first TCI field 1835 in the first DCI 1830 may indicate the first TCI state in the first subset of TCI states 1870a, for example, based on the receiving the first DCI 1830 via the first coreset 1838 with the first coreset pool index 1825. The first TCI field 1835 in the first DCI 1830 may indicate the first TCI state in the first subset of TCI states 1870a, for example, based on the first activation command 1820, indicating activation of the first subset of TCI states 1870a, comprising the field with the first coreset pool index 1825 that may be the same as that of the first coreset 1838.

The first TCI state may be (or may be interchangeably used with) a first unified TCI state. The first TCI state may be (or may be interchangeably used with) a first joint TCI state. The first TCI state may be (or may be interchangeably used with) a first downlink TCI state. The first TCI state may be (or may be interchangeably used with) a first joint/downlink TCI state. The first TCI state may be (or may be interchangeably used with) a first uplink TCI state.

A first TCI state may be associated with and/or activated for a first coreset pool index 1825. The first TCI state may be associated with downlink and/or uplink receptions and/or transmissions associated with the first coreset pool index 1825. The first TCI state may be associated with the downlink and/or uplink receptions and/or transmissions associated with the first coreset pool index 1825, for example, based on receiving, via the first coreset 1838 with the first coreset pool index 1825, the first DCI 1830 indicating activation of the first TCI state.

The wireless device may apply the first TCI state to downlink receptions (e.g., PDSCH receptions, transport block, PDCCH receptions, CSI-RS, DM-RS, etc.) associated with the first coreset pool index 1825. The one or more configuration parameters may indicate, for a coreset of the plurality of coresets, the first coreset pool index 1825. The wireless device may monitor downlink control channels in the coreset based on the first TCI state, for example, based on (e.g., in response to) the one or more configuration parameters indicating, for the coreset, the first coreset pool index 1825. The wireless device may receive, via a coreset with the first coreset pool index 1825, DCI scheduling a downlink signal (e.g., PDSCH transmission, transport block, DM-RS, CSI-RS, aperiodic CSI-RS). The plurality of coresets may comprise the coreset. The downlink signal may be associated with the first coreset pool index 1825, for example, based on the receiving the DCI via the coreset with the first coreset pool index 1825. The wireless device may receive the downlink signal based on the first TCI state, for example, based on (e.g., in response to) the downlink signal being associated with the first coreset pool index 1825. The wireless device may receive a downlink signal (e.g., PDSCH transmission, transport block, DM-RS, CSI-RS, aperiodic CSI-RS) based on the first TCI state, for example, based on (e.g., in response to) the one or more configuration parameters indicating, for the downlink signal and/or a resource set comprising the downlink signal, the first coreset pool index 1825.

A wireless device may apply the first TCI state to uplink transmissions (e.g., PUSCH transmissions, transport block, PUCCH transmissions, SRS, etc.) associated with the first coreset pool index 1825.

One or more configuration parameters may indicate, for an uplink resource and/or an uplink resource set and/or group comprising an uplink resource, a first coreset pool index 1825. A wireless device 1805 may send (e.g., transmit), via the uplink resource, an uplink signal (e.g., UCI, HARQ-ACK, SR, CSI report, SRS) based on a first TCI state, for example, based on (e.g., in response to) the one or more configuration parameters indicating, for the uplink resource

and/or the uplink resource set and/or group comprising the uplink resource, the first coreset pool index 1825. The uplink BWP (e.g., active uplink BWP) of a cell may comprise the uplink resource. The uplink resource may be, for example, a PUCCH resource. The uplink signal may be a UCI (e.g., UCI, HARQ-ACK, SR, CSI report). The uplink resource may be, for example, a SRS resource. The uplink signal may be a SRS. The uplink resource may be, for example, a PUSCH resource. The uplink signal may be a PUSCH transmission (e.g., transport block) of a configured uplink grant (e.g., Type 1 configured uplink grant). Transmission of the uplink signal via the uplink resource may be associated with the first coreset pool index 1825, for example, based on the one or more configuration parameters indicating, for the uplink resource and/or the uplink resource set and/or group comprising the uplink resource, the first coreset pool index 1825.

A wireless device 1805 may receive, via a coreset 1838 with a first coreset pool index 1825, DCI 1830 triggering and/or scheduling transmission of an uplink signal (e.g., PUSCH transmission, transport block, SRS, HARQ-ACK). A plurality of coresets may comprise the coreset. The uplink signal may be associated with the first coreset pool index 1825, for example, based on the receiving the DCI 1830 via the coreset 1838 with the first coreset pool index 1825. The wireless device may send (e.g., transmit) the uplink signal based on the first TCI state, for example, based on (e.g., in response to) the uplink signal being associated with the first coreset pool index 1825.

A wireless device 1805 may receive a second activation command 1840 (e.g., MAC-CE, DCI, downlink control command/message, RRC, control command/message, Unified TCI States Activation/Deactivation MAC CE, Activation command 2 at time $T_3$ as described herein in FIG. 18 etc.). The second activation command 1840 may activate, select, indicate, update and/or indicate activation of a second subset of TCI states 1880a of the plurality of TCI states (e.g., *DLorJoint-TCIStateList*). The second activation command 1840 may activate, select, indicate, update and/or indicate activation of a second subset of TCI states 1880a of the second plurality of TCI states (e.g., *UL-TCIStateList*).

A second activation command 1840 may comprise a field (e.g., CoresetPoolID) with a second coreset pool index 1845 (e.g., Coreset pool index 1 in FIG. 18). A value in the field may be equal to the second coreset pool index 1845. The second coreset pool index 1845 may be, for example, equal to one. A second subset of TCI states 1880a may be associated with the second coreset pool index 1845. The second subset of TCI states 1880a may be associated with the second coreset pool index 1845, for example, based on the second activation command 1840, indicating activation of the second subset of TCI states 1880a, comprising the field with the second coreset pool index 1845. The wireless device may activate the second subset of TCI states 1880a for the second coreset pool index 1845.

A wireless device 1805 may map the second subset of TCI states 1880a to one or more second TCI codepoints 1880b. The second activation command may indicate mapping of the second subset of TCI states to the one or more second TCI codepoints. The wireless device 1805 may map respective TCI states of the second subset of TCI states 1880a to a respective TCI codepoint of the one or more second TCI codepoints 1880b. The one or more second TCI codepoints 1880b may indicate, comprise, and/or be mapped to the second subset of TCI states 1880a. Each TCI codepoint of the one or more second TCI codepoints 1880b may comprise, indicate, and/or be mapped to respective TCI states of the second subset of TCI states 1880a. Each TCI codepoint of the one or more second TCI codepoints 1880b may comprise, indicate, and/or be mapped to one or more TCI states. The one or more second TCI codepoints 1880b may be associated with the second coreset pool index 1845.

In FIG. 18, for example, a second subset of TCI states 1880a may be TCI state 8, TCI state 61, and TCI state 21. One or more second TCI codepoints 1880b may comprise a first TCI codepoint (e.g., TCI codepoint 000), a second TCI codepoint (e.g., TCI codepoint 001), and a third TCI codepoint (e.g., TCI codepoint 110). The first TCI codepoint (e.g., TCI codepoint 000) may comprise and/or indicate the TCI state 8. The second TCI codepoint (e.g., TCI codepoint 001) may comprise and/or indicate the TCI state 61. The third TCI codepoint (e.g., TCI codepoint 110) may comprise and/or indicate the TCI state 21. The first TCI codepoint (e.g., TCI codepoint 000), the second TCI codepoint (e.g., TCI codepoint 001), and the third TCI codepoint (e.g., TCI codepoint 110) may comprise and/or indicate a single TCI state (e.g., a single joint TCI state, a single uplink TCI state, a single downlink TCI state, etc.).

A quantity of one or more second TCI codepoints 1880b may be equal to one. One or more second TCI codepoints 1880b may be a single TCI codepoint. The single TCI codepoint may indicate a second TCI state of a plurality of TCI states. The second subset of TCI states 1880a may be the second TCI state. A wireless device 1805 may not receive DCI 1850 indicating activation of one or more TCI states among the second subset of TCI states 1880a, for example, based on the quantity of the one or more second TCI codepoints 1880b being equal to one. The wireless device 1805 may not receive DCI 1850 indicating activation of one or more TCI states among the second subset of TCI states 1880a, for example, based on the second activation command 1840 indicating activation of the second TCI state.

A quantity of one or more second TCI codepoints 1880b may be greater than one. A wireless device 1805 may receive, via a second coreset 1858 (e.g., Coreset 2 in FIG. 18) with a second coreset 1858 pool index 1845 (e.g., Coreset pool index 1), second DCI 1850 (e.g., DCI 2 at time $T_4$ in FIG. 18). One or more configuration parameters may indicate, for the second coreset 1858, the second coreset pool index 1845. The plurality of coresets may comprise the second coreset 1858.

Second DCI 1850 may be, for example, DCI format 1_1. The second DCI 1850 may be, for example, DCI format 1_2. The second DCI 1850 may be, for example, DCI format 1_x, if x = 0, 1, 2 ... The second DCI 1850 may be, for example, DCI format 0_x, if x = 0, 1, 2 ....

The second DCI 1850 may comprise a second TCI field 1855. The second TCI field 1855 may indicate a second TCI codepoint in the one or more second TCI codepoints 1880b. The second TCI field 1855 may indicate the second TCI codepoint of the one or more second TCI codepoints 1880b associated with the second coreset pool index 1845, for example, based on the receiving the second DCI 1850 via the second coreset 1858 with the second coreset pool index 1845. A value of the second TCI field 1855 (e.g., 001 in FIG. 18) may be, for example, equal to the second TCI codepoint. The value of the second TCI field 1855 may be, for example, indicate the second TCI codepoint. The second TCI codepoint (e.g., 001) may indicate, comprise, and/or be mapped to a second TCI state (e.g., TCI state 61 in FIG. 18). The second subset of TCI states 1880a may comprise the second TCI state. The second DCI 1850 may activate and/or indicate activation of the second TCI state. The second DCI 1850 may indicate activation of the second TCI state. The second TCI field 1855 in the second DCI 1850 may indicate the second TCI state in the second subset of TCI states 1880a, for example, based on the receiving the second DCI 1850 via the second coreset 1858 with the second coreset pool index 1845. The second TCI field 1855 in the second DCI 1850 may indicate the second TCI state in the second subset of TCI states 1880a, for example, based on the second activation command 1840, that indicates activation of the second subset of TCI states 1880a, comprising the field with the second coreset pool index 1845 that may be the same as that of the second coreset 1858.

The second TCI state may be (and/or may be interchangeably used with) a second unified TCI state. The second TCI state may be (and/or may be interchangeably used with) a second joint TCI state. The second TCI state may be (and/or may be interchangeably used with) a second downlink TCI state. The second TCI state may be (and/or may be interchangeably used with) a second joint/downlink TCI state. The second TCI state may be (and/or may be interchangeably used with) a second uplink TCI state.

A second TCI state may be associated with and/or activated for a second coreset pool index 1845. The second TCI state may be associated with downlink and/or uplink receptions and/or transmissions associated with the second coreset pool index 1845. The second TCI state may be associated with the downlink and/or uplink receptions and/or transmissions associated with the second coreset pool index 1845, for example, based on the receiving, via the second coreset 1858 with the second coreset pool index 1845, second DCI 1850 indicating activation of the second TCI state.

A wireless device 1805 may apply a second TCI state to downlink receptions (e.g., PDSCH receptions, transport block, PDCCH receptions, CSI-RS, DM-RS, etc.) associated with a second coreset pool index 1845. One or more configuration parameters may indicate, for a coreset of a plurality of coresets, the second coreset pool index 1845. The wireless device 1805 may monitor downlink control channels in the coreset based on the second TCI state, for example, based on (e.g., in response to) the one or more configuration parameters indicating, for the coreset, the second coreset pool index 1845. The wireless device 1805 may receive, via a coreset with the second coreset pool index 1845, DCI scheduling a downlink signal (e.g., PDSCH transmission, transport block, DM-RS, CSI-RS, aperiodic CSI-RS). The plurality of coresets may comprise the coreset. The downlink signal may be associated with the second coreset pool index 1845, for example, based on the receiving the DCI via the coreset with the second coreset pool index 1845. The wireless device 1805 may receive the downlink signal based on the second TCI state, for example, based on (e.g., in response to) the downlink signal being associated with the second coreset pool index 1845. The wireless device 1805 may receive a downlink signal (e.g., PDSCH transmission, transport block, DM-RS, CSI-RS, aperiodic CSI-RS) based on the second TCI state, for example, based on (e.g., in response to) the one or more configuration parameters indicating, for the downlink signal and/or a resource set comprising the downlink signal, the second coreset pool index 1845.

A wireless device 1805 may apply a second TCI state to uplink transmissions (e.g., PUSCH transmissions, transport block, PUCCH transmissions, SRS, etc.) associated with a second coreset pool index 1845. One or more configuration parameters may indicate, for an uplink resource and/or an uplink resource set and/or group comprising an uplink resource, the second coreset pool index 1845.

The wireless device 1805 may send (e.g., transmit), via the uplink resource, an uplink signal (e.g., UCI, HARQ-ACK, SR, CSI report, SRS) based on the second TCI state, for example, based on (e.g., in response to) the one or more configuration parameters indicating, for the uplink resource and/or the uplink resource set and/or group comprising the uplink resource, the second coreset pool index 1845. An uplink BWP (e.g., an active uplink BWP) of a cell may comprise the uplink resource. The uplink resource may be, for example, a PUCCH resource. The uplink signal may be a UCI (e.g., UCI, HARQ-ACK, SR, CSI report). The uplink resource may be, for example, a SRS resource. The uplink signal may be a SRS. The uplink resource may be, for example, a PUSCH resource. The uplink signal may be a PUSCH transmission (e.g., transport block) of a configured uplink grant (e.g., Type 1 configured uplink grant). Sending (e.g., transmitting) the uplink signal via the uplink resource may be associated with the second coreset pool index 1845, for example, based on the one or more configuration parameters indicating, for the uplink resource and/or the uplink resource set and/or group comprising the uplink resource, the second coreset pool index 1845.

A wireless device 1805 may receive, via a coreset with the second coreset pool index 1845, DCI triggering and/or scheduling transmission of an uplink signal (e.g., PUSCH transmission, transport block, SRS, HARQ-ACK). A plurality of coresets may comprise the coreset. The uplink signal may be associated with the second coreset pool index 1845, for example, based on receiving the DCI via the coreset with the second coreset pool index 1845. The wireless device may send (e.g., transmit) the uplink signal based on the second TCI state, for example, based on (e.g., in response to) the uplink signal being associated with the second coreset pool index 1845.

A first TCI state may comprise and/or indicate a first reference signal (e.g., CSI-RS, SSB/PBCH block, DM-RS, SRS, etc.). The first TCI state may comprise and/or indicate a first quasi co-location type (e.g., QCL TypeA, QCL TypeB, QCL TypeC, QCL TypeD).

A first TCI state may be associated with a PCI of a cell. The first TCI state may not comprise an additional PCI index of at least one additional PCI index. An additional PCI index may be absent in configuration parameters of the first TCI state. One or more configuration parameters may comprise a configuration parameters of the first TCI state. The first TCI state may be associated with the PCI of the cell, for example, based on the first TCI state not comprising an additional PCI index of the at least one additional PCI index. A first reference signal may be quasi co-located with a first SS/PBCH block. The first reference signal may be a first SS/PBCH block. The first reference signal may be quasi co-located with a first CSI-RS that may be quasi co-located with a first SS/PBCH block. The first SS/PBCH block may be associated with the cell. The first SS/PBCH block may be associated with the PCI of the cell. The one or more configuration parameters may indicate, for the cell, the first SS/PBCH block.

A first TCI state may be associated with a second PCI of a second cell. At least one cell of set of cells may comprise the second cell. At least one PCI in and/or indicated by the list of PCI sets may comprise the second PCI. The second PCI may indicate (e.g., identify, etc.) the second cell. The first TCI state may comprise an additional PCI index of the at least one additional PCI index. The one or more configuration parameters may indicate, for the first TCI state, an additional PCI index. The additional PCI index may indicate a PCI set of the list of PCI sets. The PCI set may comprise and/or indicate the second PCI of the second cell. The first TCI state may be associated with the second PCI of the second cell, for example, based on the first TCI state comprising the additional PCI index indicating the second PCI of the second cell. The first TCI state may be associated with the second PCI of the second cell, for example, based on the one or more configuration parameters indicating, for the first TCI state, the additional PCI index that indicates the second PCI of the second cell. The first reference signal may be quasi co-located with a first SS/PBCH block. A first reference signal may be a first SS/PBCH block. The first reference signal may be quasi co-located with a first CSI-RS that may be quasi co-located with a first SS/PBCH block. The first SS/PBCH block may be associated with the second cell. The first SS/PBCH block may be associated with the second PCI of the second cell. The one or more configuration parameters may indicate, for the second cell, the first SS/PBCH block.

A second TCI state may comprise and/or indicate a second reference signal (e.g., CSI-RS, SSB/PBCH block, DM-RS, SRS, etc.). The second TCI state may comprise and/or indicate a second quasi co-location type (e.g., QCL TypeA, QCL TypeB, QCL TypeC, QCL TypeD). The second TCI state may be associated with a PCI of the cell. The second TCI state may not comprise an additional PCI index of the at least one additional PCI index. An additional PCI index may be absent in configuration parameters of the second TCI state. One or more configuration parameters may comprise a configuration parameters of the second TCI state. The second TCI state may be associated with the PCI of the cell, for example, based on the second TCI state not comprising an additional PCI index of the at least one additional PCI index. The second reference signal may be quasi co-located with a second SS/PBCH block. The second reference signal may be a second SS/PBCH block. The second reference signal may be quasi co-located with a second CSI-RS that may be quasi co-located with a second SS/PBCH block. The second SS/PBCH block may be associated with the cell. The second SS/PBCH block may be associated with the PCI of the cell. The one or more configuration parameters may indicate, for the cell, the second SS/PBCH block.

A second TCI state may be associated with a second PCI of a second cell. At least one cell of a set of cells may comprise the second cell. At least one PCI in and/or indicated by a list of PCI sets may comprise the second PCI. The second PCI may indicate (e.g., identify, etc.) the second cell. The second TCI state may comprise an additional PCI index of at least one additional PCI index. One or more configuration parameters may indicate, for the second TCI state, the additional PCI index. The additional PCI index may indicate a PCI set of the list of PCI sets. The PCI set may comprise and/or indicate the second PCI of the second cell. The second TCI state may be associated with the second PCI of the second cell, for example, based on the second TCI state comprising the additional PCI index indicating the second PCI of the second cell. The second TCI state may be associated with the second PCI of the second cell, for example, based on the one or more configuration parameters indicating, for the second TCI state, the additional PCI index that may indicate the second PCI of the second cell. A second reference signal may be quasi co-located with a second SS/PBCH block. The second reference signal may be a second SS/PBCH block. The second reference signal may be quasi co-located with a second CSI-RS that may be quasi co-located with a second SS/PBCH block. The second SS/PBCH block may be associated with the second cell. The second SS/PBCH block may be associated with the second PCI of the second cell. The one or more configuration parameters may indicate, for the second cell, the second SS/PBCH block.

A second cell identified and/or indicated by a second PCI may be a non-serving cell. The second cell identified and/or indicated by the second PCI may be a neighboring cell. The second cell identified and/or indicated by the second PCI may be a candidate and/or assisting cell.

One or more configuration parameters may indicate, for a first TCI state, a first TCI state index (e.g., tci-StateId). The one or more configuration parameters may indicate, for the second TCI state, a second TCI state index. The first TCI state index may be lower (e.g., less, smaller) than the second TCI state index. The plurality of TCI state indexes may comprise the first TCI state index and the second TCI state index.

A activation command indicating activation of a subset of TCI states may comprise a plurality of fields. A first field of the plurality of fields may indicate a first TCI state. The first field may comprise the first TCI state index identifying and/or indicating the first TCI state. The first field may be located in a first octet of the activation command. A second field of the plurality of fields may indicate the second TCI state. The second field may comprise the second TCI state index identifying and/or indicating the second TCI state. The second field may be located in a second octet of the activation command. The first octet may be lower (e.g., less) than the second octet. The first octet may be Octet 5, and the second octet may be Octet 6. The first octet may be Octet 1, and the second octet may be Octet 2. The first octet may be Octet 9, and the second octet may be Octet 10. A base station may order the first TCI state index and the second TCI state index based on an ordinal position in the activation command. Octet n of the activation command may comprise the first TCI state index identifying (e.g., indicating) the first TCI state, and Octet m of the activation command may comprise the second TCI state index identifying (e.g., indicating) the second TCI state, for example, if n < m.

A activation command may indicate, map, and/or activate a set, list, and/or vector of at least two TCI states to a TCI codepoint. The activation command may indicate a mapping, an association, and/or an activation of the set, list, and/or vector of the at least two TCI states to the TCI codepoint. The at least two TCI states may comprise a first TCI state and a second TCI state. The first TCI state may occur first in the set, list, and/or vector of the at least two TCI states. The first TCI state may be a first (e.g., starting, earliest, initial etc.) TCI state in the set, list, and/or vector of the at least two TCI states. The second TCI state may occur second in the set, list, and/or vector of the at least two TCI states. The second TCI state may be a last (e.g., latest, ending, etc.) TCI state in the set, list, and/or vector of the at least two TCI states. The first TCI state may be TCI state 5 and the second TCI state may be TCI state 8, for example, if the set, list, and/or vector of the at least two TCI states = [TCI state 5, TCI state 8]. The first TCI state may be TCI state 26 and the second TCI state may be TCI state 61, for example, if the set, list, and/or vector of the at least two TCI states = [TCI state 26, TCI state 61].

A wireless device may apply a first TCI state to one or more first uplink channels and/or resources of the cell. Applying the first TCI state to the one or more first uplink channels/resources may comprise sending (e.g., transmitting), via the one or more first uplink channels/resources, uplink signals based on the first TCI state. The wireless device may send (e.g., transmit), via the one or more first uplink channels and/or resources, uplink signals based on the first TCI state. The wireless device may send (e.g., transmit), via each uplink channel and/or resource of the one or more first uplink channels and/or resources, a respective uplink signal of the uplink signals based on the first TCI state.

A wireless device may send (e.g., transmit), via one or more first uplink channels and/or resources, uplink signals with transmission powers determined based on a first TCI state. The wireless device may send (e.g., transmit), via each uplink channel and/or resource of the one or more first uplink channels and/or resources, an uplink signal with a respective transmission power determined based on the first TCI state. The wireless device may send (e.g., transmit), via a first uplink channel and/or resource of the one or more first uplink channels and/or resources, a first uplink signal with a first transmission power determined based on the first TCI state. The wireless device may determine the first transmission power based on one or more first power control parameters (e.g., target received power, pathloss compensation factor, closed-loop index, pathloss reference signal, etc.) associated with, mapped to, indicated by, and/or included in the first TCI state. The wireless device may send (e.g., transmit), via a second uplink channel and/or resource of the one or more first uplink channels and/or resources, a second uplink signal with a second transmission power determined based on the first TCI state. The wireless device may determine the second transmission power based on one or more first power control parameters (e.g., target received power, pathloss compensation factor, closed-loop index, pathloss reference signal) associated with, mapped to, indicated by, and/or included in the first TCI state.

A wireless device may send (e.g., transmit), via one or more first uplink channels and/or resources, uplink signals with a first spatial domain transmission filter and/or beam determined based on a first TCI state. The wireless device may send (e.g., transmit), via each uplink channel and/or resource of the one or more first uplink channels and/or resources, a respective uplink signal with the first spatial domain transmission filter and/or beam determined based on the first TCI state. The wireless device may send (e.g., transmit), via a first uplink channel and/or resource of the one or more first uplink channels and/or resources, a first uplink signal with the first spatial domain transmission filter and/or beam determined based on the first TCI state. At least one DM-RS antenna port of the first uplink signal may be quasi co-located with the first reference signal indicated by the first TCI state. The wireless device may send (e.g., transmit), via a second uplink channel and/or resource of the one or more first uplink channels and/or resources, a second uplink signal with the first spatial domain transmission filter and/or beam determined based on the first TCI state. At least one DM-RS antenna port of the second uplink signal may be quasi co-located with the first reference signal indicated by the first TCI state

One or more first uplink channels and/or resources may comprise PUSCH. The one or more first uplink channels and/or resources may comprise one or more first PUSCH resources. The one or more first uplink channels and/or resources may comprise one or more first PUSCH transmissions.

A wireless device 1805 may receive, via a first coreset 1838, first DCI 1830 scheduling a first PUSCH transmission. A plurality of coresets may comprise the first coreset 1838. The first DCI 1830 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. The wireless device may send (e.g., transmit), based on the first TCI state, the first PUSCH transmission based on (e.g., in response to) the first DCI 1830 comprising a field with a first value indicating the first TCI state. One or more first uplink channels and/or resources may comprise PUSCH transmissions scheduled by DCIs comprising the field with the first value. Each DCI of the DCIs may schedule one or more PUSCH transmissions of the PUSCH transmissions.

A first coreset 1838 may be associated with a first coreset pool index 1825 (e.g., CoresetPoolIndex = 0). One or more configuration parameters may indicate, for the first coreset 1838, the first coreset pool index 1825. The one or more configuration parameters may not indicate, for the first coreset 1838, a coreset pool index. A wireless device may send (e.g., transmit), based on a first TCI state, a first PUSCH transmission, for example, based on (e.g., in response to) receiving first DCI 1830 scheduling the first PUSCH transmission via the first coreset 1838 with the first coreset pool index 1825. One or more first uplink channels and/or resources may comprise the first PUSCH transmission. The one or more first uplink channels and/or resources may comprise PUSCH transmissions scheduled by DCIs received via one or more first coresets with the first coreset pool index 1825. The plurality of coresets may comprise the one or more first coresets. The wireless device 1805 may send (e.g., transmit) the first PUSCH transmission with a first transmission power determined based on the first TCI state. The wireless device 1805 may send (e.g., transmit) the first PUSCH transmission with a first spatial domain transmission filter/beam determined based on the first TCI state.

One or more configuration parameters may indicate, for a configured uplink grant, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. A wireless device may send (e.g., transmit), based on the first TCI state, PUSCH transmissions of a configured uplink grant, for example, based on (e.g., in response to) the one or more configuration parameters indicating, for the configured uplink grant, the field with the first value that indicates the first TCI state. The configured uplink grant may be, for example, a Type 1 configured uplink grant. The one or more first uplink channels and/or resources may comprise the PUSCH transmissions of the configured uplink grant.

The wireless device 1805 may send (e.g., transmit) the PUSCH transmissions of the configured uplink grant with a first transmission power determined based on the first TCI state. The wireless device 1805 may send (e.g., transmit) the PUSCH transmissions of the configured uplink grant with a first spatial domain transmission filter/beam determined based on the first TCI state.

One or more first uplink channels and/or resources may comprise PUCCH. The one or more first uplink channels and/or resources may comprise one or more first PUCCH resources. The one or more first uplink channels and/or resources may comprise one or more first PUCCH resource sets and/or groups. The one or more first uplink channels and/or resources may comprise one or more first PUCCH transmissions.

One or more configuration parameters may indicate, for a first PUCCH resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. A wireless device may send (e.g., transmit), based on the first TCI state, an uplink signal (e.g., SR, HARQ-ACK, CSI report, uplink control information, PUCCH transmission) via a first PUCCH resource, for example, based on (e.g., in response to) the one or more configuration parameters indicating, for the first PUCCH resource, a field with a first value that indicates the first TCI state. The one or more first uplink channels and/or resources may comprise PUCCH transmissions via the first PUCCH resource.

The wireless device may send (e.g., transmit), via the first PUCCH resource, the uplink signal with a first transmission power determined based on the first TCI state. The wireless device may send (e.g., transmit), via the first PUCCH resource, the uplink signal with a first spatial domain transmission filter/beam determined based on the first TCI state.

One or more configuration parameters may indicate, for a first PUCCH resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating the first TCI state. The wireless device may send (e.g., transmit), based on the first TCI state, an uplink signal (e.g., SR, HARQ-ACK, CSI report, uplink control information) via a PUCCH resource in the first PUCCH resource set and/or group, for example, based on (e.g., in response to) the one or more configuration parameters indicating, for the first PUCCH resource set and/or group, the field with the first value that indicates the first TCI state. The wireless device may send (e.g., transmit), based on the first TCI state, a respective uplink signal (e.g., SR, HARQ-ACK, CSI report, uplink control information) via each PUCCH resource in the first PUCCH resource set and/or group, for example, based on (e.g., in response to) the one or more configuration parameters indicating, for the first PUCCH resource set and/or group, the field with the first value that indicates the first TCI state. The one or more first uplink channels and/or resources may comprise PUCCH transmissions via each PUCCH resource in the first PUCCH resource set and/or group.

The wireless device may send (e.g., transmit), via the PUCCH resource, the uplink signal with a first transmission power determined based on the first TCI state. The wireless device may send (e.g., transmit), via the PUCCH resource, the uplink signal with a first spatial domain transmission filter/beam determined based on the first TCI state.

A wireless device may receive, via a first coreset 1838, first DCI 1830 triggering and/or scheduling transmission of a first PUCCH transmission (e.g., HARQ-ACK feedback transmission). The first DCI 1830 may, for example, schedule a PDSCH reception. The first DCI 1830 may, for example, indicate SCell dormancy. The first DCI 1830 may, for example, indicate SPS PDSCH release. The first DCI 1830 may, for example, indicate activation of a unified TCI state. The plurality of coresets may comprise the first coreset 1838. The first DCI 1830 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating the first TCI state. The wireless device may send (e.g., transmit), based on the first TCI state, the first PUCCH transmission, for example, based on (e.g., in response to) the first DCI 1830 comprising a field with a first value indicating the first TCI state. The one or more first uplink channels and/or resources may comprise PUCCH transmissions triggered and/or scheduled by DCIs comprising the field with the first value.

A first coreset 1838 may be associated with a first coreset pool index 1825 (e.g., CoresetPoolIndex = 0). One or more configuration parameters may indicate, for the first coreset 1838, the first coreset pool index 1825. The one or more configuration parameters may not indicate, for the first coreset 1838, a coreset pool index. The wireless device may send (e.g., transmit), based on the first TCI state, a first PUCCH transmission, for example, based on (e.g., in response to) receiving first DCI 1830 triggering and/or scheduling the first PUCCH transmission via the first coreset 1838 with the first coreset pool index 1825. The one or more first uplink channels and/or resources may comprise PUCCH transmissions triggered and/or scheduled by DCIs received via one or more first coresets with the first coreset pool index 1825. A plurality of coresets may comprise one or more first coresets.

The wireless device 1805 may send (e.g., transmit) the first PUCCH transmission with a first transmission power determined based on the first TCI state. The wireless device 1805 may send (e.g., transmit) the first PUCCH transmission with a first spatial domain transmission filter/beam determined based on the first TCI state.

One or more first uplink channels and/or resources may comprise SRS. The one or more first uplink channels and/or resources may comprise one or more first SRS resources. The one or more first uplink channels and/or resources may comprise one or more first SRS resource sets and/or groups. The one or more first uplink channels and/or resources may comprise one or more first SRS transmissions.

One or more configuration parameters may indicate, for a first SRS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0) indicating a first TCI state. A wireless device may send (e.g., transmit), based on the first TCI state, a SRS via the first SRS resource, for example, based on (e.g., in response to) the one or more configuration parameters indicating, for the first SRS resource, a field with a first value that may indicate the first TCI state. One or more first uplink channels and/or resources may comprise SRS transmissions via the first SRS resource.

The wireless device 1805 may send (e.g., transmit), via the first SRS resource, the SRS with a first transmission power determined based on the first TCI state. The wireless device 1805 may send (e.g., transmit), via the first SRS resource, the SRS with a first spatial domain transmission filter/beam determined based on the first TCI state.

One or more configuration parameters may indicate, for a first SRS resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. A wireless device may send (e.g., transmit), based on the first TCI state, a SRS via a SRS resource in the first SRS resource set and/or group, for example, based on (e.g., in response to) the one or more configuration parameters indicating, for the first SRS resource set and/or group, a field with a first value that may indicate the first TCI state. The wireless device may send (e.g., transmit), based on the first TCI state, a respective SRS via each SRS resource in the first SRS resource set and/or group, for example, based on (e.g., in response to) the one or more configuration parameters indicating, for the first SRS resource set and/or group, the field with the first value that may indicate the first TCI state. One or more first uplink channels and/or resources may comprise SRS transmissions via each SRS resource in the first SRS resource set and/or group.

The wireless device 1805 may send (e.g., transmit), via the SRS resource, the SRS with a first transmission power determined based on the first TCI state. The wireless device 1805 may send (e.g., transmit), via the SRS resource, the SRS with a first spatial domain transmission filter/beam determined based on the first TCI state.

A wireless device 1805 may receive, via a first coreset 1838, first DCI 1830 triggering and/or scheduling transmission of a SRS. The SRS may be, for example, an aperiodic SRS. The SRS may be, for example, a semi-persistent SRS. The plurality of coresets may comprise a first coreset 1838. The first DCI 1830 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. The wireless device 1805 may send (e.g., transmit), based on the first TCI state, the SRS, for example, based on (e.g., in response to) the first DCI 1830 comprising the field with the first value indicating the first TCI state. One or more first uplink channels and/or resources may comprise SRS transmissions triggered and/or scheduled by DCIs comprising the field with the first value.

A first coreset 1838 may be associated with a first coreset pool index 1825 (e.g., CoresetPoolIndex = 0). One or more configuration parameters may indicate, for the first coreset 1838, the first coreset pool index 1825. The one or more configuration parameters may not indicate, for the first coreset 1838, a coreset pool index. The wireless device may send (e.g., transmit), based on the first TCI state, the SRS, for example, based on (e.g., in response to) receiving the first DCI 1830 triggering and/or scheduling the transmission of the SRS via the first coreset 1838 with the first coreset pool index 1825. One or more first uplink channels and/or resources may comprise SRS transmissions triggered and/or scheduled by DCIs received via one or more first coresets with the first coreset pool index 1825. A plurality of coresets may comprise one or more first coresets.

The wireless device 1805 may send (e.g., transmit) the SRS with a first transmission power determined based on the first TCI state. The wireless device 1805 may send (e.g., transmit) the SRS with a first spatial domain transmission filter/beam determined based on the first TCI state.

The wireless device may apply the first TCI state to (e.g., use the first TCI state on) one or more first downlink channels/resources of the cell. Applying the first TCI state to the one or more first downlink channels/resources may comprise receiving, via the one or more first downlink channels/resources, downlink signals based on the first TCI state. The wireless device may receive, via the one or more first downlink channels/resources, downlink signals based on the first TCI state. The wireless device may receive, via each downlink channel/resource of the one or more first downlink channels/resources, a respective downlink signal of the downlink signals based on the first TCI state

The wireless device may receive, via the one or more first downlink channels/resources, the downlink signals with a first spatial domain reception/receiving filter/beam determined based on the first TCI state. The wireless device may receive, via each downlink channel/resource of the one or more first downlink channels/resources, a respective downlink signal with the first spatial domain reception/receiving filter/beam determined based on the first TCI state. For example, the wireless device may receive, via a first downlink channel/resource of the one or more first downlink channels/resources, a first downlink signal with the first spatial domain reception/receiving filter/beam determined based on the first TCI state. At least one DM-RS antenna port of the first downlink signal may be (e.g., quasi) co-located with the first reference signal indicated by the first TCI state. The wireless device may receive, via a second downlink channel/resource of the one or more first downlink channels/resources, a second downlink signal with the first spatial domain reception/receiving filter/beam determined based on the first TCI state. At least one DM-RS antenna port of the second downlink signal may be (e.g., quasi) co-located with the first reference signal indicated by the first TCI state.

The one or more first downlink channels/resources may be/comprise a PDSCH. The one or more first downlink channels/resources may be/comprise one or more first PDSCH resources. The one or more first downlink channels/resources may be/comprise one or more first PDSCH transmissions.

The wireless device may receive, via a first coreset, first DCI scheduling a first PDSCH reception. The plurality of coresets may comprise the first coreset. The first DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive/perform, based on the first TCI state, the first PDSCH reception based on (e.g., in response to) the first DCI comprising the field with the first value indicating the first TCI state. The one or more first downlink channels/resources may be/comprise PDSCH receptions scheduled by DCI messages comprising the field with the first value. Each DCI message of the DCI messages may schedule one or more PDSCH receptions of the PDSCH receptions.

The first coreset may be associated with the first coreset pool index (e.g., CoresetPoolIndex = 0). For example, the one or more configuration parameters may indicate, for the first coreset, the first coreset pool index. For example, the one or more configuration parameters may not indicate, for the first coreset, a coreset pool index. The wireless device may receive/perform, based on the first TCI state, the first PDSCH reception. The wireless device may receive/perform the first PDSCH reception, for example, based on (e.g., in response to) receiving the first DCI scheduling the first PDSCH reception via the first coreset (e.g. ,having the first coreset pool index). The one or more first downlink channels/resources may be/comprise the first PDSCH reception. The one or more first downlink channels/resources may be/comprise PDSCH receptions scheduled by DCI (e.g., DCI messages) received via one or more first coresets with the first coreset pool index. The plurality of coresets may comprise the one or more first coresets.

The wireless device may receive the first PDSCH reception with a first spatial domain reception/receiving filter/beam determined based on the first TCI state. At least one first DM-RS antenna port of the first PDSCH reception may be (e.g., quasi) co-located with the first reference signal indicated by the first TCI state.

The one or more configuration parameters may indicate, for an SPS PDSCH configuration, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive/perform, based on the first TCI state, PDSCH receptions of/for the SPS PDSCH configuration. The wireless device may receive/perform PDSCH receptions of/for the SPS PDSCH configuration, for example, based on (e.g., in response to) the one or more configuration parameters indicating, for the SPS PDSCH configuration, the field with the first value that indicates the first TCI state. The one or more first downlink channels/resources may be/comprise the PDSCH transmissions of/for the SPS PDSCH configuration.

The wireless device may receive the PDSCH receptions with a first spatial domain reception/receiving filter/beam determined based on the first TCI state. At least one first DM-RS antenna port of the PDSCH receptions (and/or each PDSCH reception of the PDSCH receptions) may be (e.g., quasi) co-located with the first reference signal indicated by the first TCI state.

The one or more first downlink channels/resources may be/comprise PDCCH. The one or more first downlink channels/resources may be/comprise one or more first PDCCH resources. The one or more first downlink channels/resources may be/comprise one or more first PDCCH resource sets/groups. The one or more first downlink channels/resources may be/comprise one or more first PDCCH receptions. The one or more first downlink channels/resources may be/comprise one or more first coresets. The plurality of coresets may comprise the one or more first coresets.

The one or more configuration parameters may indicate, for a first coreset, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive/perform, based on the first TCI state, a downlink signal (e.g., DCI, PDCCH reception, PDCCH reception with/carrying DCI) via the first coreset. The wireless device may receive/perform the downlink signal via the first coreset, for example, based on (e.g., in response to) the one or more configuration parameters indicating, for the first coreset, the field with the first value that indicates the first TCI state. The one or more first downlink channels/resources may be/comprise PDCCH receptions via the first coreset. The one or more first coresets may comprise the first coreset.

The one or more configuration parameters may indicate, for a first coreset group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The first coreset group may comprise one or more first coresets of the plurality of coresets. The wireless device may receive/perform, based on the first TCI state, a downlink signal (e.g., DCI, PDCCH reception) via a first coreset in the first coreset group. The wireless device may receive/perform, the downlink signal via the first coreset, for example, based on (e.g., in response to) the one or more configuration parameters indicating, for the first coreset group, the field with the first value that indicates the first TCI state. The wireless device may receive/perform, based on the first TCI state, a respective downlink signal (e.g., DCI, PDCCH reception) via each coreset in the first coreset group. The wireless device may receive/perform the respective downlink signal, for example, based on (e.g., in response to) the one or more configuration parameters indicating, for the first coreset group, the field with the first value that indicates the first TCI state. The one or more first downlink channels/resources may be/comprise PDCCH receptions via each coreset in the first coreset group.

The wireless device may receive the downlink signal with a first spatial domain reception/receiving filter/beam determined based on the first TCI state. At least one first DM-RS antenna port of the downlink signal may be (e.g., quasi) co-located with the first reference signal indicated by the first TCI state.

The first coreset may be associated with the first coreset pool index (e.g., CoresetPoolIndex = 0). For example, the one or more configuration parameters may indicate, for the first coreset, the first coreset pool index. For example, the one or more configuration parameters may not indicate, for the first coreset, a coreset pool index (e.g., default coreset pool index = 0). The wireless device may receive/perform, based on the first TCI state, a first PDCCH reception (e.g., DCI or comprising/carrying/with DCI) via the first coreset, for example, in response the first coreset being associated with the first coreset pool index. The one or more first downlink channels/resources may be/comprise PDCCH receptions via one or more first coresets with the first coreset pool index. The plurality of coresets may comprise the one or more first coresets. The one or more first coresets may comprise the first coreset.

The wireless device may receive the first PDCCH reception with a first spatial domain reception/receiving filter/beam determined based on the first TCI state. At least one first DM-RS antenna port of the first PDCCH reception may be quasi co-located with the first reference signal indicated by the first TCI state.

One or more first downlink channels/resources may be/comprise CSI-RS. The one or more first downlink channels/resources may be/comprise one or more first CSI-RS resources. The one or more first downlink channels/resources may be/comprise one or more first CSI-RS resource sets/groups. The one or more first downlink channels/resources may be/comprise one or more first CSI-RS receptions.

The one or more configuration parameters may indicate, for a first CSI-RS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0) indicating the first TCI state. The wireless device may receive, based on the first TCI state, a CSI-RS via the first CSI-RS resource. The wireless device may receive the CSI-RS via the first CSI-RS resource, for example, based on (e.g., in response to) the one or more configuration parameters indicating, for the first CSI-RS resource, the field with the first value that indicates the first TCI state. The one or more first downlink channels/resources may be/comprise CSI-RS receptions via the first CSI-RS resource.

The one or more configuration parameters may indicate, for a first CSI-RS resource set/group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive, based on the first TCI state, a CSI-RS via a CSI-RS resource in the first CSI-RS resource set/group. the wireless device may receive the CSI-RS via the CSI-RS resource in the first CSI-RS resource set/group, for example, based on (e.g., in response to) the one or more configuration parameters indicating, for the first CSI-RS resource set/group, the field with the first value that indicates the first TCI state. The wireless device may receive, based on the first TCI state, a respective CSI-RS via each CSI-RS resource in the first CSI-RS resource set/group. The wireless device may receive the respective CSI-RS via each CSI-RS resource in the first CSI-RS resource set/group, for example, based on (e.g., in response to) the one or more configuration parameters indicating, for the first CSI-RS resource set/group, the field with the first value that indicates the first TCI state. The one or more first downlink channels/resources may be/comprise CSI-RS receptions via each CSI-RS resource in the first CSI-RS resource set/group.

The wireless device may receive, via a first coreset, a first DCI triggering/scheduling reception of a CSI-RS. The CSI-RS may be, for example, an aperiodic CSI-RS. The CSI-RS may be, for example, a semi-persistent CSI-RS. The plurality of coresets may comprise the first coreset. The first DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive, based on the first TCI state, the CSI-RS. The wireless device may receive the CSI-RS, for example, based on (e.g., in response to) the first DCI comprising the field with the first value indicating the first TCI state. The one or more first downlink channels/resources may be/comprise CSI-RS receptions triggered/scheduled by DCIs comprising the field with the first value.

The first coreset may be associated with the first coreset pool index (e.g., CoresetPoolIndex = 0). For example, the one or more configuration parameters may indicate, for the first coreset, the first coreset pool index. For example, the one or more configuration parameters may not indicate, for the first coreset, a coreset pool index. The wireless device may receive, based on the first TCI state, the CSI-RS. The wireless device may receive the CSI-RS, for example, based on (e.g., in response to) receiving the first DCI triggering/scheduling the reception of the CSI-RS via the first coreset with the first coreset pool index. The one or more first downlink channels/resources may be/comprise CSI-RS receptions triggered/scheduled by DCIs received via one or more first coresets with the first coreset pool index. The plurality of coresets may comprise the one or more first coresets.

The wireless device may receive and/or measure and/or assess the CSI-RS with a first spatial domain reception and/or receiving filter/beam determined based on the first TCI state. The wireless device may receive and/or measure and/or assess a radio link quality (e.g., RSRP, BLER, SINR, SNR) of the CSI-RS with the first spatial domain reception and/or receiving filter and/or beam determined based on the first TCI state.

The wireless device may apply the second TCI state to (e.g., use the second TCI state on) one or more second uplink channels/resources of the cell. Applying the first TCI state to the one or more second uplink channels/resources may comprise sending (e.g., transmitting), via the one or more second uplink channels/resources, uplink signals based on the second TCI state. The wireless device may send (e.g., transmit), via the one or more second uplink channels and/or resources, uplink signals based on the second TCI state. The wireless device may send (e.g., transmit), via each uplink channel and/or resource of the one or more second uplink channels and/or resources, a respective uplink signal of the uplink signals based on the second TCI state.

A wireless device may send (e.g., transmit), via one or more second uplink channels and/or resources, uplink signals with transmission powers determined based on a second TCI state. The wireless device may send (e.g., transmit), via each uplink channel and/or resource of the one or more second uplink channels and/or resources, an uplink signal with a respective transmission power determined based on the second TCI state. The wireless device may send (e.g., transmit), via a first uplink channel and/or resource of the one or more second uplink channels and/or resources, a first uplink signal with a first transmission power determined based on the second TCI state. The wireless device may determine the first transmission power based on one or more second power control parameters (e.g., target received power, pathloss compensation factor, closed-loop index, pathloss reference signal) associated with, mapped to, indicated by, and/or included in the second TCI state. The wireless device may send (e.g., transmit), via a second uplink channel and/or resource of the one or more second uplink channels and/or resources, a second uplink signal with a second transmission power determined based on the second TCI state. The wireless device may determine the second transmission power based on one or more second power control parameters (e.g., target received power, pathloss compensation factor, closed-loop index, pathloss reference signal) associated with, mapped to, indicated by, and/or included in the second TCI state.

A wireless device may send (e.g., transmit), via one or more second uplink channels and/or resources, uplink signals with a second spatial domain transmission filter and/or beam determined based on a second TCI state. The wireless device may send (e.g., transmit), via each uplink channel and/or resource of the one or more second uplink channels and/or resources, a respective uplink signal with the second spatial domain transmission filter and/or beam determined based on the second TCI state. The wireless device may send (e.g., transmit), via a first uplink channel and/or resource of the one or more second uplink channels and/or resources, a first uplink signal with the second spatial domain transmission filter and/or beam determined based on the second TCI state. At least one DM-RS antenna port of the first uplink signal may be quasi co-located with the second reference signal indicated by the second TCI state. The wireless device may send (e.g., transmit), via a second uplink channel and/or resource of the one or more second uplink channels and/or resources, a second uplink signal with the second spatial domain transmission filter and/or beam determined based on the second TCI state. At least one DM-RS antenna port of the second uplink signal may be quasi co-located with the second reference signal indicated by the second TCI state.

One or more second uplink channels and/or resources may comprise PUSCH. The one or more second uplink channels and/or resources may comprise one or more second PUSCH resources. The one or more second uplink channels and/or resources may comprise one or more second PUSCH transmissions.

A wireless device may receive, via a second coreset 1858, second DCI 1850 scheduling a second PUSCH transmission. A plurality of coresets may comprise the second coreset 1858. The second DCI 1850 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. The wireless device may send (e.g., transmit), based on the second TCI state, the second PUSCH transmission based on (e.g., in response to) the second DCI 1850 comprising a field with a second value indicating the second TCI state. One or more second uplink channels and/or resources may comprise PUSCH transmissions scheduled by DCIs comprising the field with the second value. Each DCI of the DCIs may schedule one or more PUSCH transmissions of the PUSCH transmissions.

A second coreset 1858 may be associated with a second coreset pool index 1845 (e.g., CoresetPoolIndex = 1). One or more configuration parameters may indicate, for the second coreset 1858, the second coreset pool index 1845. A wireless device 1805 may send (e.g., transmit), based on the second TCI state, the second PUSCH transmission, for example, based on (e.g., in response to) receiving the second DCI 1850 scheduling the second PUSCH transmission via the second coreset 1858 with the second coreset pool index 1845. One or more second uplink channels and/or resources may comprise PUSCH transmissions scheduled by DCIs received via one or more second coresets with the second coreset pool index 1845. A plurality of coresets may comprise the one or more second coresets.

The wireless device 1805 may send (e.g., transmit) the second PUSCH transmission with a second transmission power determined based on the second TCI state. The wireless device 1805 may send (e.g., transmit) the second PUSCH transmission with a second spatial domain transmission filter/beam determined based on the second TCI state.

One or more configuration parameters may indicate, for a configured uplink grant, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. A wireless device may send (e.g., transmit), based on the second TCI state, PUSCH transmissions of the configured uplink grant, for example, based on (e.g., in response to) the one or more configuration parameters indicating, for the configured uplink grant, the field with the second value that indicates the second TCI state. The configured uplink grant may be, for example, a Type 1 configured uplink grant. One or more second uplink channels and/or resources may comprise the PUSCH transmissions of the configured uplink grant.

The wireless device 1805 may send (e.g., transmit) the PUSCH transmissions of the configured uplink grant with a second transmission power determined based on the second TCI state. The wireless device 1805 may send (e.g., transmit) the PUSCH transmissions of the configured uplink grant with a second spatial domain transmission filter/beam determined based on the second TCI state.

One or more second uplink channels and/or resources may comprise PUCCH. The one or more second uplink channels and/or resources may comprise one or more second PUCCH resources. The one or more second uplink channels and/or resources may comprise one or more second PUCCH resource sets and/or groups. The one or more second uplink channels and/or resources may comprise one or more second PUCCH transmissions.

One or more configuration parameters may indicate, for a second PUCCH resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. A wireless device may send (e.g., transmit), based on the second TCI state, an uplink signal (e.g., SR, HARQ-ACK, CSI report, uplink control information) via the second PUCCH resource, for example, based on (e.g., in response to) the one or more configuration parameters indicating, for the second PUCCH resource, a field with a second value that may indicate the second TCI state. One or more second uplink channels and/or resources may comprise PUCCH transmissions via the second PUCCH resource.

The wireless device 1805 may send (e.g., transmit), via the second PUCCH resource, the uplink signal with a second transmission power determined based on the second TCI state. The wireless device 1805 may send (e.g., transmit), via the second PUCCH resource, the uplink signal with a second spatial domain transmission filter/beam determined based on the second TCI state.

One or more configuration parameters may indicate, for a second PUCCH resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. A wireless device may send (e.g., transmit), based on the second TCI state, an uplink signal (e.g., SR, HARQ-ACK, CSI report, uplink control information) via a PUCCH resource in the second PUCCH resource set and/or group, for example, based on (e.g., in response to) the one or more configuration parameters indicating, for the second PUCCH resource set and/or group, a field with a second value that indicates the second TCI state. The wireless device may send (e.g., transmit), based on the second TCI state, a respective uplink signal (e.g., SR, HARQ-ACK, CSI report, uplink control information) via each PUCCH resource in the second PUCCH resource set and/or group, for example, based on (e.g., in response to) the one or more configuration parameters indicating, for the second PUCCH resource set and/or group, the field with the second value that indicates the second TCI state. One or more second uplink channels and/or resources may comprise PUCCH transmissions via each PUCCH resource in the second PUCCH resource set and/or group.

The wireless device 1805 may send (e.g., transmit), via the PUCCH resource, the uplink signal with a second transmission power determined based on the second TCI state. The wireless device 1805 may send (e.g., transmit), via the PUCCH resource, the uplink signal with a second spatial domain transmission filter/beam determined based on the second TCI state.

A wireless device 1805 may receive, via a second coreset 1858, second DCI 1850 triggering and/or scheduling transmission of a second PUCCH transmission (e.g., HARQ-ACK feedback transmission). The second DCI 1850 may, for example, schedule a PDSCH reception. The second DCI 1850 may, for example, indicate SCell dormancy. The second DCI 1850 may, for example, indicate SPS PDSCH release. The second DCI 1850 may, for example, indicate activation of a unified TCI state. A plurality of coresets may comprise the second coreset 1858. The second DCI 1850 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) that may indicate the second TCI state. The wireless device may send (e.g., transmit), based on the second TCI state, the second PUCCH transmission, for example, based on (e.g., in response to) the second DCI 1850 comprising a field with a second value that indicates the second TCI state. One or more second uplink channels and/or resources may comprise PUCCH transmissions triggered and/or scheduled by DCIs comprising the field with the second value.

A second coreset 1858 may be associated with a second coreset pool index 1845 (e.g., CoresetPoolIndex = 1). One or more configuration parameters may indicate, for the second coreset 1858, the second coreset pool index 1845. A wireless device 1805 may send (e.g., transmit), based on a second TCI state, a second PUCCH transmission, for example, based on (e.g., in response to) receiving the second DCI 1850 triggering and/or scheduling the second PUCCH transmission via the second coreset 1858 with the second coreset pool index 1845. One or more second uplink channels and/or resources may comprise PUCCH transmissions triggered and/or scheduled by DCIs received via one or more second coresets with the second coreset pool index 1845. A plurality of coresets may comprise one or more second coresets.

The wireless device 1805 may send (e.g., transmit) the second PUCCH transmission with a second transmission power determined based on the second TCI state. The wireless device 1805 may send (e.g., transmit) the second PUCCH transmission with a second spatial domain transmission filter/beam determined based on the second TCI state.

One or more second uplink channels and/or resources may comprise SRS. The one or more second uplink channels and/or resources may comprise one or more second SRS resources. The one or more second uplink channels and/or resources may comprise one or more second SRS resource sets and/or groups. The one or more second uplink channels and/or resources may comprise one or more second SRS transmissions.

One or more configuration parameters may indicate, for a second SRS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1) indicating a second TCI state. A wireless device may send (e.g., transmit), based on the second TCI state, a SRS via the second SRS resource, for example, based on (e.g., in response to) the one or more configuration parameters indicating, for the second SRS resource, a field with a second value that indicates the second TCI state. One or more second uplink channels and/or resources may comprise SRS transmissions via the second SRS resource.

The wireless device 1805 may send (e.g., transmit), via the second SRS resource, the SRS with a second transmission power determined based on the second TCI state. The wireless device 1805 may send (e.g., transmit), via the second SRS resource, the SRS with a second spatial domain transmission filter/beam determined based on the second TCI state.

One or more configuration parameters may indicate, for a second SRS resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1) indicating a second TCI state. The wireless device may send (e.g., transmit), based on the second TCI state, a SRS via a SRS resource in the second SRS resource set and/or group, for example, based on (e.g., in response to) the one or more configuration parameters indicating, for the second SRS resource set and/or group, the field with the second value that indicates the second TCI state. A wireless device may send (e.g., transmit), based on the second TCI state, a respective SRS via each SRS resource in the second SRS resource set and/or group, for example, based on (e.g., in response to) the one or more configuration parameters indicating, for the second SRS resource set and/or group, the field with the second value that indicates the second TCI state. One or more second uplink channels and/or resources may comprise SRS transmissions via each SRS resource in the second SRS resource set and/or group.

The wireless device 1805 may send (e.g., transmit), via the SRS resource, the SRS with a second transmission power determined based on the second TCI state. The wireless device 1805 may send (e.g., transmit), via the SRS resource, the SRS with a second spatial domain transmission filter/beam determined based on the second TCI state.

A wireless device 1805 may receive, via a second coreset 1858, second DCI 1850 triggering and/or scheduling transmission of a SRS. The SRS may be, for example, an aperiodic SRS. The SRS may be, for example, a semi-persistent SRS. A plurality of coresets may comprise the second coreset 1858. The second DCI 1850 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) that may indicate a second TCI state. A wireless device 1805 may send (e.g., transmit), based on the second TCI state, the SRS, for example, based on (e.g., in response to) the second DCI 1850 comprising a field with a second value indicating the second TCI state. One or more second uplink channels and/or resources may comprise SRS transmissions triggered and/or scheduled by DCIs comprising the field with the second value.

A second coreset 1858 may be associated with a second coreset pool index 1845 (e.g., CoresetPoolIndex = 1). One or more configuration parameters may indicate, for the second coreset 1858, the second coreset pool index 1845. A wireless device may send (e.g., transmit), based on the second TCI state, the SRS, for example, based on (e.g., in response to) receiving the second DCI 1850 triggering and/or scheduling the transmission of the SRS via the second coreset 1858 with the second coreset pool index 1845. One or more second uplink channels and/or resources may comprise SRS transmissions triggered and/or scheduled by DCIs received via one or more second coresets with the second coreset pool index 1845. A plurality of coresets may comprise the one or more second coresets.

The wireless device 1805 may send (e.g., transmit) the SRS with a second transmission power determined based on the second TCI state. The wireless device 1805 may send (e.g., transmit) the SRS with a second spatial domain transmission filter/beam determined based on the second TCI state.

A wireless device may apply the second TCI state to (e.g., use the second TCI state for) one or more second downlink channels/resources of the cell. Applying the second TCI state to (e.g., using the second TCI state for) the one or more second downlink channels/resources may comprise receiving, via the one or more second downlink channels/resources, downlink signals based on the second TCI state. The wireless device may receive, via the one or more second downlink channels/resources, downlink signals based on the second TCI state. The wireless device may receive, via each downlink channel/resource of the one or more second downlink channels/resources, a respective downlink signal of the downlink signals based on the second TCI state

The wireless device may receive, via the one or more second downlink channels/resources, the downlink signals with a second spatial domain reception/receiving filter/beam determined based on the second TCI state. The wireless device may receive, via each downlink channel/resource of the one or more second downlink channels/resources, a respective downlink signal with the second spatial domain reception/receiving filter/beam determined based on the second TCI state. For example, the wireless device may receive, via a first downlink channel/resource of the one or more second downlink channels/resources, a first downlink signal with the second spatial domain reception/receiving filter/beam determined based on the second TCI state. At least one DM-RS antenna port of the first downlink signal may be (e.g., quasi) co-located with the second reference signal indicated by the second TCI state. The wireless device may receive, via a second downlink channel/resource of the one or more second downlink channels/resources, a second downlink signal with the second spatial domain reception/receiving filter/beam determined based on the second TCI state. At least one DM-RS antenna port of the second downlink signal may be quasi co-located with the second reference signal indicated by the second TCI state.

The one or more second downlink channels/resources may be/comprise a PDSCH. The one or more second downlink channels/resources may be/comprise one or more second PDSCH resources. The one or more second downlink channels/resources may be/comprise one or more second PDSCH transmissions.

The wireless device may receive, via a second coreset, second DCI scheduling a second PDSCH reception. The plurality of coresets may comprise the second coreset. The second DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive/perform, based on the second TCI state, the second PDSCH reception. The second device may receive/perform the second PDSCH reception based on (e.g., in response to) the second DCI comprising the field with the second value indicating the second TCI state. The one or more second downlink channels/resources may be/comprise PDSCH receptions scheduled via (e.g., by) DCI (e.g., DCI messages) comprising the field with the second value. Each DCI message of the DCI messages may schedule one or more PDSCH receptions of the PDSCH receptions.

The second coreset may be associated with the second coreset pool index (e.g., CoresetPoolIndex = 1). For example, the one or more configuration parameters may indicate, for the second coreset, the second coreset pool index. The wireless device may receive/perform, based on the second TCI state, the second PDSCH reception. The wireless device may receive/perform the second PDSCH reception, for example, based on (e.g., in response to) receiving the second DCI scheduling the second PDSCH reception via the second coreset with the second coreset pool index. The one or more second downlink channels/resources may be/comprise the second PDSCH reception. The one or more second downlink channels/resources may be/comprise PDSCH receptions scheduled by DCIs received via one or more second coresets with the second coreset pool index. The plurality of coresets may comprise the one or more second coresets.

The wireless device may receive the second PDSCH reception via (e.g., using/via/based on) a second spatial domain reception/receiving filter/beam determined based on the second TCI state. At least one second DM-RS antenna port of the second PDSCH reception may be (e.g., quasi) co-located with the second reference signal indicated by the second TCI state.

The one or more configuration parameters may indicate, for an SPS PDSCH configuration, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive/perform, based on the second TCI state, PDSCH receptions of/for the SPS PDSCH configuration. The wireless device may receive/perform the PDSCH receptions of/for the SPS PDSCH configuration, for example, based on (e.g., in response to) the one or more configuration parameters indicating, for the SPS PDSCH configuration, the field with the second value that indicates the second TCI state. The one or more second downlink channels/resources may be/comprise the PDSCH transmissions of/for the SPS PDSCH configuration.

The wireless device may receive the PDSCH receptions with a second spatial domain reception/receiving filter/beam determined based on the second TCI state. At least one second DM-RS antenna port of the PDSCH receptions (or each PDSCH reception of the PDSCH receptions) may be (e.g., quasi) co-located with the second reference signal indicated by the second TCI state.

The one or more second downlink channels/resources may be/comprise PDCCH. The one or more second downlink channels/resources may be/comprise one or more second PDCCH resources. The one or more second downlink channels/resources may be/comprise one or more second PDCCH resource sets/groups. The one or more second downlink channels/resources may be/comprise one or more second PDCCH receptions. The one or more second downlink channels/resources may be/comprise one or more second coresets. The plurality of coresets may comprise the one or more second coresets.

The one or more configuration parameters may indicate, for a second coreset, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive/perform, based on the second TCI state, a downlink signal (e.g., DCI, PDCCH reception, PDCCH reception with/carrying DCI) via the second coreset. The wireless device may receive/perform the downlink signal via the second coreset, for example, based on (e.g., in response to) the one or more configuration parameters indicating, for the second coreset, the field with the second value that indicates the second TCI state. The one or more second downlink channels/resources may be/comprise PDCCH receptions via the second coreset. The one or more second coresets may comprise the second coreset.

The one or more configuration parameters may indicate, for a second coreset group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The second coreset group may comprise one or more second coresets of the plurality of coresets. The wireless device may receive/perform, based on the second TCI state, a downlink signal (e.g., DCI, PDCCH reception) via a second coreset in the second coreset group. The wireless device may receive/perform the downlink signal via the second coreset in the second coreset group, for example, based on (e.g., in response to) the one or more configuration parameters indicating, for the second coreset group, the field with the second value that indicates the second TCI state. The wireless device may receive/perform, based on the second TCI state, a respective downlink signal (e.g., DCI, PDCCH reception) via each coreset in the second coreset group. The wireless device may receive/perform the respective downlink signal via each coreset in the second coreset group, for example, based on (e.g., in response to) the one or more configuration parameters indicating, for the second coreset group, the field with the second value that indicates the second TCI state. The one or more second downlink channels/resources may be/comprise PDCCH receptions via each coreset in the second coreset group.

The wireless device may receive the downlink signal with a second spatial domain reception/receiving filter/beam determined based on the second TCI state. At least one second DM-RS antenna port of the downlink signal may be quasi co-located with the second reference signal indicated by the second TCI state.

The second coreset may be associated with the second coreset pool index (e.g., CoresetPoolIndex = 1). For example, the one or more configuration parameters may indicate, for the second coreset, the second coreset pool index. The wireless device may receive/perform, based on the second TCI state, a second PDCCH reception (e.g., DCI or comprising/carrying/with DCI) via the second coreset. The wireless device may receive/perform a second PDCCH reception via the second coreset, for example, in response the second coreset being associated with the second coreset pool index. The one or more second downlink channels/resources may be/comprise PDCCH receptions via one or more second coresets with the second coreset pool index. The plurality of coresets may comprise the one or more second coresets. The one or more second coresets may comprise the second coreset.

The wireless device may receive the second PDCCH reception with a second spatial domain reception/receiving filter/beam determined based on the second TCI state. At least one second DM-RS antenna port of the second PDCCH reception may be quasi co-located with the second reference signal indicated by the second TCI state.

The one or more second downlink channels/resources may be/comprise CSI-RS. The one or more second downlink channels/resources may be/comprise one or more second CSI-RS resources. The one or more second downlink channels/resources may be/comprise one or more second CSI-RS resource sets/groups. The one or more second downlink channels/resources may be/comprise one or more second CSI-RS receptions.

The one or more configuration parameters may indicate, for a second CSI-RS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1) indicating the second TCI state. The wireless device may receive, based on the second TCI state, a CSI-RS via the second CSI-RS resource. The wireless device may receive the CSI-RS via the second CSI-RS resource, for example, based on (e.g., in response to) the one or more configuration parameters indicating, for the second CSI-RS resource, the field with the second value that indicates the second TCI state. The one or more second downlink channels/resources may be/comprise CSI-RS receptions via the second CSI-RS resource.

The one or more configuration parameters may indicate, for a second CSI-RS resource set/group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive, based on the second TCI state, a CSI-RS via a CSI-RS resource in the second CSI-RS resource set/group. The wireless device may receive the CSI-RS via a CSI-RS resource in the second CSI-RS resource set/group, for example, based on (e.g., in response to) the one or more configuration parameters indicating, for the second CSI-RS resource set/group, the field with the second value that indicates the second TCI state. The wireless device may receive, based on the second TCI state, a respective CSI-RS via each CSI-RS resource in the second CSI-RS resource set/group. The wireless device may receive the respective CSI-RS via each CSI-RS resource in the second CSI-RS resource set/group, for example, based on (e.g., in response to) the one or more configuration parameters indicating, for the second CSI-RS resource set/group, the field with the second value that indicates the second TCI state. The one or more second downlink channels/resources may be/comprise CSI-RS receptions via each CSI-RS resource in the second CSI-RS resource set/group.

The wireless device may receive, via a second coreset, a second DCI triggering/scheduling reception of a CSI-RS. The CSI-RS may be, for example, an aperiodic CSI-RS. The CSI-RS may be, for example, a semi-persistent CSI-RS. The plurality of coresets may comprise the second coreset. The second DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 1, 01, 10, 11) indicating the second TCI state. The wireless device may receive, based on the second TCI state, the CSI-RS, for example, in response to the second DCI comprising the field with the second value indicating the second TCI state. The one or more second downlink channels/resources may be/comprise CSI-RS receptions triggered/scheduled by DCIs comprising the field with the second value.

The second coreset may be associated with the second coreset pool index (e.g., CoresetPoolIndex = 1). For example, the one or more configuration parameters may indicate, for the second coreset, the second coreset pool index. The wireless device may receive, based on the second TCI state, the CSI-RS. The wireless device may receive the CSI-RS, for example, based on (e.g., in response to) receiving the second DCI triggering/scheduling the reception of the CSI-RS via the second coreset with the second coreset pool index. The one or more second downlink channels/resources may be/comprise CSI-RS receptions triggered/scheduled by DCIs received via one or more second coresets with the second coreset pool index. The plurality of coresets may comprise the one or more second coresets.

The wireless device may receive/measure/determine the CSI-RS with a second spatial domain reception/receiving filter/beam determined based on the second TCI state. The wireless device may receive/measure/determine a radio link quality (e.g., RSRP, BLER, SINR, SNR) of the CSI-RS with the second spatial domain reception/receiving filter/beam determined based on the second TCI state.

The wireless device may send (e.g., transmit) an uplink transmission (e.g., PUSCH transmission, PUCCH transmission) based on the first TCI state and the second TCI state. The wireless device may send (e.g., transmit) a first portion of the uplink transmission based on the first TCI state. The wireless device may send (e.g., transmit) a second portion of the uplink transmission based on the second TCI state.

The wireless device may send (e.g., transmit) the first portion using a first transmission power determined based on the first TCI state. The wireless device may send (e.g., transmit) the first portion using a first spatial domain transmission filter/beam determined based on the first TCI state. The wireless device may send (e.g., transmit) the second portion using a second transmission power determined based on the second TCI state. The wireless device may send (e.g., transmit) the second portion using a second spatial domain transmission filter/beam determined based on the second TCI state. The wireless device may send (e.g., transmit), via an uplink resource (e.g., PUSCH resource, PUCCH resource), the uplink transmission.

The first portion may be/comprise one or more first layers (e.g., data streams) of the uplink transmission. The second portion may be/comprise one or more second layers (e.g., data streams) of the uplink transmission. The one or more configuration parameters may indicate a spatial domain multiplexing (SDM) scheme/mode. The one or more first layers may be different from the one or more second layers.

The first portion may be one or more first repetitions of the uplink transmission. The second portion may be one or more second repetitions of the uplink transmission. The one or more configuration parameters may indicate a repetition scheme (e.g., TDM repetition, FDM repetition, SDM repetition).

The first portion may be/comprise the uplink transmission. The second portion may be/comprise the uplink transmission. The one or more configuration parameters may indicate a single-frequency-network (SFN) scheme/mode. The first portion may comprise each layer (or data stream) of the uplink transmission. The second portion may comprise each layer (or data stream) of the uplink transmission.

The wireless device may receive DCI (e.g., a DCI message) scheduling the uplink transmission. The DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may send (e.g., transmit)/perform, based on the first TCI state and the second TCI state, the uplink transmission based on (e.g., in response to) the DCI comprising the field with the value indicating the first TCI state and the second TCI state.

The one or more configuration parameters may indicate, for the uplink resource (or an uplink resource group/set comprising the uplink resource), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may send (e.g., transmit)/perform, based on the first TCI state and the second TCI state, the uplink transmission. The wireless device may send the uplink transmission, for example, based on (e.g., in response to) the one or more configuration parameters indicating, for the uplink resource (and/or the uplink resource group/set), the field with the value that indicates the first TCI state and the second TCI state.

The one or more configuration parameters may not indicate, for the uplink resource (and/or an uplink resource group/set comprising the uplink resource), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like). The wireless device may send (e.g., transmit)/perform, based on the first TCI state and the second TCI state, the uplink transmission. The wireless device may send the uplink transmission, for example, based on (e.g., in response to) the one or more configuration parameters not indicating, for the uplink resource (or the uplink resource group/set), the field.

The wireless device may receive a downlink reception (e.g., PDSCH reception, PDCCH reception, DCI) based on the first TCI state and the second TCI state. The wireless device may receive a first portion of the downlink reception based on the first TCI state. The wireless device may receive a second portion of the downlink reception based on the second TCI state.

The wireless device may receive the first portion using a first spatial domain reception/receiving filter/beam determined based on the first TCI state. At least one first DM-RS antenna port of the first portion may be (e.g., quasi) co-located with the first reference signal indicated by the first TCI state. The wireless device may receive the second portion using a second spatial domain reception/receiving filter/beam determined based on the second TCI state. At least one second DM-RS antenna port of the second portion may be (e.g., quasi) co-located with the second reference signal indicated by the second TCI state. The at least one first DM-RS antenna port and the at least one second DM-RS antenna port may be, for example, the same (e.g., SFN scheme, TDM/FDM/SDM repetition scheme). The at least one first DM-RS antenna port and the at least one second DM-RS antenna port may be, for example, different (e.g., SDM scheme).

The wireless device may receive, via a coreset, the downlink reception. The plurality of coresets may comprise the coreset. The wireless device may monitor, for the downlink reception (e.g., DCI), downlink control channels in the coreset. The wireless device may monitor, for the downlink reception (e.g., DCI), the downlink control channels in the coreset based on the first TCI state and the second TCI state.

The first portion may be/comprise one or more first layers (e.g., data streams) of the downlink reception. The second portion may be/comprise one or more second layers (e.g., data streams) of the downlink reception. The one or more configuration parameters may indicate a spatial domain multiplexing (SDM) scheme/mode. The one or more first layers may be different from the one or more second layers.

The first portion may be one or more first repetitions of the downlink reception. The second portion may be one or more second repetitions of the downlink reception. The one or more configuration parameters may indicate a repetition scheme (e.g., TDM repetition, FDM repetition, SDM repetition).

The first portion may be the downlink reception. The second portion may be the downlink reception. The one or more configuration parameters may indicate a single-frequency-network (SFN) scheme/mode. The first portion may comprise each layer (or data stream) of the downlink reception. The second portion may comprise each layer (or data stream) of the downlink reception.

The wireless device may receive a DCI scheduling the downlink reception. The DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may receive/perform, based on the first TCI state and the second TCI state, the downlink reception in response to the DCI comprising the field with the value indicating the first TCI state and the second TCI state.

The one or more configuration parameters may indicate, for the coreset (and/or a coreset group/set/pool comprising the coreset), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may receive/perform, based on the first TCI state and the second TCI state, the downlink reception. The wireless device may receive/perform the downlink reception, for example, based on (e.g., in response to) the one or more configuration parameters indicating, for the coreset (and/or the coreset group/set/pool), the field with the value that indicates the first TCI state and the second TCI state.

The one or more configuration parameters may not indicate, for the coreset (or a coreset group/set/pool comprising the coreset), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like). The wireless device may receive/perform, based on the first TCI state and the second TCI state, the downlink reception. The wireless device may receive/perform the downlink reception, for example, based on (e.g., in response to) the one or more configuration parameters not indicating, for the coreset (or the coreset group/set/pool), the field.

FIG. 19 shows an example of beam management in multi-cell scheduling. A wireless device 1905 may receive the one or more configuration parameters (e.g., Configuration parameters 1920 sent/received at time T0 in FIG. 19). The one or more configuration parameters may indicate one or more sets of cells for multi-cell scheduling. A set of cells (e.g., each set of cells) of the one or more sets of cells may be configured for multi-cell scheduling. The one or more configuration parameters may indicate each set of cells of the one or more sets of cells for multi-cell scheduling. The one or more sets of cells may comprise the set of cells (e.g., Cell 1, Cell 2, Cell 3 of FIG. 19).

The one or more configuration parameters may indicate a first table (e.g., a co-scheduled cell table/list, a co-scheduled cell combinations table/list, a co-scheduled cell indicator table/list, etc., not shown in FIG. 19). The one or more configuration parameters may comprise a co-scheduled cell list parameter (e.g., *Co-ScheduledCellList, Co-ScheduledCellTable, Co-ScheduledCellCombinationsList, Co-ScheduledCellCombinationsTable, Co-ScheduledCellUplinkList, Co-ScheduledCellUplinkTable, Co-ScheduledCellCombinationsUplinkList, Co-ScheduledCellCombinationsUplinkTable, Co-ScheduledCellDownlinkList, Co-ScheduledCellDownlinkTable, Co-ScheduledCellCombinationsDownlinkList, Co-ScheduledCellCombinationsDownlinkTable*) indicating the first table. The first table may comprise/be (and/or may be denoted as or may be interchangeably used with) a first list. The one or more configuration parameters may indicate the first table for the set of cells. The first table may indicate/define combinations of co-scheduled cells for/of the set of cells. The first table may comprise/indicate one or more rows. Each row of the one or more rows in the first table may indicate respective co-scheduled cell(s) of the set of cells. For example, a first row of the one or more rows in the first table may indicate one or more first co-scheduled cells of the set of cells. A second row of the one or more rows in the first table may indicate one or more second co-scheduled cells of the set of cells.

The first table may be for downlink scheduling. The one or more configuration parameters may indicate the first table for downlink scheduling. The first table may be for uplink scheduling. The one or more configuration parameters may indicate the first table for uplink scheduling. The first table for downlink scheduling may be different from the first table for uplink scheduling. The one or more configuration parameters may indicate separate tables for the downlink scheduling and the uplink scheduling.

A maximum number of cells in the set of cells may be equal to a first value (e.g., 3, 4, 8, etc.). The first value may be preconfigured/predefined/preset. A maximum number of the one or more rows in the first table may be equal to a first value (e.g., 16). The first value may be preconfigured/predefined/preset.

For example, the set of cells may be Cell 1, Cell 2, and Cell 3, as in the example shown in FIG. 19. The first table may comprise N rows, such as six rows. A first row (e.g., row 1) in the first table may indicate/comprise Cell 2 and Cell 3. For example, the first row may comprise indices [0, 1, 1] referring to [Cell 1, Cell 2, Cell 3] or otherwise indicating values for Cell 2 and Cell 3. Cell 2 and Cell 3 may be co-scheduled cells (e.g., based on the indication in the first row). A second row in the first table may indicate/comprise Cell 1 and Cell 2. Cell 1 and Cell 2 may be co-scheduled cells (e.g., based on the indication in the second row). A third row in the first table may indicate/comprise Cell 2. Cell 2 may be a co-scheduled cell (e.g., based on the indication in the third row). A fourth row in the first table may indicate/comprise Cell 1, Cell 2, and Cell 3. Cell 1, Cell 2, and Cell 3 may be co-scheduled cells (e.g., based on the indication in the fourth row). A fifth row in the first table may indicate/comprise Cell 3. Cell 3 may be a co-scheduled cell, for example, based on the. A sixth row in the first table may indicate/comprise Cell 1 and Cell 3. Cell 1 and Cell 3 may be co-scheduled cells (e.g., based on the indication in the sixth row).

The one or more configuration parameters may indicate a time-domain resource allocation (TDRA) table (e.g., *pdsch-TimeDomainAllocationListForSingleDCIMultiPDSCH*). The TDRA table may indicate/define one or more combinations of TDRA entries for/of the set of cells. The TDRA table may comprise one or more rows. A row (e.g., each row) of the one or more rows may comprise (e.g., respective) TDRA entries for uplink transmissions and/or downlink receptions via uplink/downlink BWPs of the set of cells. TDRA entries in a row of the one or more rows of the TDRA table may be associated with the set of cells. A TDRA entry (e.g., each TDRA entry) of the TDRA entries in the row of the one or more rows in the TDRA table may be associated with a (e.g., respective) cell of the set of cells. A TDRA entry (e.g., each TDRA entry) of the TDRA entries in the row of the one or more rows in the TDRA table may be associated with downlink/uplink BWP of a (e.g., respective) cell of the set of cells. One or more TDRA entries in a column of/in the TDRA table may be associated with a respective cell of the set of cells. A TDRA entry (e.g., each TDRA entry) in the TDRA table may indicate a start and length indicator value (SLIV) indicating a slot offset, starting symbol, and/or the number of consecutive symbols for uplink/downlink transmission/reception.

The one or more configuration parameters may indicate a second table (e.g., TCI state table/list, TCI state combinations table/list, TCI state table/list for single DCI multi-cell scheduling, TCI codepoint table/list, TCI codepoint combinations table/list, TCI codepoint table/list for single DCI multi-cell scheduling , etc.). The one or more configuration parameters may comprise a TCI state list parameter (e.g., *TCI-StateListForSingleDCIMultiPDSCH, TCI-StateListForSingleDCIMultiPUSCH, TCI-StateListForSingleDCIMultiCell, TCI-CodepointListForSingleDCIMultiPDSCH, TCI-CodepointListForSingleDCIMultiPUSCH, TCI-CodepointListForSingleDCIMultiCell,* etc.) indicating the second table. The one or more configuration parameters may indicate the second table for the set of cells.

The second table may comprise/be (and/or may be denoted as or may be interchangeably used with) a second list. The TCI state list parameter may comprise/be (and/or may be interchangeably used with) a TCI codepoint list parameter. The second table may indicate one or more TCI states for downlink scheduling (e.g., PDSCH, PDCCH, CSI-RS). The one or more configuration parameters may indicate TCI states in the second table for downlink scheduling. The second table may indicate TCI states for uplink scheduling (e.g., PUSCH, PUCCH, SRS). The one or more configuration parameters may indicate TCI states in the second table for uplink scheduling. The second table indicating TCI states for downlink scheduling may be different from the second table indicating TCI states for uplink scheduling. The one or more configuration parameters may indicate separate tables for TCI state indication of/for the downlink scheduling and/or the uplink scheduling.

The second table may indicate TCI states for downlink scheduling and/or uplink scheduling. The one or more configuration parameters may indicate TCI states in the second table for downlink scheduling and/or uplink scheduling. The one or more configuration parameters may indicate the same table (e.g., the second table, a single second table) for TCI state indication of/for both the downlink scheduling and the uplink scheduling.

A maximum number of the one or more rows in the second table may be equal to a second value (e.g., 8, 16). The second value may be, for example, preconfigured/predefined/preset. For example, the one or more configuration parameters may indicate the second value.

The second table may indicate/define combinations of TCI states for/of the set of cells. The second table may comprise/indicate one or more rows. A row (e.g., each row) of the one or more rows in the second table may indicate (e.g., respective) TCI states of the set of cells. For example, the set of cells may be Cell 1, Cell 2, and Cell 3. A first row of the one or more rows in the second table may indicate first TCI states of the set of cells. The first row in the second table may indicate the first TCI states for Cell 1, Cell 2, and Cell 3. A first TCI state (e.g., in the first/starting column/entry in the first row) of the first TCI states may be associated with Cell 1. A second TCI state (e.g., in the second column/entry in the first row) of the first TCI states may be associated with Cell 2. A third TCI state (e.g., in the third column/entry in the first row) of the first TCI states may be associated with Cell 3. A second row of the one or more rows in the second table may indicate second TCI states of the set of cells. The second row in the second table may indicate the second TCI states for Cell 1, Cell 2, and Cell 3. A first TCI state (e.g., in the first/starting column/entry in the second row) of the second TCI states may be associated with Cell 1. A second TCI state (e.g., in the second starting column/entry in the second row) of the second TCI states may be associated with Cell 2. A third TCI state (e.g., in the third starting column/entry in the second row) of the second TCI states may be associated with Cell 3. In general, an Nth row of the one or more rows in the second table may indicate Nth TCI states of the set of cells. The Nth row in the second table may indicate the Nth TCI states for Cell 1, Cell 2, and Cell 3. A first TCI state (e.g., in the first/starting column/entry in the Nth row) of the Nth TCI states may be associated with Cell 1. A second TCI state (e.g., in the second column/entry in the Nth row) of the Nth TCI states may be associated with Cell 2. A third TCI state (e.g., in the third column/entry in the Nth row) of the Nth TCI states may be associated with Cell 3. The second table may comprise five rows, for example. A first row in the second table may indicate/comprise TCI state 2 for Cell 1, TCI state 34 for Cell 2, and TCI state 52 for Cell 3. A second row in the second table may indicate/comprise TCI state 23 for Cell 1, TCI state 61 for Cell 2, and TCI state 5 for Cell 3. A third row in the second table may indicate/comprise TCI state 79 for Cell 1, TCI state 1 for Cell 2, and TCI state 35 for Cell 3. A fourth row in the second table may indicate/comprise TCI state 34 for Cell 1, TCI state 11 for Cell 2, and TCI state 44 for Cell 3. A fifth row in the second table may indicate/comprise TCI state 19 for Cell 1, TCI state 1 for Cell 2, and TCI state 33 for Cell 3.

The second table may indicate/define combinations of TCI state indexes/identifiers/identities for/of the set of cells. The second table may comprise/indicate one or more rows. A row, (e.g., each row) of the one or more rows in the second table may indicate (e.g., respective) TCI state indexes of/for the set of cells. For example, the set of cells may be Cell 1, Cell 2, and Cell 3. A first row of the one or more rows in the second table may indicate first TCI state indexes of/for the set of cells. The first row in the second table may indicate the first TCI state indexes for Cell 1, Cell 2, and Cell 3, for example. A first TCI state index (e.g., in the first/starting column/entry in the first row) of the first TCI state indexes may be associated with Cell 1. The first TCI state index (of the first TCI state indexes) may indicate/identify a first first TCI state of one or more first TCI states of Cell 1 (e.g., one or more first TCI states defined/configured in either *tci-StatesToAddModList* or *dl-OrJointTCI-StateList* in the *PDSCH Config* included in the BWP-Downlink of Cell 1). The one or more configuration parameters may indicate, for Cell 1, the one or more first TCI states. The one or more configuration parameters may indicate, for the first first TCI state, the first TCI state index (of the first TCI state indexes). A second TCI state index (e.g., in the second column/entry in the first row) of the first TCI state indexes may be associated with Cell 2. The second TCI state index (of the first TCI state indexes) may indicate/identify a first second TCI state of one or more second TCI states of Cell 2 (e.g., one or more second TCI states defined/configured in either *tci-StatesToAddModList* or *dl-OrJointTCI-StateList* in the *PDSCH Config* included in the BWP-Downlink of Cell 2). The one or more configuration parameters may indicate, for Cell 2, the one or more second TCI states. The one or more configuration parameters may indicate, for the first second TCI state, the second TCI state index (of the first TCI state indexes). A third TCI state index (e.g., in the third column/entry in the first row) of the first TCI state indexes may be associated with Cell 3. The third TCI state index (of the first TCI state indexes) may indicate/identify a first third TCI state of one or more third TCI states of Cell 3 (e.g., one or more third TCI states defined/configured in either *tci-StatesToAddModList* or *dl-OrJointTCI-StateList* in the *PDSCH-Config* included in the BWP-Downlink of Cell 3). The one or more configuration parameters may indicate, for Cell 3, the one or more third TCI states. The one or more configuration parameters may indicate, for the first third TCI state, the third TCI state index (of the first TCI state indexes).

A second row of the one or more rows in the second table may indicate second TCI state indexes of/for the set of cells. The second row in the second table may indicate the second TCI state indexes for Cell 1, Cell 2, and Cell 3, for example. A first TCI state index (e.g., in the first/starting column/entry in the second row) of the second TCI state indexes may be associated with Cell 1. The first TCI state index (of the second TCI state indexes) may indicate/identify a second first TCI state of one or more first TCI states of Cell 1 (e.g., one or more first TCI states defined/configured in either *tci-StatesToAddModList* or *dl-OrJointTCI-StateList* in the *PDSCH-Config* included in the BWP-Downlink of Cell 1). The one or more configuration parameters may indicate, for Cell 1, the one or more first TCI states. The one or more configuration parameters may indicate, for the second first TCI state, the first TCI state index (of the second TCI state indexes). A second TCI state index (e.g., in the second column/entry in the second row) of the second TCI state indexes may be associated with Cell 2. The second TCI state index (of the second TCI state indexes) may indicate/identify a second second TCI state of one or more second TCI states of Cell 2 (e.g., one or more second TCI states defined/configured in either *tci-StatesToAddModList* or *dl-OrJointTCI-StateList* in the *PDSCH Config* included in the BWP-Downlink of Cell 2). The one or more configuration parameters may indicate, for Cell 2, the one or more second TCI states. The one or more configuration parameters may indicate, for the second second TCI state, the second TCI state index (of the second TCI state indexes). A third TCI state index (e.g., in the third/third -starting column/entry in the second row) of the second TCI state indexes may be associated with Cell 3. The third TCI state index (of the second TCI state indexes) may indicate/identify a second third TCI state of one or more third TCI states of Cell 3 (e.g., one or more third TCI states defined/configured in either *tci-StatesToAddModList* or *dl-OrJointTCI-StateList* in the *PDSCH Config* included in the BWP-Downlink of Cell 3). The one or more configuration parameters may indicate, for Cell 3, the one or more third TCI states. The one or more configuration parameters may indicate, for the second third TCI state, the third TCI state index (of the second TCI state indexes.

The second table may also, or alternatively, indicate/define combinations of TCI codepoints for/of the set of cells. For example, FIG. 19 shows an example second table indicating combinations of TCI codepoints for Cell 1, Cell 2, and Cell 3. The second table may comprise/indicate one or more rows (e.g., N rows, such as row 1, row 2, ..., row N-1, row N in the example second table 1925 of FIG. 19). A (e.g., each) row of the one or more rows in the second table may indicate (e.g., respective) TCI codepoints of/for the set of cells (e.g., for each cell of the set of cells).

As shown in FIG. 19, the set of cells may be Cell 1, Cell 2, and Cell 3. A first row (e.g., row 1 in FIG. 19) of the one or more rows in the second table may indicate first TCI codepoints (e.g., 001, 100, 000 in row 1 in FIG. 19) of/for the set of cells. The first row in the second table may indicate the first TCI codepoints for Cell 1, Cell 2, and Cell 3. A first TCI codepoint (e.g., in the first/starting column/entry in the first row) of the first TCI codepoints may be associated with Cell 1. The first TCI codepoint (e.g., 001 in row 1 in FIG. 19) may indicate (and/or may be mapped to) a first first TCI state of one or more first TCI states of Cell 1. A second row (e.g., row 2 in FIG. 19) of the one or more rows in the second table may indicate second TCI codepoints (e.g., 010, 111, 101 in row 2 in FIG. 19) of/for the set of cells. The second row in the second table may indicate second TCI codepoints for Cell 1, Cell 2, and Cell 3. A first TCI codepoint (e.g., in the first/starting column/entry in the second row) of the second TCI codepoints may be associated with Cell 1. The first TCI codepoint (e.g., 010 in row 2 in FIG. 19) may indicate (and/or may be mapped to) a second first TCI state of one or more first TCI states of Cell 1.

The wireless device 1905 may receive a first activation command (e.g., MAC-CE, DCI, RRC, downlink control command/message, control command/message, Unified TCI States Activation/Deactivation MAC CE, Activation command, etc.). The first activation command may indicate activation of the one or more first TCI states for Cell 1. The first activation command may indicate activation of the one or more first TCI states among a first plurality of TCI states of Cell 1 (e.g., a first plurality of TCI states defined/configured in either *tci-StatesToAddModList* or *dl-OrJointTCI-StateList* in the *PDSCH Config* included in the BWP-Downlink of Cell 1). The one or more configuration parameters may indicate, for Cell 1, the first plurality of TCI states. The first activation command may indicate mapping of the one or more first TCI states to one or more first TCI codepoints comprising the first TCI codepoint. The first activation command may indicate mapping of respective TCI state(s) of the one or more first TCI states to each TCI codepoint of the one or more first TCI codepoints. The wireless device 1905 may map the one or more first TCI states to the one or more first TCI codepoints, for example, based on (and/or after) receiving the first activation command.

A second TCI codepoint (e.g., in the second/second-starting column/entry in the first row) of the first TCI codepoints may be associated with Cell 2. The second TCI codepoint (e.g., 100 in row 1 in FIG. 19) may indicate (and/or may be mapped to) a first second TCI state of one or more second TCI states of Cell 2.

A second TCI codepoint (e.g., in the second/second-starting column/entry in the second row) of the second TCI codepoints may be associated with Cell 2. The second TCI codepoint (e.g., 111 in row 2 in FIG. 19) may indicate (and/or may be mapped to) a second second TCI state of one or more second TCI states of Cell 2.

The wireless device 1905 may receive a second activation command (e.g., MAC-CE, DCI, RRC, downlink control command/message, control command/message, Unified TCI States Activation/Deactivation MAC CE, Activation command, etc.). The second activation command may indicate activation of the one or more second TCI states for Cell 2 (e.g., Activation command 1930 sent/received at T1 in FIG. 19). The second activation command may indicate activation of the one or more second TCI states among a second plurality of TCI states of Cell 2 (e.g., a second plurality of TCI states defined/configured in either *tci-StatesToAddModList* or *dl-OrJointTCI-StateList* in the *PDSCH-Config* included in the BWP-Downlink of Cell 2). The one or more configuration parameters may indicate, for Cell 2, the second plurality of TCI states. The second activation command may indicate mapping of the one or more second TCI states to one or more second TCI codepoints comprising the first second TCI codepoint (e.g., as in table 1935 in FIG. 19). The second activation command may indicate mapping of respective TCI state(s) of the one or more second TCI states to each TCI codepoint of the one or more second TCI codepoints. The wireless device 1905 may map the one or more second TCI states to the one or more second TCI codepoints, for example, based on (e.g., after) receiving the second activation command.

A third TCI codepoint (e.g., in the third/third-starting column/entry in the first row) of the first TCI codepoints may be associated with Cell 3. The third TCI codepoint (e.g., 000 in row 1 in FIG. 19) may indicate (and/or may be mapped to) a first third TCI state of one or more third TCI states of Cell 3.

A third TCI codepoint (e.g., in the third column/entry in the second row) of the second TCI codepoints may be associated with Cell 3. The third TCI codepoint (e.g., 101 in row 2 in FIG. 19) may indicate (and/or may be mapped to) a second third TCI state of one or more third TCI states of Cell 3.

The wireless device 1905 may receive a third activation command (e.g., MAC-CE, DCI, RRC, downlink control command/message, control command/message, Unified TCI States Activation/Deactivation MAC CE, Activation command, etc.) indicating activation of the one or more third TCI states for Cell 3. The third activation command may indicate activation of the one or more third TCI states among a third plurality of TCI states of Cell 3 (e.g., a third plurality of TCI states defined/configured in either *tci-StatesToAddModList* or *dl-OrJointTCI-StateList* in the *PDSCH-Config* included in the BWP-Downlink of Cell 3). The one or more configuration parameters may indicate, for Cell 3, the third plurality of TCI states. The third activation command may indicate mapping of the one or more third TCI states to one or more third TCI codepoints comprising the first third TCI codepoint. The third activation command may indicate mapping of respective TCI state(s) of the one or more third TCI states to each TCI codepoint of the one or more third TCI codepoints. The wireless device 1905 may map the one or more third TCI states to the one or more third TCI codepoints, for example, based on (e.g., after) receiving the third activation command.

The second table may comprise one or more columns (e.g., example second table 1925 comprises column with Cell 1, column with Cell 2, column with Cell 3 in FIG. 19). Each column of the one or more columns in the second table may be associated with a cell of the set of cells. Each column of the one or more columns in the second table may indicate respective TCI state(s) for a respective cell of the set of cells. A first/starting column of the one or more columns in the second table may be associated with a first cell of the set of cells. The first/starting column may indicate/comprise at least one first TCI codepoint (and/or at least one first TCI state index) for the first cell. For example, in FIG. 19, the first/starting column in example second table 1925 is associated with Cell 1 (e.g., Cell 1 with the lowest cell index). The first/starting column may indicate/comprise the at least one first TCI codepoint (e.g., 001, 010, . , 111, 110) for Cell 1.

The one or more first TCI codepoints activated/indicated by the first activation command may comprise the at least one first TCI codepoint. The one or more first TCI codepoints mapped to the one or more first TCI states of Cell 1 may comprise the at least one first TCI codepoint.

A second column of the one or more columns in the second table may be associated with a second cell of the set of cells. The second column may indicate/comprise at least one second TCI codepoint (and/or at least one second TCI state index) for the second cell. For example, in FIG. 19, the second column in the example second table 1925 is associated with Cell 2 (e.g., Cell 2 with the second lowest cell index). The second/second-starting column may indicate/comprise the at least one second TCI codepoint (e.g., 100, 111, .., 000, 100) for Cell 2.

The one or more second TCI codepoints activated/indicated by the second activation command may comprise the at least one second TCI codepoint. The one or more second TCI codepoints mapped to the one or more second TCI states of Cell 2 may comprise the at least one second TCI codepoint.

A third column of the one or more columns in the second table may be associated with a third cell of the set of cells. The third column in the example second table 1925 may indicate/comprise at least one third TCI codepoint (and/or at least one third TCI state index) for the third cell. For example, in FIG. 19, the third column is associated with Cell 3 (e.g., Cell 3 with the third lowest cell index). The third column may indicate/comprise the at least one third TCI codepoint (e.g., 100, 111, ..., 000, 100) for Cell 3.

The one or more third TCI codepoints activated/indicated by the third activation command may comprise the at least one third TCI codepoint. The one or more third TCI codepoints mapped to the one or more third TCI states of Cell 3 may comprise the at least one third TCI codepoint.

The one or more configuration parameters may indicate a plurality of TCI states (e.g., *DLorJoint-TCIStateList*) for a cell of the set of cells. The cell may be a cell as discussed/described with respect to FIG. 17 and FIG. 18, for example. FIG. 19 shows an example in which the cell is Cell 2. For example, the one or more configuration parameters may indicate a second plurality of TCI states (e.g., *ul-TCI-StateList*) for the cell.

The wireless device 1905 may receive an activation command (e.g., MAC-CE, DCI, RRC, activation command, control command, downlink control command/message, control command/message, Unified TCI States Activation/Deactivation MAC CE; Activation command 1930 at time T1 in FIG. 19 etc.). The activation command may indicate activation of a subset of TCI states of the plurality of TCI states (e.g., *DLorJoint-TCIStateList*). The activation command may indicate activation of the subset of TCI states for the cell (e.g., Cell 2 in FIG. 19). For example, in FIG. 19, the subset of TCI states are TCI states indicated/identified by TCI state IDs in the TCI state column of the table 1935: TCI state ID 9, TCI state ID 3, TCI state ID 64, TCI state ID 46, and TCI state ID 21. The activation command may indicate activation of a subset of TCI states of the second plurality of TCI states (e.g., *ul-TCI-StateList*) (e.g., for Cell 2 in FIG. 19).

The one or more configuration parameters may indicate, for the subset of TCI states, a subset of TCI state indexes of a plurality of TCI state indexes/identifiers/identities (e.g., *TCI-StateId*) of the plurality of TCI states. The one or more configuration parameters may indicate, for each TCI state of the subset of TCI states, a respective TCI state index of the subset of TCI state indexes. The subset of TCI states may be indicated/identified by the subset of TCI state indexes. The subset of TCI state indexes may indicate/identify the subset of TCI states. Each TCI state of the subset of TCI states may be indicated/identified by a respective TCI state index of the subset of TCI state indexes. Each TCI state index of the subset of TCI state indexes may indicate/identify a respective TCI state of the subset of the TCI states.

For example, in FIG. 19, the subset of TCI state indexes are TCI state ID 9, TCI state ID 3, TCI state ID 64, TCI state ID 46, and TCI state ID 21. TCI state ID 9 may indicate/identify a first TCI state of the subset of TCI states. TCI state ID 3 may indicate/identify a second TCI state of the subset of TCI states. TCI state ID 64 may indicate/identify a third TCI state of the subset of TCI states. TCI state ID 46 may indicate/identify a fourth TCI state of the subset of TCI states. TCI state ID 21 may indicate/identify a fifth TCI state of the subset of TCI states.

The activation command may indicate/comprise the subset of TCI state indexes identifying/indicating the subset of TCI states. The wireless device 1905 may map the subset of TCI states (and/or the subset of TCI state indexes) to one or more TCI codepoints of/for the cell (e.g., according to table 1935). The wireless device 1905 may map the subset of TCI states (and/or the subset of TCI state indexes) activated/indicated for the cell to the one or more TCI codepoints of/for the cell. The activation command may indicate mapping of the subset of TCI states (and/or the subset of TCI state indexes) to the one or more TCI codepoints. The wireless device 1905 may map respective TCI state(s) of the subset of TCI states to a respective TCI codepoint of the one or more TCI codepoints. The wireless device 1905 may map respective TCI state index(es) of the subset of TCI state indexes to a respective TCI codepoint of the one or more TCI codepoints. The one or more TCI codepoints may indicate/comprise the subset of TCI states (and/or the subset of TCI state indexes). Each TCI codepoint of the one or more TCI codepoints may indicate (and/or may be mapped to) respective TCI state(s) of the subset of TCI states. Each TCI codepoint of the one or more TCI codepoints may indicate (and/or may be mapped to) respective TCI state index(es) of the subset of TCI state indexes. Each TCI codepoint of the one or more TCI codepoints may indicate/comprise (and/or be mapped to) one or more TCI states (and/or one or more TCI state indexes).

For example, in FIG. 19, the one or more TCI codepoints (e.g., in table 1935) are TCI codepoint 000, TCI codepoint 001, TCI codepoint 010, TCI codepoint 011, and TCI codepoint 100. TCI codepoint 000 may indicate/comprise (and/or be mapped to) TCI state ID 9. TCI codepoint 000 may indicate/comprise (and/or be mapped to) the first TCI state indicated/identified by TCI state ID 9. TCI codepoint 001 may indicate/comprise (and/or be mapped to) TCI state ID 3. TCI codepoint 001 may indicate/comprise (and/or be mapped to) the second TCI state indicated/identified by TCI state ID 3. TCI codepoint 010 may indicate/comprise (and/or be mapped to) TCI state ID 64. TCI codepoint 010 may indicate/comprise (and/or be mapped to) the third TCI state indicated/identified by TCI state ID 64. TCI codepoint 011 may indicate/comprise (and/or be mapped to) TCI state ID 46. TCI codepoint 011 may indicate/comprise (and/or be mapped to) the fourth TCI state indicated/identified by TCI state ID 46. TCI codepoint 100 may indicate/comprise (and/or be mapped to) TCI state ID 21. TCI codepoint 100 may indicate/comprise (and/or be mapped to) the fifth TCI state indicated/identified by TCI state ID 21.

The wireless device 1905 may receive a DCI (e.g., DCI 1940 at time T2 in FIG. 19). The DCI may comprise a field (e.g., scheduled set indicator field, scheduled cell set indicator field, etc.). The size of the field may be determined based on a number/quantity of the one or more sets of cells. For example, the size of the field may be equal to Ceil$(\log_2(N))$, where N is the number of the one or more sets of cells. Ceil(x) maps x to the least/smallest integer greater than or equal to x. For example, if N = 4, the size of the field would be Ceil$(\log_2(4))$ = Ceil(2) equal to 2. If N = 5, the size of the field would be Ceil$(\log_2(5))$ equal to 3. If N = 16, the size of the field would be Ceil$(\log_2(16))$ = Ceil(4) equal to 4. If N = 10, the size of the field would be Ceil$(\log_2(10))$ equal to 4. A value of the field may indicate the set of cells among the one or more sets of cells.

The DCI may schedule one or more cells among the set of cells. The DCI may comprise a field (e.g., co-scheduled cell indicator field, scheduled cell indicator field, etc.) indicating scheduling/co-scheduling information in the first table (e.g., indicating a row of the one or more rows in the first table). The scheduling/co-scheduling information (e.g., row) may indicate/comprise indications of the one or more cells of the set of cells. The one or more configuration parameters may indicate, for the row in the first table, the one or more cells. A value of the field of the DCI may indicate the row. For example, a value of the field being zero may indicate a first/starting row (e.g., row 1) in the first table. The row may be the first/starting row (e.g., row 1). A value of the field being 1 may indicate a second row (e.g., row 2) in the first table. The row may be the second row (e.g., row 2). A value of the field may indicate a ($n$+1)$^{th}$ row (e.g., row $n$+1) in the first table, and so on. The row may be the ($n$+1)$^{th}$ row (e.g., row $n$+1).

The one or more cells may be (and/or may be interchangeably used with) one or more co-scheduled cells. The DCI may comprise a TDRA field. The TDRA field may have a value indicating a row in the one or more rows of the TDRA table. The row may comprise TDRA entries for the set of cells. A (e.g. each) TDRA entry of the TDRA entries of the row may be associated with (e.g., be for) a (e.g., respective) cell of the set of cells. The row may comprise one or more TDRA entries of the one or more cells. The TDRA entries of the set of cells may comprise the one or more TDRA entries of the one or more cells. A (e.g., each) TDRA entry of the one or more TDRA entries may be associated with (e.g., be for) a (e.g., respective) cell of the one or more cells.

The DCI may schedule, for example, one or more uplink transmissions (e.g., PUSCH transmissions) for the one or more cells. The DCI may schedule each uplink transmission of the one or more uplink transmissions for a respective cell of the one or more cells. The DCI may indicate one or more uplink resources (e.g., PUSCH resources) for the one or more uplink transmissions. The DCI may indicate each uplink resource of the one or more uplink resources for a respective uplink transmission of the one or more uplink transmissions.

The wireless device 1905 may determine the one or more uplink resources of the one or more uplink transmissions, for example, based on the one or more TDRA entries in the row of the TDRA table. The wireless device 1905 may determine an (e.g., each) uplink resource of the one or more uplink resources based on a (e.g., respective) TDRA entry of the one or more TDRA entries. The wireless device 1905 may determine an (e.g., each) uplink resource of the one or more uplink resources based on SLIV indicated by a (e.g., respective) TDRA entry of the one or more TDRA entries.

For example, the DCI may schedule a first uplink transmission (e.g., a first PUSCH transmission) of the one or more uplink transmissions for a first cell of the one or more cells. The DCI may indicate a first uplink resource of the one or more uplink resources for the first uplink transmission. A first TDRA entry, in the one or more TDRA entries, associated with the first cell may indicate the first uplink resource. The DCI may schedule a second uplink transmission (e.g., a second PUSCH transmission) of the one or more uplink transmissions for a second cell of the one or more cells. The DCI may indicate a second uplink resource of the one or more uplink resources for the second uplink transmission. A second TDRA entry, in the one or more TDRA entries, associated with the second cell may indicate the second uplink resource.

The DCI may schedule, for example, one or more downlink receptions (e.g., PDSCH receptions) for the one or more cells. The DCI may schedule a (e.g., each) downlink reception of the one or more downlink receptions for a (e.g., respective) cell of the one or more cells. The DCI may indicate one or more downlink resources (e.g., PDSCH resource) for the one or more downlink receptions. The DCI may indicate a (e.g., each) downlink resource of the one or more downlink resources for a (e.g., respective) downlink reception of the one or more downlink receptions.

The wireless device 1905 may determine the one or more downlink resources of the one or more downlink receptions, the wireless device may determine the one or more downlink resources, for example, based on the one or more TDRA entries in the row of the TDRA table. The wireless device 1905 may determine a (e.g., each) downlink resource of the one or more downlink resources based on a (e.g., respective) TDRA entry of the one or more TDRA entries. The wireless device 1905 may determine a (e.g., each) downlink resource of the one or more downlink resources based on SLIV indicated by a (e.g., respective) TDRA entry of the one or more TDRA entries.

The DCI may schedule a first downlink reception (e.g., a first PDSCH reception) of the one or more downlink receptions for a first cell of the one or more cells. The DCI may indicate a first downlink resource of the one or more downlink resources for the first downlink reception. A first TDRA entry, of the one or more TDRA entries, may be associated with the first cell. The first TDRA entry may indicate the first downlink resource. The DCI may schedule a second downlink reception (e.g., a second PDSCH reception) of the one or more downlink receptions for a second cell of the one or more cells. The DCI may indicate a second downlink resource of the one or more downlink resources for the second downlink reception. A second TDRA entry, in the one or more TDRA entries, may be associated with the second cell. The second TDRA entry may indicate the second downlink resource.

The one or more configuration parameters may comprise one or more first configuration parameters of a first cell. The one or more first configuration parameters of the first cell may comprise/indicate the TDRA table. The set of cells may comprise the first cell. The one or more cells may comprise the first cell. The wireless device may receive, via the first cell, the DCI. The wireless device may use the TDRA table, for the one or more uplink/downlink transmissions/receptions via the one or more cells, indicated by the one or more first configuration parameters of the first cell. The TDRA table may be used, for example, based on receiving the DCI via the first cell. For example, in FIG. 19, the one or more cells (e.g., one or more co-scheduled cells) may be Cell 2 and Cell 3. The one or more cells (e.g., one or more co-scheduled cells) may comprise the cell (e.g., Cell 2).

The base station 1910 may send the DCI in a DCI format for multi-cell scheduling. The DCI may be and/or be sent with, for example, DCI format 0_X. The base station 1910 may send (e.g., transmit) the DCI format 0_X for multi-cell scheduling (e.g., PUSCH transmissions via one or more cells). The DCI may be and/or may be sent with, for example, DCI format 1_X. The DCI may be, for example, with a DCI format 1_X. The base station 1910 may send (e.g., transmit) the DCI format 1_X for multi-cell scheduling (e.g., PDSCH transmissions via one or more cells).

The wireless device 1905 may receive the DCI. the wireless device 1905 may receive the DCI via a first coreset. The wireless device 1905 may receive, via a PDCCH monitoring occasion of a search space set associated with the first coreset, the DCI. The one or more configuration parameters may indicate, for the search space set, a first coreset index (e.g., by *controlResourceSetId* in IE *SearchSpace*) indicating/identifying the first coreset. The one or more configuration parameters may indicate, for the first coreset, the first coreset index. The one or more configuration parameters may indicate, for the search space set, a DCI format (e.g., *dci-Format0-X, dci-Format-X*). The DCI format may indicate to monitor, via/in the search space set, DCI (e.g., DCI 0_X, DCI 1_X) indicated/identified by the DCI format. The wireless device 1905 may receive, via the first coreset, the DCI based on (e.g., while) monitoring and/or searching for PDCCH candidate(s) of/for the search space set. The wireless device 1905 may receive, via the first coreset, the DCI based on (e.g., while) monitoring and/or searching for PDCCH candidate(s) of/for the search space set based on (e.g., in/during) the PDCCH monitoring occasion. The one or more configuration parameters may indicate/configure the search space set for multi-cell (and/or multi-carrier) scheduling. The one or more configuration parameters may indicate/configure the search space set for multi-cell (and/or multi-carrier) scheduling by a single DCI (e.g., DCI format 1_X, DCI format 0_X).

A first downlink BWP of a first cell may comprise the coreset. The one or more configuration parameters may indicate, for the first downlink BWP of the first cell, the coreset. The set of cells may comprise the first cell. The set of cells may not comprise the first cell. The one or more cells (e.g., one or more co-scheduled cells) may comprise the first cell. The one or more cells may not comprise the first cell.

A size/length of the field (e.g., of the DCI, such as a co-scheduled cell indicator field, scheduled cell indicator field, etc.) may be determined based on a number/quantity of the one or more rows in the first table. The size of the field may be equal to Ceil ($\log_2(N)$), for example, where N is the number of the one or more rows in the first table and Ceil(x) maps x to the least/smallest integer greater than or equal to *x*. For example, if N = 4, the size of the field is equal to 2. If N = 5, the size of the field is equal to 3. If N = 16, the size of the field is equal to 4. If N = 10, the size of the field is equal to 4.

The row indicated by the field (e.g., of the DCI, such as a co-scheduled cell indicator field, scheduled cell indicator field, etc.) may have/comprise first column(s)/entry(ies) with value(s) equal to one, for example. The first table may comprise the first column(s)/entry(ies). The row indicated by the field may have second column(s)/entry(ies) with value(s) equal to zero. The first table may comprise the second column(s)/entry(ies). The one or more cells may be associated with the first column(s)/entry(ies) with value equal to one (e.g., a value of 1 in a column/entry may indicate a corresponding cell is scheduled). The DCI may schedule the one or more cells among the set of cells, for example, based on the first column(s)/entry(ies) associated with the one or more cells being with value(s) equal to one. The DCI may schedule the one or more cells among the set of cells, for example, based on the second column(s)/entry(ies) not associated with the one or more cells being with value(s) equal to zero.

The one or more configuration parameters may indicate, for each cell of the set of cells, a respective cell index of the cell indexes (e.g., *ServCellIndex*). The columns (and/or the entries) may be ordered in an ascending and/or descending order of cell indexes of the set of cells. For example, the first/starting column in the first table may be associated with a first cell among the set of cells (e.g., a cell having a lowest/smallest cell index among the cell indexes of the set of cells). The second column in the first table may be associated with a second cell among the set of cells (e.g., a cell having a second lowest/smallest cell index among the cell indexes of the set of cells). In general, the nth column in the first table may be associated with a nth cell among the set of cells (e.g., a cell having the nth lowest/smallest cell index among the cell indexes of the set of cells). Any other correspondence between cell indexes and column order may be used.

For example, the set of cells may be Cell 1, Cell 2, and Cell 3, as shown in FIG. 19. A row in the first table may be, for example, [0, 1, 1]. The one or more cells (indicated by the row) may be Cell 2 and Cell 3. The row may be, for example, [1, 1, 1]. The one or more cells may be Cell 1, Cell 2 and Cell 3. The row may be, for example, [1, 0, 1]. The one or more cells may be Cell 1 and Cell 3. The row may be, for example, [0, 0, 1]. The one or more cells may be Cell 3. The row may be, for example, [0, 1, 0]. The one or more cells may be Cell 2. The cell indexes may comprise the first cell index of Cell 1, the second cell index of Cell 2, and the third cell index of Cell 3. A first cell index of Cell 1 may be lower/smaller than a second cell index of Cell 2 and a third cell index of Cell 3. The second cell index of Cell 2 may be lower/smaller than the third cell index of Cell 3.

The row indicated by the field (e.g., of the DCI, such as a co-scheduled cell indicator field, scheduled cell indicator field, etc.) may have/comprise/indicate one or more cell indexes of the one or more cells. The row indicated by the field may have/comprise a respective cell index, of the one or more cell indexes, of each cell of the one or more cells. The one or more configuration parameters may indicate, for the one or more cells, the one or more cell indexes. Each cell of the one or more cells may be indicated/identified by a respective cell index of the one or more cell indexes. The DCI may schedule the one or more cells among the set of cells, for example, based on (e.g., by) the row having/comprising the one or more cell indexes of/identifying/indicating the one or more cells.

The DCI may comprise a TCI field (e.g., TCI state field, joint TCI field, joint TCI state field, multipleCellTCI field, multiCellTCI field, TCI field in FIG. 19, etc.). The TCI field may indicate a row (e.g., row 2 in FIG. 19) of the one or more rows in the second table. A value of the TCI field may indicate the row in the second table. The value of the TCI field may indicate a first/starting row (e.g., row 1) in the second table, if the value is equal to zero, for example. The value of the TCI field may indicate a second/second-starting row (e.g., row 2) in the second table, if the value is equal to one, for example. The value of the field may indicate the (m+1)-th row (e.g., row m+1) in the second table, if the value is equal to m, and so on.

The row in the second table may indicate/comprise, for example, TCI states for/of the set of cells. The row may indicate/comprise, for example, a respective TCI state, of the TCI states, for/of each cell of the set of cells. The one or more configuration parameters may indicate, for the row in the second table, the TCI states.

The row in the second table may indicate/comprise, for example, TCI state indexes for/of the set of cells. The row may indicate/comprise, for example, a respective TCI state index, of the TCI state indexes, for/of each cell of the set of cells. The one or more configuration parameters may indicate, for the row in the second table, the TCI state indexes.

The row in the second table may indicate/comprise, for example, TCI codepoints for/of the set of cells. The row may indicate/comprise, for example, a respective TCI codepoint, of the TCI codepoints, for/of each cell of the set of cells. The one or more configuration parameters may indicate, for the row in the second table, the TCI codepoints. In the example second table 1925 of FIG. 19, if the row in the second table is row 2, the TCI codepoints are TCI codepoint 010 for Cell 1, TCI codepoint 111 for Cell 2, and TCI codepoint 101 for Cell 3. If the row in the second table is row N, the TCI codepoints are TCI codepoint 110 for Cell 1, TCI codepoint 010 for Cell 2, and TCI codepoint 011 for Cell 3.

Each entry in the row in the second table may be associated with a respective cell of the set of cells. The columns (and/or the entries) in the row of/in the second table may be ordered in an ascending and/or descending order of the cell indexes of the set of cells. For example, a first/starting column/entry in the row of/in the second table may be associated with a first cell, among the set of cells, with a lowest/smallest cell index among the cell indexes. A first TCI codepoint, of the TCI codepoints, in (e.g., occurring and/or configured in) the first/starting column/entry in the row of/in the second table may be associated with the first cell. A second/second-starting column/entry in the row of/in the second table may be associated with a second cell, among the set of cells, with a second lowest/smallest cell index among the cell indexes. A second TCI codepoint, of the TCI codepoints, in( e.g., occurring and/or configured in) the second/second-starting column/entry in the row of/in the second table may be associated with the second cell. A third/third-starting column/entry in the row of/in the second table may be associated with a third cell, among the set of cells, with a third lowest/smallest cell index among the cell indexes. A third TCI codepoint, of the TCI codepoints, in (e.g., occurring and/or configured in) the third/third-starting column/entry in the row of/in the second table is associated with the third cell. For example, in FIG. 19, if the row in the second table is row 2, TCI codepoint 010 is associated with Cell 1, TCI codepoint 111 is associated with Cell 2, and TCI codepoint 101 is associated with Cell 3. For example, in FIG. 19, if the row in the second table is row N, TCI codepoint 110 is associated with Cell 1, TCI codepoint 010 is associated with Cell 2, and TCI codepoint 011 is associated with Cell 3.

The TCI codepoints in the row (e.g., indicated by the DCI) in/of the second table may comprise a TCI codepoint of (and/or associated with) the cell (e.g., Cell 2). For example, in FIG. 19, the TCI codepoint is TCI codepoint is 111 for Cell 2 if the row in the second table is row 2. For example, in FIG. 19, the TCI codepoint is TCI codepoint is 010 for Cell 2 if the row in the second table is row N.

The one or more TCI codepoints activated/indicated for the cell (e.g., by the activation command 1930 at time T1 in FIG. 19) may comprise/have the TCI codepoint of the cell. The one or more TCI codepoints may comprise the TCI codepoint, of the cell, in the row in/of the second table. A maximum TCI codepoint of the one or more TCI codepoints may be equal to or greater/higher than the TCI codepoint (of the cell in the row of the second table).

For example, in FIG. 19, the one or more TCI codepoints indicated by the activation command 1930 (e.g., in table 1935) are TCI codepoint 000, TCI codepoint 001, TCI codepoint 010, TCI codepoint 011, and TCI codepoint 100. If the cell is Cell 2 and the row in the second table is row N, the TCI codepoint in the row of/in the second table is TCI codepoint is 010, which is among the one or more TCI codepoints of Cell 2 indicated by the table 1935 (and/or an active downlink/uplink BWP of Cell 2). The maximum TCI codepoint of the one or more TCI codepoints is TCI codepoint 100, which is greater than TCI codepoint 010. For example, if the cell is Cell 3 and the row in the second table is row 2, the TCI codepoint in the row of/in the second table is TCI codepoint is 101, may be among TCI codepoint(s) of (and/or activated/indicated for) Cell 3 (activation command for Cell 3 not shown in FIG. 19).

The TCI codepoint (e.g., TCI codepoint 010) may comprise/have/correspond to/map to a TCI state index (e.g., TCI state ID 64) indicating/identifying a TCI state. The activation command (e.g., received at time T1 in FIG. 19) may indicate mapping of the TCI state index to the TCI codepoint. The subset of TCI states may comprise the TCI state in the TCI codepoint. The subset of TCI state indexes may comprise the TCI state index of the TCI state.

The TCI state may comprise/indicate a reference signal (e.g., CSI-RS, SSB/PBCH block, DM-RS, SRS, etc.). The TCI state may comprise/indicate a quasi co-location type (e.g., QCL TypeA, QCL TypeB, QCL TypeC, QCL TypeD). The one or more configuration parameters may indicate, a reference signal index indicating/identifying the reference signal for the TCI state. The one or more configuration parameters may indicate the reference signal for the TCI state. The one or more configuration parameters may indicate the quasi co-location type for the TCI state.

The wireless device may apply (e.g., use) the TCI state indicated by (and/or mapped to or in) the TCI codepoint to uplink transmissions of/via the cell. The wireless device may apply the TCI state indicated by (and/or mapped to or in) the TCI codepoint to uplink transmissions of/via the active uplink BWP of the cell. Applying the TCI state to the uplink transmissions may comprise sending (e.g., transmitting/performing) the uplink transmissions based on the TCI state. Applying the TCI state to the uplink transmissions may comprise sending (e.g., transmitting/performing) each uplink transmission of the uplink transmissions based on the TCI state.

The wireless device may apply the TCI state indicated by (and/or mapped to or in) the TCI codepoint to the uplink transmissions, for example, based on the one or more TCI codepoints comprising the TCI codepoint in the row in/of the second table. The wireless device may apply the TCI state to the uplink transmissions, for example, based on the maximum TCI codepoint of the one or more TCI codepoints being equal to or greater than the TCI codepoint.

The uplink transmissions may comprise/be, for example, PUSCH transmissions. The uplink transmissions may comprise/be, for example, PUCCH transmissions. The uplink transmissions may comprise/be, for example, SRS transmissions. The uplink transmissions may comprise/be transmission of uplink signals/channels (e.g., PUSCH, PUCCH, SRS).

The wireless device may send (e.g., transmit) the uplink transmissions based on the TCI state. The wireless device may send (e.g., transmit) the uplink transmissions based on the TCI state, for example, based on (e.g., in response to) applying the TCI state to the uplink transmissions.

The TCI state may indicate/comprise information for determining/calculating/computing a transmission power. The wireless device may send (e.g., transmit) the uplink transmissions with/using a transmission power determined based on the TCI state. The wireless device may send (e.g., transmit) a (e.g., each) uplink transmission of the uplink transmissions with the transmission power determined based on the TCI state. The wireless device may determine/calculate/compute the transmission power based on the TCI state. The wireless device may determine/calculate/compute the transmission power based on one or more power control parameters (e.g., target received power, pathloss compensation factor, closed-loop index, pathloss reference signal) associated with (e.g., mapped to and/or indicated by and/or included in) the TCI state. For example, the one or more configuration parameters may indicate, for the TCI state, the one or more power control parameters.

The wireless device may send (e.g., transmit) the uplink transmissions with/using a spatial domain transmission/transmit filter/beam determined based on the TCI state. The wireless device may send (e.g., transmit) each uplink transmission of the uplink transmissions with the spatial domain transmission/transmit filter/beam determined based on the TCI state. The wireless device may determine the spatial domain transmission/transmit filter/beam based on the TCI state.

The wireless device may send (e.g., transmit) the uplink transmissions with the spatial domain transmission/transmit filter/beam determined based on the reference signal indicated by (e.g., in and/or associated with) the TCI state. The wireless device may send (e.g., transmit) the uplink transmissions with the spatial domain transmission/transmit filter/beam that is the same (or substantially same) as a spatial domain receiving/receive/reception filter/beam used for reception/measurement of the reference signal indicated by (e.g., in and/or associated with) the TCI state. The wireless device may receive/measure the reference signal with (e.g., using) the spatial domain receiving/receive/reception filter/beam. The wireless device may determine the spatial domain transmission/transmit filter/beam of the uplink transmissions based on the spatial domain receiving/receive/reception filter/beam of the reference signal. The spatial domain transmission/transmit filter/beam may be the same as the spatial domain receiving/receive/reception filter/beam, for example. The spatial domain transmission/transmit filter/beam may be substantially the same as the spatial domain receiving/receive/reception filter/beam, for example (e.g., 1 degree apart, 2 degrees apart, 5 degrees apart, etc., substantially the same with difference due to imperfect channel estimation and/or imperfect beam correspondence).

At least one DM-RS antenna port of the uplink transmissions may be quasi co-located with the reference signal indicated by the TCI state. Respective DM-RS antenna port(s) of each uplink transmission of the uplink transmissions may be quasi co-located with the reference signal indicated by the TCI state.

The wireless device may apply the TCI state indicated by (e.g., mapped to or in) the TCI codepoint to (e.g., use the TCI state on/for) downlink receptions of/via the cell. The wireless device may apply the TCI state indicated by (and/or mapped to or in) the TCI codepoint to downlink receptions of/via the active downlink BWP of the cell. Applying the TCI state to the downlink receptions may comprise receiving/performing the downlink receptions based on the TCI state. Applying the TCI state to the downlink receptions may comprise receiving/performing each downlink reception, of the downlink receptions, based on the TCI state. The wireless device may apply the TCI state to the downlink receptions, for example, based on the one or more TCI codepoints comprising the TCI codepoint in the row in/of the second table. The wireless device may apply the TCI state to the downlink receptions, for example, based on the maximum TCI codepoint of the one or more TCI codepoints being equal to or greater than the TCI codepoint.

The downlink receptions may comprise/be, for example, PDSCH receptions. The downlink receptions may comprise/be, for example, PDCCH receptions. The downlink receptions may comprise/be, for example, CSI-RS receptions. The downlink receptions may comprise/be reception of downlink signals/channels (e.g., PDSCH, PDCCH, CSI-RS).

The wireless device may receive the downlink receptions based on the TCI state. The wireless device may receive the downlink receptions based on the TCI state, for example, based on (e.g., in response to) applying the TCI state to the downlink receptions. The wireless device may receive the downlink receptions with/using a spatial domain receiving/receive/reception filter/beam determined based on the TCI state. The wireless device may receive each downlink reception of the downlink receptions with the spatial domain receiving/receive/reception filter/beam determined based on the TCI state. The wireless device may determine the spatial domain receiving/receive/reception filter/beam based on the TCI state.

The wireless device may receive the downlink receptions with the spatial domain receiving/receive/reception filter/beam determined based on the reference signal indicated by (e.g., in or associated with) the TCI state. The wireless device may receive the downlink receptions with the spatial domain receiving/receive/reception filter/beam that is the same (or substantially same) as a first spatial domain receiving/receive/reception filter/beam for reception/measurement of the reference signal indicated by (e.g., in or associated with) the TCI state. The wireless device may receive/measure the reference signal with (e.g., using) the first spatial domain receiving/receive/reception filter/beam. The wireless device may determine the spatial domain receiving/receive/reception filter/beam of the downlink receptions based on the first spatial domain receiving/receive/reception filter/beam of the reference signal. The spatial domain receiving/receive/reception filter/beam may be the same as the first spatial domain receiving/receive/reception filter/beam, for example. The spatial domain receiving/receive/reception filter/beam may be substantially the same as the first spatial domain receiving/receive/reception filter/beam, for example (e.g., 1 degree apart, 2 degrees apart, 5 degrees apart, etc., substantially the same with difference due to imperfect channel estimation and/or imperfect beam correspondence).

At least one DM-RS antenna port of the downlink receptions may be quasi co-located with the reference signal indicated by the TCI state. The at least one DM-RS antenna port of the downlink receptions may be quasi co-located with the reference signal based on (e.g., with respect to) the quasi co-location type indicated by the TCI state.

Respective DM-RS antenna port(s) of each downlink reception of the downlink receptions may be quasi co-located with the reference signal indicated by the TCI state. In an example, respective DM-RS antenna port(s) of each downlink reception of the downlink receptions may be quasi co-located with the reference signal based on (e.g., with respect to) the quasi co-location type indicated by the TCI state.

The one or more TCI codepoints activated/indicated for the cell (e.g., by the activation command 1930 at time T1 in FIG. 19) may not comprise the TCI codepoint of the cell. The one or more TCI codepoints may not comprise the TCI codepoint, of the cell, in the row (e.g., indicated by DCI 1940 in FIG. 19) in/of the second table. A maximum TCI codepoint of the one or more TCI codepoints may be less/lower than the TCI codepoint. In the example shown in FIG. 19, the one or more TCI codepoints are TCI codepoint 000, TCI codepoint 001, TCI codepoint 010, TCI codepoint 011, and TCI codepoint 100. If the cell is Cell 2 and the row in the example second table 1925 is row 2 (e.g., if DCI 1940 indicates row 2), the TCI codepoint for Cell 2 in the row of/in the example second table 1925 is TCI codepoint 111. In the example of FIG. 19, then, the TCI codepoint in the row of/in the example second table 1925 is TCI codepoint 111, indicating TCI codepoint for Cell 2, but TCI codepoint 111 is not among the one or more TCI codepoints of/activated for Cell 2 (e.g., by activation command 1930) (and/or of/activated for an active downlink/uplink BWP of Cell 2). The maximum TCI codepoint of the one or more TCI codepoints of/activated for Cell 2 is TCI codepoint 100, which is lower than TCI codepoint 111. In an alternative example, referring to the example shown in FIG. 19, the DCI 1940 could indicate row N and the activation command 1930 could indicate TCI codepoints for Cell 3, the TCI codepoint in the row N of/in the example second table 1925 for Cell 3 is TCI codepoint 011, which may not be among TCI codepoint(s) of (e.g., activated/indicated for) Cell 3.

The wireless device may apply a default TCI state to (e.g., use the default TCI state for) uplink transmissions of/via the cell. The wireless device may apply the default TCI state to uplink transmissions of/via the active uplink BWP of the cell. Applying the default TCI state to the uplink transmissions may comprise sending (e.g., transmitting/performing) the uplink transmissions based on the default TCI state. Applying the default TCI state to the uplink transmissions may comprise sending (e.g., transmitting/performing) each uplink transmission of the uplink transmissions based on the default TCI state. The wireless device may apply the default TCI state to the uplink transmissions, for example, based on the one or more TCI codepoints not comprising the TCI codepoint in the row in/of the second table. The wireless device may apply the default TCI state to the uplink transmissions, for example, based on the maximum TCI codepoint of the one or more TCI codepoints being less/lower/smaller than the TCI codepoint.

The wireless device may send (e.g., transmit) the uplink transmissions based on the default TCI state. The wireless device may send (e.g., transmit) the uplink transmissions based on the default TCI state, for example, based on (e.g., in response to) applying the default TCI state to the uplink transmissions.

The default TCI state may comprise/indicate a reference signal (e.g., CSI-RS, SSB/PBCH block, DM-RS, SRS, etc.). The default TCI state may comprise/indicate a quasi co-location type (e.g., QCL TypeA, QCL TypeB, QCL TypeC, QCL TypeD). The one or more configuration parameters may comprise/indicate, a reference signal index indicating/identifying the reference signal for the default TCI state. The one or more configuration parameters may indicate the reference signal for the default TCI state. The one or more configuration parameters may indicate, the quasi co-location type for the default TCI state.

The wireless device may send (e.g., transmit) the uplink transmissions with/using a transmission power determined based on the default TCI state. The wireless device may send (e.g., transmit), for example, each uplink transmission of the uplink transmissions with the transmission power determined based on the default TCI state. The wireless device may determine/calculate/compute the transmission power based on the default TCI state. The wireless device may determine/calculate/compute the transmission power based on one or more power control parameters (e.g., target received power, pathloss compensation factor, closed-loop index, pathloss reference signal) associated with (and/or mapped to or indicated by or included in) the default TCI state. For example, the one or more configuration parameters may indicate, for the default TCI state, the one or more power control parameters.

The wireless device may send (e.g., transmit) the uplink transmissions with/using a spatial domain transmission/transmit filter/beam determined based on the default TCI state. The wireless device may send (e.g., transmit) each uplink transmission of the uplink transmissions with the spatial domain transmission/transmit filter/beam determined based on the default TCI state. The wireless device may determine the spatial domain transmission/transmit filter/beam based on the default TCI state.

The wireless device may send (e.g., transmit) the uplink transmissions with the spatial domain transmission/transmit filter/beam determined based on the reference signal indicated by (e.g., in or associated with) the default TCI state. The wireless device may send (e.g., transmit) the uplink transmissions with the spatial domain transmission/transmit filter/beam that is the same (or substantially same) as a spatial domain receiving/receive/reception filter/beam used for reception/measurement of the reference signal indicated by (e.g., in or associated with) the default TCI state. The wireless device may receive/measure the reference signal with (e.g., using) the spatial domain receiving/receive/reception filter/beam. The wireless device may determine the spatial domain transmission/transmit filter/beam of the uplink transmissions based on the spatial domain receiving/receive/reception filter/beam of the reference signal. The spatial domain transmission/transmit filter/beam may be the same as the spatial domain receiving/receive/reception filter/beam, for example. The spatial domain transmission/transmit filter/beam may be substantially the same as the spatial domain receiving/receive/reception filter/beam, for example (e.g., 1 degree apart, 2 degrees apart, 5 degrees apart, etc., substantially the same with difference due to imperfect channel estimation and/or imperfect beam correspondence).

At least one DM-RS antenna port of the uplink transmissions may be quasi co-located with the reference signal indicated by the default TCI state. Respective DM-RS antenna port(s) of each uplink transmission of the uplink transmissions may be quasi co-located with the reference signal indicated by the default TCI state.

The wireless device may apply a default TCI to (e.g., use the default TCI for) downlink receptions of/via the cell. The wireless device may apply the default TCI state to downlink receptions of/via the active downlink BWP of the cell. Applying the default TCI state to the downlink receptions may comprise receiving/performing the downlink receptions based on the default TCI state. Applying the default TCI state to the downlink receptions may comprise receiving/performing each downlink reception of the downlink receptions based on the default TCI state. The wireless device may apply the default TCI state to the downlink receptions, for example, based on the one or more TCI codepoints not comprising the TCI codepoint in the row in/of the second table. The wireless device may apply the default TCI state to the downlink receptions, for example, based on the maximum TCI codepoint of the one or more TCI codepoints being less/lower/smaller than the TCI codepoint.

The wireless device may receive the downlink receptions based on the default TCI state. The wireless device may receive the downlink receptions based on the default TCI state, for example, based on (e.g., in response to) applying the default TCI state to the downlink receptions. The wireless device may receive the downlink receptions with/using a spatial domain receiving/receive/reception filter/beam determined based on the default TCI state. The wireless device may receive each downlink reception of the downlink receptions with the spatial domain receiving/receive/reception filter/beam determined based on the default TCI state. The wireless device may determine the spatial domain receiving/receive/reception filter/beam based on the default TCI state.

The wireless device may receive the downlink receptions with the spatial domain receiving/receive/reception filter/beam determined based on the reference signal indicated by (e.g., in or associated with) the default TCI state. The wireless device may receive the downlink receptions with (e.g., using) the spatial domain receiving/receive/reception filter/beam that is the same (or substantially same) as a first spatial domain receiving/receive/reception filter/beam used for reception/measurement of the reference signal indicated by (e.g., in or associated with) the default TCI state. The wireless device may receive/measure the reference signal with (e.g., using) the first spatial domain receiving/receive/reception filter/beam. The wireless device may determine the spatial domain receiving/receive/reception filter/beam of the downlink receptions based on the first spatial domain receiving/receive/reception filter/beam of the reference signal. The spatial domain receiving/receive/reception filter/beam may be the same as the first spatial domain receiving/receive/reception filter/beam, for example. The spatial domain receiving/receive/reception filter/beam may be substantially the same as the first spatial domain receiving/receive/reception filter/beam, for example (e.g., 1 degree apart, 2 degrees apart, 5 degrees apart, etc., substantially the same with difference due to imperfect channel estimation and/or imperfect beam correspondence).

At least one DM-RS antenna port of the downlink receptions may be quasi co-located with the reference signal indicated by the default TCI state. The at least one DM-RS antenna port of the downlink receptions may be quasi co-located with the reference signal based on (e.g., with respect to) the quasi co-location type indicated by the default TCI state. Respective DM-RS antenna port(s) of each downlink reception of the downlink receptions may be quasi co-located with the reference signal indicated by the default TCI state. Respective DM-RS antenna port(s) of each downlink reception of the downlink receptions may be quasi co-located with the reference signal based on (e.g., with respect to) the quasi co-location type indicated by the default TCI state.

The subset of the TCI states (e.g., the subset of TCI states activated and/or indicated to be activated by the activation command) may comprise the default TCI state. A TCI state index, of/among the subset of TCI state indexes, may be of/indicate/identify the default TCI state. The TCI state index of/indicating/identifying the default TCI state may be a lowest/smallest among the subset of TCI state indexes of/indicating/identifying the subset of TCI states. The default TCI state of the subset of TCI states may be indicated/identified based on (e.g., via/by/with) the TCI state index that is the lowest/smallest among the subset of TCI state indexes of/indicating/identifying the subset of TCI states.

In the example shown in FIG. 19, the default TCI state index may be TCI state ID 3, corresponding to/associated with TCI codepoint 001. The default TCI state index may be TCI state ID 3 based on TCI state ID 3 being lowest/smallest among the subset of TCI state indexes (e.g., among TCI state ID 9, TCI state ID 3, TCI state ID 64, TCI state ID 46, and TCI state ID 21). TCI state ID 3 may indicate/identify the default TCI state.

The wireless device may apply the default TCI state to (e.g., use the default TCI state for) the downlink receptions. The TCI state applied/used may be the TCI state indicated/identified by/based on the TCI state index that is lowest/smallest among the subset of TCI state indexes of the subset of TCI states. The wireless device may apply the default TCI state to (e.g., use the default TCI state for) the uplink transmissions. The TCI state applied/used may be the TCI state indicated/identified by/based on the TCI state that is lowest/smallest among the subset of TCI state indexes of the subset of TCI states.

The subset of TCI states (e.g., indicated by/in the control/activation command) may comprise the default TCI state. A TCI codepoint, of/among the one or more TCI codepoints, comprising/indicating/having (and/or mapped to) the default TCI state may be lowest/smallest among the one or more TCI codepoints. The default TCI state of the subset of TCI states may be indicated by (and/or mapped to) the TCI codepoint that is lowest/smallest among the one or more TCI codepoints. The TCI codepoint may comprise a TCI state index, among the subset of TCI state indexes, of/indicating/identifying the default TCI state.

For example, in FIG. 19, the default TCI codepoint may be TCI codepoint 000 based on TCI codepoint 000 being lowest/smallest among the one or more TCI codepoints (e.g., among TCI codepoint 000, TCI codepoint 001, TCI codepoint 010, TCI codepoint 011, and TCI codepoint 100). TCI codepoint 000 may comprise/indicate/correspond to TCI state ID 9 indicating/identifying the default TCI state.

The wireless device may apply the default TCI state to (e.g., use the default TCI state for) the downlink receptions, for example, based on the TCI codepoint indicating/comprising (and/or mapped to) the default TCI state being lowest/smallest among the one or more TCI codepoints. The wireless device may apply (e.g., use) the default TCI state to the uplink transmissions, for example, based on the TCI codepoint indicating/comprising (and/or mapped to) the default TCI state being lowest/smallest among the one or more TCI codepoints.

The TCI codepoint may indicate/comprise (and/or may be mapped to) at least two TCI states (e.g., TCI state 26 and TCI state 61 in FIG. 17). The at least two TCI states may be, for example, at least two joint TCI states. The at least two TCI states may be, for example, at least two downlink TCI states. The at least two TCI states may be, for example, at least two uplink TCI states. The default TCI state may be a first TCI state (e.g., TCI state 26 in FIG. 17) of the at least two TCI states. The default TCI state may be the first TCI state of the at least two TCI states, for example, based on the first TCI state being associated with the PCI of the cell. A second TCI state (e.g., TCI state 61 in FIG. 17) of the at least two TCI states may be associated with a second PCI different from the PCI of the cell. The default TCI state may be the first TCI state of the at least two TCI states, for example, based on a first TCI state index of the first TCI state being lower/less/smaller than a second TCI state index of the second TCI state. The plurality of TCI state indexes may comprise the first TCI state index and/or the second TCI state index.

The default TCI state may be the first TCI state of the at least two TCI states, for example, based on the first field (e.g., a field of the activation command) comprising the first TCI state index of the first TCI state. The first field may be/occur (and/or be located) in the first octet, which may be lower/less/smaller than the second octet comprising the second field (e.g., comprising the second TCI state index of the second TCI state). The default TCI state may be the first TCI state of the at least two TCI states, for example, based on the first octet (e.g., of the activation command and comprising the first TCI state index of the first TCI state) being lower/less/smaller (and/or being in a lower ordinal position) than the second octet (e.g., of the activation command and comprising the second TCI state index of the second TCI state).

The default TCI state may be the first TCI state of the at least two TCI states, for example, based on the first TCI state occurring first in a list/set/vector of the at least two TCI states. The first TCI state may be associated with a first SRS resource set. The second TCI state may be associated with a second SRS resource set. The one or more configuration parameters may indicate the first SRS resource set and the second SRS resource set, for example, for the cell (and/or for the uplink BWP of the cell). A first SRS resource set index of the first SRS resource set may be lower/less than a second SRS resource set index of the second SRS resource set. The one or more configuration parameters may indicate, for the first SRS resource set, the first SRS resource set index. The one or more configuration parameters may indicate, for the second SRS resource set, the second SRS resource set index.

The wireless device may send (e.g., transmit), via the cell, a first uplink signal based on the first TCI state and a first SRS resource in the first SRS resource set. The wireless device may send (e.g., transmit), via the cell, the first uplink signal based on a first transmission precoder determined based on the first SRS resource. The wireless device may send (e.g., transmit), via the cell, the first uplink signal based on a first transmission power determined based on the first TCI state. The wireless device may send (e.g., transmit), via the cell, the first uplink signal based on a first spatial domain transmit filter determined based on the first TCI state.

The wireless device may send (e.g., transmit), via the cell, a second uplink signal based on the second TCI state and a second SRS resource in the second SRS resource set. The wireless device may send (e.g., transmit), via the cell, the second uplink signal based on a second transmission precoder determined based on the second SRS resource. The wireless device may send (e.g., transmit), via the cell, the second uplink signal based on a second transmission power determined based on the second TCI state. The wireless device may send (e.g., transmit), via the cell, the second uplink signal based on a second spatial domain transmit filter determined based on the second TCI state.

The default TCI state may be the first TCI state of the at least two TCI states, for example, based on the first TCI state being associated with the first SRS resource set. The default TCI state may be the first TCI state of the at least two TCI states, for example, based on the first TCI state being associated with the first SRS resource set associated with a lower SRS resource set index than the second SRS resource set. The default TCI state may be the first TCI state of the at least two TCI states, for example, based on the second TCI state being associated with the second SRS resource set.

The first TCI state may be associated with the first SRS resource set, for example, based on the first field comprising the first TCI state index of the first TCI state. The first field may be/occur (and/or be located) in the first octet. The first octet may be lower/less/smaller than the second octet comprising the second field comprising the second TCI state index of the second TCI state. The first TCI state may be associated with the first SRS resource set, for example, based on the first octet, of the activation command, comprising the first TCI state index of the first TCI state being lower/less/smaller (and/or being in a lower ordinal position) than the second octet, of the activation command, comprising the second TCI state index of the second TCI state. The second TCI state may be associated with the second SRS resource set, for example, based on the second field comprising the second TCI state index of the second TCI state being/occurring (and/or being located) in the second octet that is greater/larger than the first octet comprising the first field comprising the first TCI state index of the first TCI state. The second TCI state may be associated with the second SRS resource set, for example, based on the second octet, of the activation command, comprising the second TCI state index of the second TCI state being greater/larger (and/or being in a higher/greater ordinal position) than the first octet, of the activation command, comprising the first TCI state index of the first TCI state.

The subset of TCI states may comprise the default TCI state. The one or more TCI codepoints may comprise one or more first TCI codepoints indicating (and/or mapped to) a single TCI state (e.g., a single uplink TCI state and/or a single downlink/joint TCI state). The one or more TCI codepoints may comprise one or more second TCI codepoints indicating (and/or mapped to) at least two TCI states (e.g., at least two uplink TCI states and/or at least two downlink/joint TCI states).

A TCI codepoint comprising/indicating (and/or mapped to) the default TCI state may be a lowest/smallest of/among the one or more first TCI codepoints. The default TCI state of the subset of TCI states may be indicated by (and/or mapped to) the TCI codepoint that is the lowest/smallest among the one or more first TCI codepoints with/indicating the single TCI state. The TCI codepoint may comprise/indicate/be mapped to a TCI state index, among the subset of TCI state indexes, of/indicating/identifying the default TCI state.

The wireless device may apply the default TCI state to (e.g., use the default TCI state for) the downlink receptions, for example, based on the TCI codepoint indicating/comprising (and/or being mapped to) the default TCI state being a lowest/smallest among the one or more first TCI codepoints. The wireless device may apply the default TCI state to (e.g., use the default TCI state for) the uplink transmissions, for example, based on the TCI codepoint indicating/comprising (and/or being mapped to) the default TCI state being a lowest/smallest among the one or more first TCI codepoints.

The default TCI state may be the first TCI state (e.g., TCI state 26 discussed with respect to FIG. 17 and FIG. 18) (e.g., the first unified TCI state, the first joint TCI state, the first downlink TCI state, the first joint/downlink TCI state, the first uplink TCI state). The default TCI state may be the second TCI state (e.g., TCI state 61 discussed with respect to FIG. 17 and FIG. 18) (e.g., the second unified TCI state, the second joint TCI state, the second downlink TCI state, the second joint/downlink TCI state, the second uplink TCI state).

A column of the one or more columns in the second table may be associated with the cell. The column associated with the cell may indicate/comprise at least one TCI codepoint of/for the cell. The one or more rows in the second table may comprise/indicate the at least one TCI codepoint. A (e.g., each) TCI codepoint of the at least one TCI codepoint may be/occur (and/or may be located) in a (e.g., respective) row of the one or more rows in the second table. A (e.g., each) row of the one or more rows in the second table may comprise/indicate a (e.g., respective) TCI codepoint of the at least one TCI codepoint.

In the example shown in FIG. 19, the column may be the first column if the cell (e.g., scheduled via the DCI 1940) is Cell 1. The at least one TCI codepoint would therefore be TCI codepoint 001 in row 1, TCI codepoint 010 in row 2, ..., TCI codepoint 111 in row (N-1), and TCI codepoint 110 in row N. The column may be the second column if the cell (e.g., scheduled via the DCI 1940) is Cell 2. The at least one TCI codepoint would therefore be TCI codepoint 100 in row 1, TCI codepoint 111 in row 2, ..., TCI codepoint 000 in row (N-1), and TCI codepoint 010 in row N. The column may be the third column if the cell (e.g., scheduled via the DCI 1940) is Cell 3. The at least one TCI codepoint would therefore be TCI codepoint 000 in row 1, TCI codepoint 101 in row 2, ..., TCI codepoint 110 in row (N-1), and TCI codepoint 011 in row N.

The subset of TCI states may comprise the default TCI state. A TCI codepoint, of/among the at least one TCI codepoint, may be/occur (and/or be located) in a row having a lowest/smallest index (e.g., a first row) of the one or more rows of the second table may comprise/indicate/have (and/or may be mapped to) the default TCI state. A lowest/smallest index (e.g., first) is discussed herein (e.g., in the following), but another row may be selected/used as default/to determine the default TCI state (e.g., a second row, a middle row, a last row, etc.) The row having a lowest/smallest index may comprise/indicate/have (and/or be mapped to) the TCI codepoint. The default TCI state may be indicated by (and/or mapped to) the TCI codepoint that is/occurs (and/or is located) in the row having a lowest/smallest index of the one or more rows of the second table.

The wireless device may apply the default TCI state to (e.g., use the default TCI state for) the downlink receptions, for example, based on the TCI codepoint, of/among the at least one TCI codepoint, occurring (and/or being located) in the lowest/smallest row of the one or more rows of the second table. The wireless device may apply the default TCI state to (e.g., use the default TCI state for) the uplink transmissions, for example, based on the TCI codepoint, of/among the at least one TCI codepoint, occurring (and/or being located) in the lowest/smallest row of the one or more rows of the second table.

A TCI codepoint, of/among the at least one TCI codepoint and among the one or more TCI codepoints, may occur (and/or be located) in the row having a lowest/smallest index of the one or more rows of the second table. The TCI codepoint may comprise/indicate/have (and/or may be mapped to) the default TCI state. The default TCI state may be indicated by (and/or mapped to) the TCI codepoint, of/among the at least one TCI codepoint and among the one or more TCI codepoints, that is/occurs (and/or is located) in the row having a lowest/smallest index of the one or more rows of the second table. For example, in FIG. 19, row 1 has the smallest index (is the first row) in the example second table 1925. The TCI codepoint for Cell 2 (indicated by DCI 1940) is TCI codepoint 100 in row 1. The TCI codepoint 100 may indicate/identify the default TCI state based on TCI codepoint 100 occurring/being (and/or being located) in the first row among the one or more rows in the second table and the one or more TCI codepoints (e.g., activated by activation command 1935 for Cell 2) comprising TCI codepoint 100.

The wireless device may apply the default TCI state to (e.g., use the default TCI state for) the downlink receptions, for example, based on the TCI codepoint, of/among the at least one TCI codepoint and among the one or more TCI codepoints, occurring (and/or being located) in the row having a lowest/smallest index (and/or having a default position) of the one or more rows of the second table. The wireless device may apply the default TCI state to (e.g., use the default TCI state for) the uplink transmissions, for example, based on the TCI codepoint, of/among the at least one TCI codepoint and among the one or more TCI codepoints, occurring (and/or being located) in the lowest/smallest row of the one or more rows of the second table.

A TCI codepoint, of/among the at least one TCI codepoint, comprising/indicating (and/or mapped to) the default TCI state may be lowest/smallest among the at least one TCI codepoint. The default TCI state of the subset of TCI states may be indicated by (and/or mapped to) the TCI codepoint that is lowest/smallest among the at least one TCI codepoint. The TCI codepoint may comprise/indicate (and/or be mapped to) a TCI state index, among the subset of TCI state indexes, of/indicating/identifying the default TCI state. For example, in FIG. 19, TCI codepoint may be TCI codepoint 000 in row (N-1) if the cell (e.g., indicated by DCI 1940) is Cell 2.

The wireless device may apply the default TCI state to (e.g., use the default TCI state for) the downlink receptions, for example, based on the TCI codepoint being lowest/smallest among the at least one TCI codepoint (and/or another default TCI codepoint, such as a second lowest, a modal, a median, etc.). The wireless device may apply the default TCI state to (e.g., use the default TCI state for) the uplink transmissions, for example, based on the TCI codepoint being lowest/smallest among the at least one TCI codepoint.

The one or more TCI codepoints may comprise at least one second TCI codepoint of the at least one TCI codepoint (e.g., in the column associated with the cell). One or more first rows of the one or more rows in the second table may comprise/indicate/have the at least one second TCI codepoint. A (e.g., each) row of the one or more first rows in the second table may comprise/indicate a (e.g., respective) TCI codepoint of the at least one second TCI codepoint. In the example shown in FIG. 19, the least one second TCI codepoint for Cell 2 (e.g., indicated in the DCI 1940) is TCI codepoint 100 in row 1, TCI codepoint 000 in row (N-1), and TCI codepoint 010 in row N. The at least one second TCI codepoint may not comprise TCI codepoint 111 in row 2 based on the one or more TCI codepoints (e.g., activated for Cell 2 via activation command 1930) not comprising TCI codepoint 111. The one or more first rows may be row 1, row (N-1), row N, of the rows shown example second table 1925 in FIG. 19.

A TCI codepoint, of/among the at least one second TCI codepoint, comprising/indicating (and/or mapped to) the default TCI state may be a lowest/smallest among the at least one second TCI codepoint. The default TCI state of the subset of TCI states may be indicated by (and/or mapped to) the TCI codepoint that is lowest/smallest among the at least one second TCI codepoint. The TCI codepoint may comprise a TCI state index, among the subset of TCI state indexes, of/indicating/identifying the default TCI state.

The wireless device may apply the default TCI state to (e.g., use the default TCI state for) the downlink receptions, for example, based on the TCI codepoint being lowest/smallest among the at least one second TCI codepoint. The wireless device may apply the default TCI state to (e.g., use the default TCI state for) the uplink transmissions, for example, based on the TCI codepoint being lowest/smallest among the at least one second TCI codepoint.

A TCI codepoint, of/among the at least one second TCI codepoint, may be/occur (and/or be located) in the lowest/smallest row of the one or more first rows of the second table may comprise/indicate/have (and/or may be mapped to) the default TCI state. The default TCI state may be indicated by (and/or mapped to) the TCI codepoint that is/occurs (and/or is located) the lowest/smallest row of the one or more first rows of the second table.

The wireless device may apply the default TCI state to (e.g., use the default TCI state for) the downlink receptions, for example, based on the TCI codepoint being/occurring (and/or being located) in the row having the lowest/smallest index (and/or other default position) of the one or more first rows of the second table. The wireless device may apply the default TCI state to (e.g., use the default TCI state for) the uplink transmissions, for example, based on the TCI codepoint being/occurring (and/or being located) in the row having the lowest/smallest index of the one or more first rows of the second table.

For example, the DCI (e.g., DCI 1940 in FIG. 19) may schedule an uplink transmission (e.g., a PUSCH transmission) of the one or more uplink transmissions for the cell (e.g., Cell 2). The DCI may indicate an uplink resource of the one or more uplink resources for the uplink transmission. For example, the cell may comprise the uplink resource.

The wireless device may not perform/send (e.g., transmit) the uplink transmission via/of the cell via the uplink resource. The wireless device may not perform/send (e.g., transmit) the uplink transmission, for example, based on the one or more TCI codepoints not comprising the TCI codepoint (e.g., TCI codepoint 111 in row 2 for Cell 2) in the row of the second table. The wireless device may not perform/send (e.g., transmit) the uplink transmission, for example, based on the maximum TCI codepoint of the one or more TCI codepoints being less/lower than the TCI codepoint. The wireless device may not perform/send (e.g., transmit) the uplink transmission, for example, based on the one or more TCI codepoints not comprising the at least one TCI codepoint. The wireless device may not perform/send (e.g., transmit) the uplink transmission, for example, based on the one or more TCI codepoints not comprising at least one of the at least one TCI codepoint. The wireless device may not perform/send (e.g., transmit) the uplink transmission, for example, based on the one or more TCI codepoints not comprising each TCI codepoint of the at least one TCI codepoint.

The wireless device may ignore/discard the uplink transmission via/of the cell. The wireless device may not perform/send (e.g., transmit) the uplink transmission, for example, based on (e.g., by) ignoring/discarding the uplink transmission of the cell. The wireless device may ignore/discard the uplink transmission of the cell, for example, based on the one or more TCI codepoints not comprising the TCI codepoint. The wireless device may ignore/discard the uplink transmission of the cell, for example, based on the maximum TCI codepoint of the one or more TCI codepoints being less/lower than the TCI codepoint. The wireless device may ignore/discard the uplink transmission of the cell, for example, based on the one or more TCI codepoints not comprising the at least one TCI codepoint. The wireless device may ignore/discard the uplink transmission of the cell, for example, based on the one or more TCI codepoints not comprising at least one of the at least one TCI codepoint. The wireless device may ignore/discard the uplink transmission of the cell, for example, based on the one or more TCI codepoints not comprising each TCI codepoint of the at least one TCI codepoint.

The DCI (e.g., DCI 1940 in FIG. 19) may schedule a downlink reception (e.g., a PDSCH reception) of the one or more downlink receptions for the cell (e.g., Cell2 in FIG. 19). The DCI may indicate a downlink resource of the one or more downlink resources for the downlink reception. For example, the cell may comprise the downlink resource.

The wireless device may not perform/receive the downlink reception via/of the cell via the downlink resource. The wireless device may not perform/receive the downlink reception, for example, based on the one or more TCI codepoints not comprising the TCI codepoint (e.g., TCI codepoint 111 in row 2 for Cell 2) in the row of the second table. The wireless device may not perform/receive the downlink reception, for example, based on the maximum TCI codepoint of the one or more TCI codepoints being less/lower than the TCI codepoint. The wireless device may not perform/receive the downlink reception, for example, based on the one or more TCI codepoints not comprising the at least one TCI codepoint. The wireless device may not perform/receive the downlink reception, for example, based on the one or more TCI codepoints not comprising at least one of the at least one TCI codepoint. The wireless device may not perform/receive the downlink reception, for example, based on the one or more TCI codepoints not comprising each TCI codepoint of the at least one TCI codepoint.

The wireless device may ignore/discard the downlink reception via/of the cell. The wireless device may not perform/receive the downlink reception, for example, based on ignoring/discarding the downlink reception of the cell. The wireless device may ignore/discard the downlink reception of the cell, for example, based on the one or more TCI codepoints not comprising the TCI codepoint. The wireless device may ignore/discard the downlink reception of the cell, for example, based on the maximum TCI codepoint of the one or more TCI codepoints being less/lower than the TCI codepoint. The wireless device may ignore/discard the downlink reception of the cell, for example, based on the one or more TCI codepoints not comprising the at least one TCI codepoint. The wireless device may ignore/discard the downlink reception of the cell, for example, based on the one or more TCI codepoints not comprising at least one of the at least one TCI codepoint. The wireless device may ignore/discard the downlink reception of the cell, for example, based on the one or more TCI codepoints not comprising each TCI codepoint of the at least one TCI codepoint.

The downlink reception may be (and/or may be interchangeably used with) a downlink signal. The downlink reception may be (and/or may be interchangeably used with) a PDSCH. The downlink reception may be (and/or may be interchangeably used with) a reception of a downlink signal. The downlink reception may be (and/or may be interchangeably used with) a reception of a downlink signal via a downlink channel (e.g., PDSCH). The downlink reception may be (and/or may be interchangeably used with) a downlink channel (e.g., PDSCH).

The uplink transmission may be (and/or may be interchangeably used with) an uplink signal. The uplink transmission may be (and/or may be interchangeably used with) a PUSCH. The uplink transmission may be (and/or may be interchangeably used with) a transmission of an uplink signal. The uplink transmission may be (and/or may be interchangeably used with) a transmission of an uplink signal via an uplink transmission channel (e.g., PUSCH). The uplink transmission may be (and/or may be interchangeably used with) an uplink channel (e.g., PUSCH).

A wireless device may be configured, by/based on one or more configuration parameters, with a TCI state table/list (e.g., *TCI-StateListForSingleDCIMultiPDSCH*). The TCI state table/list may comprise one or more rows. The one or more rows may contain/comprise a plurality of TCI codepoints (and/or TCI states, e.g., *TCI-State*) for downlink/uplink reception/transmission via/on downlink/uplink BWPs of serving cells. The wireless device may receive an indicator of a co-scheduled cell (e.g., a DCI with a co-scheduled cell indicator field scheduling downlink/uplink reception(s)/transmission(s) (e.g., PDSCH/PUSCH) for one or more serving cell(s) of the serving cells). The indicator of the co-scheduled cell, such as the DCI, may comprise a *TCI-State* field with value $m$. The value $m$ may provide/indicate a row index $m+1$ to/of a TCI state table. The indexed row may define/indicate one or more TCI codepoint(s) (and/or one or more TCI state(s)) to be applied to the downlink/uplink reception(s)/transmission(s) of/for the serving cell(s). The wireless device may apply a default TCI state to (e.g., use a default TCI state for) a downlink/uplink reception/transmission via/on the serving cell based on (e.g., if) a TCI codepoint, among the TCI codepoint(s) in the indexed row, corresponding to a serving cell of the serving cell(s) not being among activated TCI codepoint(s) of the serving cell.

The indexed row may define/indicate one or more TCI state(s) to be applied to PDSCH/PUSCH reception(s)/transmission(s) of/for the serving cell(s). The indexed row may define/indicate the one or more TCI state(s) based on a wireless device being configured with *TCI-StateListForSingleDCIMultiPDSCH* in which one or more rows contain multiple TCI State(s) (and/or TCI codepoints) for downlink/uplink reception/transmission on DL/UL BWPs of serving cells. The wireless device may receive a DCI with/indicating a co-scheduled cell indicator field scheduling PDSCH/PUSCH for serving cell(s). The DCI may comprise/indicate a *TCI-State* field with value $m$ that provides a row index $m+1$ of/to TCI state table. The wireless device may apply a default TCI state to (e.g., used the default TCI state for) PDSCH/PUSCH reception/transmission on the serving cell based on (e.g., if) a TCI state, among the TCI state(s) in the indexed row, applied to/for a serving cell of the serving cell(s) is not among activated TCI state(s) of the serving cell.

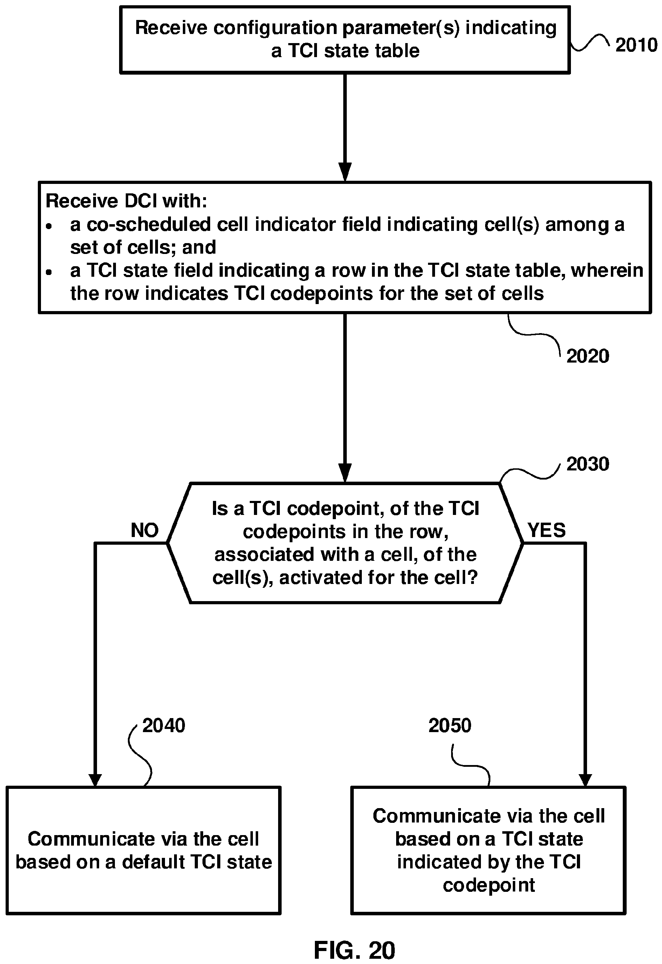

FIG. 20 shows an example flow chart of beam management in multi-cell scheduling. A wireless device may receive one or more messages comprising one or more configuration parameters (2010). A base station may send (e.g., transmit) the one or more messages to the wireless device, for example. The one or more configuration parameters may indicate a second table (e.g., TCI state table/list, TCI state combinations table/list, TCI state table/list for single DCI multi-cell scheduling, TCI codepoint table/list, TCI codepoint combinations table/list, TCI codepoint table/list for single DCI multi-cell scheduling, the second table, such as example second table 1925, discussed with respect to FIG. 19) for a set of cells. The second table may indicate/define combinations of TCI codepoints (and/or TCI states) for/of the set of cells. The second table may comprise/indicate one or more rows. A (e.g., each) row of the one or more rows in the second table may indicate (e.g., respective) TCI codepoints of/for the set of cells. A (e.g., each) row of the one or more rows in the second table may indicate (e.g., respective) TCI codepoints for uplink transmissions of/for/via the set of cells. A (e.g., each) row of the one or more rows in the second table may indicate (e.g., respective) TCI codepoints for downlink receptions of/for/via the set of cells. A (e.g., each) row of the one or more rows in the second table may indicate (e.g., respective) TCI codepoints for both uplink transmissions and downlink receptions of/for/via the set of cells.

The wireless device may receive DCI (2020). The base station may send (e.g., transmit) the DCI (e.g., as/in DCI format 0_X, DCI format 1_X). The DCI may comprise a field (e.g., a co-scheduled cell indicator field, scheduled cell indicator field, etc.) indicating/scheduling one or more cells among the set of cells. The one or more cells may be active cells. Each cell of the one or more cells may be active. The one or more cells may be not deactivated cells. Each cell of the one or more cells may be not deactivated. The one or more cells may not be in a dormant state (e.g., dormant BWP(s) may not be active in the one or more cells). Each cell of the one or more cells may not be in the dormant state.

The DCI may schedule, for example, uplink transmissions (e.g., PUSCH/PUCCH/SRS transmissions) via/for the one or more cells. The DCI may schedule each uplink transmission of the uplink transmissions via/for a respective cell of the one or more cells. An uplink transmission, of the uplink transmissions, associated with a cell, of the one or more cells, may comprise transmission of an uplink signal (e.g., PUSCH, PUCCH, SRS) via the cell.

The DCI may schedule, for example, downlink receptions (e.g., PDSCH/PDCCH/CSI-RS receptions) via/for the one or more cells. The DCI may schedule each downlink reception of the downlink receptions via/for a respective cell of the one or more cells. A downlink reception, of the downlink receptions, associated with a cell, of the one or more cells, may comprise reception of a downlink signal (e.g., PDSCH, PDCCH,CSI-RS) via the cell.

The DCI may comprise a TCI field (e.g., TCI state field, joint TCI field, joint TCI state field, multipleCellTCI field, multiCellTCI field, TCI field in DCI 1940 in FIG. 19, and the like) indicating a row (e.g., an indexed row) of the one or more rows of/in the second table. The TCI state field may comprise a value indicating the row (e.g., the indexed row) among the one or more rows of/in the second table. The row may indicate/comprise TCI codepoints (e.g., TCI states or TCI state indexes) for the set of cells.

The row may indicate/comprise TCI codepoints configured/indicated, by the one or more configuration parameters, to be applied to a plurality of uplink transmissions via/for the set of cells. An (e.g., each) uplink transmission of the plurality of uplink transmissions may be associated with a (e.g., respective) cell of the set of cells. The row may indicate/comprise each TCI codepoint, of the TCI codepoints, configured/indicated to be applied (e.g., by the wireless device and/or the base station) to a respective uplink transmission of the plurality of uplink transmissions. The row may indicate/comprise each TCI codepoint, of the TCI codepoints, configured/indicated to be applied to an uplink transmission, of the plurality of uplink transmissions, via a respective cell of the set of cells.

The row may indicate/comprise the TCI codepoints configured/indicated, by the one or more configuration parameters, to be applied to a plurality of downlink receptions via/for the set of cells. A (e.g., each) downlink reception of the plurality of downlink receptions may be associated with a (e.g., respective) cell of the set of cells. The row may indicate/comprise each TCI codepoint, of the TCI codepoints, configured/indicated to be applied (e.g., by the wireless device and/or the base station) to a respective downlink reception of the plurality of downlink receptions. The row may indicate/comprise each TCI codepoint, of the TCI codepoints, configured/indicated to be applied to a downlink reception, of the plurality of downlink receptions, via a respective cell of the set of cells.

The TCI codepoints, of the set of cells, in the row may comprise at least one TCI codepoint of the one or more cells. For example, each TCI codepoint of the at least one TCI codepoint may be associated with a respective cell of the one or more cells.

The TCI codepoints, of the set of cells, may comprise the at least one TCI codepoint configured/indicated, by the one or more configuration parameters, to be applied to the uplink transmissions via the one or more cells. Each TCI codepoint of the at least one TCI codepoint may be configured/indicated to be applied (e.g., by the wireless device and/or the base station) to a respective uplink transmission of the uplink transmissions. Each TCI codepoint of the at least one TCI codepoint may be configured/indicated to be applied (e.g., by the wireless device and/or the base station) to an uplink transmission, of the uplink transmissions, via a respective cell of the one or more cells.

The TCI codepoints of the set of cells may comprise the at least one TCI codepoint configured/indicated, by the one or more configuration parameters, to be applied to the downlink receptions via the one or more cells. Each TCI codepoint of the at least one TCI codepoint may be configured/indicated to be applied, by the wireless device and/or the base station, to a respective downlink reception of the downlink receptions. Each TCI codepoint of the at least one TCI codepoint may be configured/indicated to be applied, by the wireless device and/or the base station, to a downlink reception, of the downlink receptions, via a respective cell of the one or more cells.

The one or more cells of the set of cells may comprise a cell. The TCI codepoints in the row may comprise a TCI codepoint of/for the cell. The at least one TCI codepoint of the one or more cells may comprise the TCI codepoint of/for the cell.

The TCI codepoint may be configured/indicated, by/based on the one or more configuration parameters, to be applied to a downlink reception, of the downlink receptions, via the cell. The TCI codepoint may be configured/indicated to be applied (e.g., by the wireless device and/or the base station) to the downlink reception via the cell.

The TCI codepoint may be configured/indicated, by/based on the one or more configuration parameters, to be applied to an uplink transmission, of the uplink transmissions, via the cell. The TCI codepoint may be configured/indicated to be applied (e.g., by the wireless device and/or the base station) to the uplink transmission via the cell.

A subset of the TCI states for the cell may be active/activated. The wireless device may receive an activation command (e.g., control command, MAC-CE, DCI, RRC, activation command 1930 as in FIG. 19) indicating activation of the subset of TCI states for the cell. The base station may send (e.g., transmit) the activation command. The activation command may indicate mapping of the subset of TCI states to one or more TCI codepoints. The activation command may indicate mapping of respective TCI state(s), of the subset of TCI states, to respective TCI codepoint(s) of the one or more TCI codepoints. The wireless device may map the subset of TCI states to the one or more TCI codepoints, for example, based on receiving the activation command. The base station may map/cause mapping of the subset of TCI states to the one or more TCI codepoints, for example, based on sending (e.g., transmitting) the activation command. A determination may be made as to whether the one or more TCI codepoints (e.g., mapped to the activated subset of the TCI states indicated/activated by the activation command) comprise the TCI codepoint for the cell in the row (and/or otherwise indicated by the DCI and/or for the cell).

The one or more TCI codepoints (e.g., mapped to the activated subset of the TCI states indicated/activated by the activation command) may comprise the TCI codepoint in the row (2030-YES branch in FIG. 20). The one or more TCI codepoints indicated/activated/of the cell may comprise the TCI codepoint, of the cell, in the row. The one or more TCI codepoints indicated/activated/of the cell may comprise the TCI codepoint, of the cell, in the row based on a maximum TCI codepoint of the one or more TCI codepoints may be equal to or greater than the TCI codepoint in the row, for example. The one or more TCI codepoints indicated/activated/of the cell may comprise the TCI codepoint, of the cell, in the row based on the TCI codepoint in the row may be equal to or less than the maximum TCI codepoint of the one or more TCI codepoints, for example. For example, the one or more TCI codepoints may be TCI codepoint 000, TCI codepoint 001, TCI codepoint 010, TCI codepoint 011, TCI codepoint 100, and TCI codepoint 101 (e.g., up to a maximum TCI codepoint 101). TCI codepoint in the row may be TCI codepoint 010, which is less than the maximum TCI codepoint 101. Also, or alternatively, the TCI codepoint in the row may be TCI codepoint 101, which is equal to the maximum TCI codepoint.

The TCI codepoint may indicate/comprise a TCI state among the subset of TCI states. The TCI codepoint may be mapped to the TCI state. The activation command may indicate mapping of the TCI state to the TCI codepoint. The TCI codepoint may comprise a TCI state index indicating/identifying the TCI state. The one or more configuration parameters may indicate, for the TCI state, the TCI state index.

Communications via the cell may be based on the TCI state indicated by (and/or mapped to) the TCI codepoint (2050). The wireless device may communicate with the base station based on the TCI state indicated by (and/or mapped to) the TCI codepoint. The base station may communicate with the wireless device based on the TCI state indicated by (and/or mapped to) the TCI codepoint. The wireless device may communicate with the base station based on the TCI state, for example, based on (e.g., in response to) the one or more TCI codepoints of the cell comprising the TCI codepoint in the row (e.g., 2030-YES branch). The wireless device may communicate with the base station based on the TCI state, for example, based on (e.g., in response to) the maximum TCI codepoint of the one or more TCI codepoints being equal to or greater than the TCI codepoint in the row (e.g., 2030-YES branch). The wireless device may communicate with the base station based on the TCI state, for example, based on (e.g., in response to) the TCI codepoint in the row being equal to or less than the maximum TCI codepoint of the one or more TCI codepoints. The base station may communicate with the wireless device based on the TCI state, for example, based on (e.g., in response to) the one or more TCI codepoints of the cell comprising the TCI codepoint in the row. The base station may communicate with the wireless device based on the TCI state, for example, based on (e.g., in response to) the maximum TCI codepoint of the one or more TCI codepoints being equal to or greater than the TCI codepoint in the row. The base station may communicate with the wireless device based on the TCI state, for example, based on (e.g., in response to) the TCI codepoint in the row being equal to or less than the maximum TCI codepoint of the one or more TCI codepoints.

Communicating with the base station based on the TCI state may comprise sending (e.g., transmitting) an uplink transmission (e.g., PUSCH transmission, PUCCH transmission, SRS) to the base station based on (e.g., using) the TCI state. The wireless device may send (e.g., transmit) the uplink transmission with a spatial domain transmission/transmit filter that is determined based on the TCI state. The wireless device may send (e.g., transmit) the uplink transmission with a transmission power that is determined based on the TCI state. The base station may receive the uplink transmission with a spatial domain reception/receive filter that is determined based on the TCI state. The base station may receive the uplink transmission with a spatial domain reception/receive filter that is determined based on the spatial domain transmission/transmit filter used at/by the wireless device. The base station may receive the uplink transmission sent (e.g., transmitted) with the transmission power that is determined based on the TCI state.

Communicating with the base station based on the TCI state may comprise receiving a downlink reception (e.g., PDSCH reception, PDCCH reception, CSI-RS reception/measurement) from the base station based on (e.g., using) the TCI state. The wireless device may receive the downlink reception with a spatial domain reception/receive filter that is determined based on the TCI state. The base station may send (e.g., transmit) the downlink reception with a spatial domain transmission/transmit filter that is determined based on the TCI state. The base station may send (e.g., transmit) the downlink reception with a spatial domain transmission/transmit filter that is determined based on the spatial domain reception/receive filter used at/by the wireless device. At least one DM-RS antenna port of the downlink reception is quasi co-located with a reference signal indicated by the TCI state. The at least one DM-RS antenna port of the downlink reception is quasi co-located with the reference signal based on (e.g., with respect to) a quasi co-location type indicated by the TCI state.

The one or more TCI codepoints indicated/activated by the activation command may not comprise the TCI codepoint in the row (e.g., 2030-NO path in FIG. 20). The one or more TCI codepoints indicated/activated/of the cell may not comprise the TCI codepoint, of the cell, in the row. The one or more TCI codepoints indicated/activated/of the cell may not comprise the TCI codepoint, of the cell, in the row based on a maximum TCI codepoint of the one or more TCI codepoints being less than the TCI codepoint in the row, for example. The one or more TCI codepoints indicated/activated/of the cell may not comprise the TCI codepoint, of the cell, in the row based on the TCI codepoint in the row being greater than the maximum TCI codepoint of the one or more TCI codepoints. For example, the one or more TCI codepoints may be TCI codepoint 000, TCI codepoint 001, TCI codepoint 010, TCI codepoint 011, TCI codepoint 100, and TCI codepoint 101. The maximum TCI codepoint of the one or more TCI codepoints may therefore be TCI codepoint 101. The TCI codepoint in the row may be TCI codepoint 111, which is greater than the maximum TCI codepoint 101. As such, the one or more TCI codepoints do not comprise the TCI codepoint in the row.

Communications via the cell may be based on a default TCI state (e.g., 2040). The wireless device may communicate with the base station based on a default TCI state. The wireless device may communicate with the base station based on the default TCI state, for example, based on (e.g., in response to) the one or more TCI codepoints of the cell not comprising the TCI codepoint in the row (e.g., 2030-NO branch). The wireless device may communicate with the base station based on the default TCI state, for example, based on (e.g., in response to) the maximum TCI codepoint of the one or more TCI codepoints being less than the TCI codepoint in the row. The wireless device may communicate with the base station based on the default TCI state, for example, based on (e.g., in response to) the TCI codepoint in the row being greater than the maximum TCI codepoint of the one or more TCI codepoints. The base station may communicate with the wireless device based on a default TCI state. The base station may communicate with the wireless device based on the default TCI state, for example, based on (e.g., in response to) the one or more TCI codepoints of the cell not comprising the TCI codepoint in the row. The base station may communicate with the wireless device based on the default TCI state, for example, based on (e.g., in response to) the maximum TCI codepoint of the one or more TCI codepoints being less than the TCI codepoint in the row. The base station may communicate with the wireless device based on the default TCI state, for example, based on (e.g., in response to) the TCI codepoint in the row being greater than the maximum TCI codepoint of the one or more TCI codepoints.

The wireless device may communicate with the base station based on the default TCI state, for example, based on (e.g., in response to) the one or more configuration parameters indicating the TDRA table (e.g., *pdsch-TimeDomainAllocationListForSingleDCIMultiPDSCH*). The wireless device may communicate with the base station based on the default TCI state, for example, if the one or more configuration parameters indicate the TDRA table.

The base station may communicate with the wireless device based on the default TCI state, for example, based on (e.g., in response to) the one or more configuration parameters indicate the TDRA table (e.g., *pdsch-TimeDomainAllocationListForSingleDCIMultiPDSCH*). The base station may communicate with the wireless device based on the default TCI state, for example, if the one or more configuration parameters indicate the TDRA table.

The one or more configuration parameters may comprise an enabling parameter. The wireless device may check whether the enabling parameter is configured (e.g., by the one or more configuration parameters) based on the one or more TCI codepoints of the cell not comprising the TCI codepoint in the row (e.g., if the one or more TCI codepoints of the cell do not comprise the TCI codepoint in the row), for example. The default TCI state may be used communications (e.g., between the wireless device and the base station), for example, based on the one or more configuration parameters comprising the enabling parameter. If the one or more TCI codepoints of the cell do not comprise the TCI codepoint in the row, the wireless device may use the default TCI state to communicate with the base station (and/or vice versa), for example, based on the one or more configuration parameters comprising the enabling parameter.

The base station may check whether the enabling parameter is configured (e.g., by the one or more configuration parameters), for example, based on the one or more TCI codepoints of the cell not comprising the TCI codepoint in the row (e.g., if the one or more TCI codepoints of the cell do not comprise the TCI codepoint in the row). The base station may use the default TCI state to communicate with the wireless device, for example, based on the one or more configuration parameters comprising the enabling parameter. The base station may use the default TCI state to communicate with the wireless device, for example, based on the one or more configuration parameters comprising the enabling parameter (e.g., based on[if] the one or more TCI codepoints of the cell not comprising[do not comprise] the TCI codepoint in the row).

The wireless device may send (e.g., transmit) a message indicating support for/capability of using a default TCI state to communicate with the base station. For example, the message may be a wireless device (e.g., UE) capability message. The wireless device may send the message (e.g., UE capability message), for example, based on one or more TCI codepoints of (and/or activated for a cell) not comprising a TCI codepoint, of the cell, in a row of the second table (e.g., if the one or more TCI codepoints do not comprise the TCI codepoint). The base station may receive the message (e.g., UE capability message). The base station may send (e.g., transmit) the one or more configuration parameters comprising the enabling parameter, for example, based on receiving the message (e.g., UE capability message) indicating support for/capability of using the default TCI state.

The wireless device may communicate with the base station based on the default TCI state, for example, based on (e.g., in response to) the one or more configuration parameters comprising the enabling parameter. The wireless device may communicate with the base station based on the default TCI state, for example, based on (e.g., in response to) the enabling parameter being in/indicated by the one or more configuration parameters. The wireless device may communicate with the base station based on the default TCI state, for example, based on (e.g., in response to) the one or more configuration parameters comprising the enabling parameter that is set to 'enabled'.

The base station may communicate with the wireless device based on the default TCI state, for example, based on (e.g., in response to) the one or more configuration parameters comprising the enabling parameter. The base station may communicate with the wireless device based on the default TCI state, for example, based on (e.g., in response to) the enabling parameter being present in the one or more configuration parameters. The base station may communicate with the wireless device based on the default TCI state, for example, based on (e.g., in response to) the one or more configuration parameters comprising the enabling parameter that is set to 'enabled'.

The default TCI state may be determined based on one or more criteria (e.g., as discussed with respect to FIG. 19, such as TCI state having the lowest TCI state index, TCI state indicated by the lowest TCI codepoint, an activated/indicated default TCI state, etc.). The default TCI state may be determined by the wireless device and/or the base station, for example.

Communicating based on the default TCI state may comprise sending (e.g., transmitting) and/or receiving an uplink transmission (e.g., PUSCH transmission, PUCCH transmission, SRS) (e.g., sending to the base station and/or receiving from the wireless device). The sending (e.g., transmitting) the uplink transmission may be via the cell (and/or via an active uplink BWP of the cell). The sending (e.g., transmitting) the uplink transmission may be based on the default TCI state. The wireless device may send (e.g., transmit) the uplink transmission with a spatial domain transmission/transmit filter that is (e.g., determined) based on the default TCI state. The wireless device may send (e.g., transmit) the uplink transmission with a transmission power that is determined based on the default TCI state. The base station may receive the uplink transmission (and/or uplink reception) with a spatial domain reception/receive filter that is determined based on the default TCI state. The base station may receive the uplink transmission (and/or uplink reception) with a spatial domain reception/receive filter determined based on the spatial domain transmission/transmit filter used at/by the wireless device. The base station may receive the uplink transmission (and/or uplink reception) sent (e.g., transmitted) with the transmission power determined based on the default TCI state.

Communicating based on the default TCI state may comprise receiving and/or sending (e.g., transmitting) a downlink reception (e.g., PDSCH reception, PDCCH reception, CSI-RS reception/measurement) (e.g., receiving by the wireless device and/or sending by the base station). The receiving the downlink reception may be via the cell (and/or via an active downlink BWP of the cell). The receiving the downlink reception may be based on the default TCI state. The wireless device may receive the downlink reception with a spatial domain reception/receive filter based on (e.g., determined based on) the default TCI state. The base station may send (e.g., transmit) the downlink reception (and/or downlink transmission) with a spatial domain transmission/transmit filter based on (e.g., determined based on) the default TCI state. The base station may send (e.g., transmit) the downlink reception (and/or downlink transmission) with a spatial domain transmission/transmit filter based on (e.g., determined based on) the spatial domain reception/receive filter used at/by the wireless device. At least one DM-RS antenna port of the downlink reception may be quasi co-located with a reference signal indicated by the default TCI state. The at least one DM-RS antenna port of the downlink reception may be quasi co-located with the reference signal based on (e.g., with respect to) a quasi co-location type indicated by the default TCI state. The default TCI state may be (and/or may be interchangeably used with) a default quasi co-location assumption.

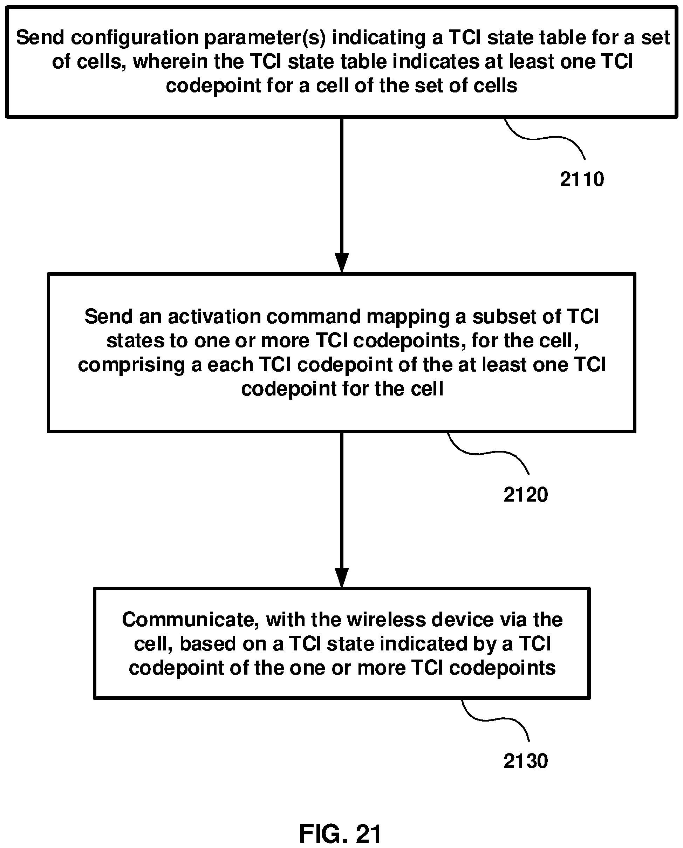

FIG. 21 shows an example flow chart of beam management in multi-cell scheduling. One or more messages comprising one or more configuration parameters may be received (2110). The one or more messages may be received by a wireless device, for example. A base station may send (e.g., transmit) the one or more messages to the wireless device, for example.

The one or more configuration parameters may indicate a second table (e.g., TCI state table/list, TCI state combinations table/list, TCI state table/list for single DCI multi-cell scheduling, TCI codepoint table/list, TCI codepoint combinations table/list, TCI codepoint table/list for single DCI multi-cell scheduling, the second table, such as example second table 1925, discussed with respect to FIG. 19 and FIG. 20) for a set of cells. The second table may indicate/define combinations of TCI codepoints (and/or TCI states) for/of the set of cells. The second table may indicate/comprise respective TCI codepoint(s) for/of each cell of the set of cells. The second table may comprise/indicate one or more columns. Each column of the one or more columns in the second table may indicate/comprise TCI codepoints of/for a respective cell of the set of cells. For example, a first column of the one or more columns in the second table may indicate/comprise at least one first TCI codepoint of/for a first cell of the set of cells. The second table may indicate/comprise the at least one first TCI codepoint of/for the first cell. A second column of the one or more columns in the second table may indicate/comprise at least one second TCI codepoint of/for a second cell of the set of cells. The second table may indicate/comprise the at least one second TCI codepoint of/for the second cell. Each column of the one or more columns in the second table may indicate/comprise TCI codepoint(s) for uplink transmissions of/for/via a respective cell of the set of cells. Each column of the one or more columns in the second table may indicate/comprise TCI codepoint(s) for downlink receptions of/for/via a respective cell of the set of cells. Each column of the one or more columns in the second table may indicate/comprise TCI codepoint(s) for both uplink transmissions and downlink receptions of/for/via a respective cell of the set of cells (e.g., TCI codepoint(s) for use in both uplink and downlink communications). A column of the one or more columns in the second table may indicate/comprise at least one TCI codepoint of/for a cell of the set of cells. The second table may indicate/comprise the at least one TCI codepoint of/for the cell of the set of cells.

An activation command indicating activation of a subset of TCI states for the cell may be sent/received (2120). The base station may send (e.g., transmit) the activation command (e.g., control command, MAC-CE, DCI, RRC) indicating activation of the subset of TCI states for the cell (e.g., one or more activated TCI states activated for the cell). The wireless device may receive the activation command. The activation command may indicate mapping of the subset of TCI states to one or more TCI codepoints. The activation command may indicate mapping of the subset of TCI states to the one or more TCI codepoints for/of the cell. The activation command may indicate mapping of respective TCI state(s) of the subset of TCI states to a respective TCI codepoint of the one or more TCI codepoints. The wireless device may map the subset of TCI states to the one or more TCI codepoints, for example, based on the activation command and/or receiving the activation command (e.g., using the activation command). The base station may map the subset of TCI states to the one or more TCI codepoints, for example, based on the activation command and/or sending (e.g., transmitting) the activation command. For example, a first TCI codepoint of the one or more TCI codepoints may indicate first TCI state(s) of the subset of TCI states. A second TCI codepoint of the one or more TCI codepoints may indicate second TCI state(s) of the subset of TCI states. The activation command may map the subset of TCI states to the one or more TCI codepoints comprising each TCI codepoint of the at least one TCI codepoint, for the cell, indicated by the second table.

A maximum TCI codepoint of the one or more TCI codepoints may be equal to or greater/larger than the at least one TCI codepoint in the column of the second table. The maximum TCI codepoint of the one or more TCI codepoints may be equal to or greater than the at least one TCI codepoint, of the cell, in the column of the second table. A maximum TCI codepoint of the one or more TCI codepoints may be equal to or greater/larger than each TCI codepoint of/in the at least one TCI codepoint in the column of the second table. The maximum TCI codepoint of the one or more TCI codepoints may be equal to or greater than each TCI codepoint of/in the at least one TCI codepoint, of the cell, in the column of the second table. A maximum TCI codepoint of the one or more TCI codepoints may not be less than the at least one TCI codepoint in the column of the second table. The maximum TCI codepoint of the one or more TCI codepoints may not be less than the at least one TCI codepoint, of the cell, in the column of the second table. A maximum TCI codepoint of the one or more TCI codepoints may not be less than each/any TCI codepoint of/in the at least one TCI codepoint in the column of the second table. The maximum TCI codepoint of the one or more TCI codepoints may not be less than each/any TCI codepoint of/in the at least one TCI codepoint, of the cell, in the column of the second table. A maximum TCI codepoint of the one or more TCI codepoints may not be less than one TCI codepoint of/in the at least one TCI codepoint in the column of the second table. A maximum TCI codepoint of the one or more TCI codepoints may not be less than a TCI codepoint of/in the at least one TCI codepoint in the column of the second table.

The wireless device may not expect that a maximum TCI codepoint of the one or more TCI codepoints is less than at least one TCI codepoint of the at least one TCI codepoint in the column of the second table. The wireless device may not expect that a maximum TCI codepoint of the one or more TCI codepoints is less than one of the at least one TCI codepoint in the column of the second table.

The wireless device may expect that a maximum TCI codepoint of the one or more TCI codepoints is equal to or greater than at least one TCI codepoint of the at least one TCI codepoint in the column of the second table. The wireless device may expect that a maximum TCI codepoint of the one or more TCI codepoints is equal to or greater than each TCI codepoint of the at least one TCI codepoint in the column of the second table.

The activation command may be determined/generated such that the activation command comprises information mapping TCI states to each of the at least one TCI codepoint for the cell (e.g., in the column of the second table). For example, the base station may determine/generate the activation command based on the cell and the at least one TCI state in the second table. The base station may make sure that a maximum TCI codepoint of the one or more TCI codepoints is equal or greater than the at least one TCI codepoint in the column of the second table. The base station may make sure that a maximum TCI codepoint of the one or more TCI codepoints is equal to or greater than each TCI codepoint of the at least one TCI codepoint in the column of the second table. A maximum TCI codepoint of the one or more TCI codepoints may be equal to or greater/larger than a maximum TCI codepoint of the at least one TCI codepoint in the column of the second table. A maximum TCI codepoint of the at least one TCI codepoint in the column of the second table may be equal to or less than a maximum TCI codepoint of the one or more TCI codepoints. A maximum TCI codepoint of the one or more TCI codepoints may not be less than a maximum TCI codepoint of the at least one TCI codepoint in the column of the second table. A maximum TCI codepoint of the at least one TCI codepoint in the column of the second table may not be greater than a maximum TCI codepoint of the one or more TCI codepoints.

The base station may make sure that a maximum TCI codepoint of the one or more TCI codepoints is equal to or greater/larger than a maximum TCI codepoint of the at least one TCI codepoint in the column of the second table. The base station may make sure that a maximum TCI codepoint of the at least one TCI codepoint in the column of the second table is equal to or less than a maximum TCI codepoint of the one or more TCI codepoints.

The wireless device may not expect that a maximum TCI codepoint of the one or more TCI codepoints is less than a maximum TCI codepoint of the at least one TCI codepoint in the column of the second table. The wireless device may not expect that a maximum TCI codepoint of the at least one TCI codepoint in the column of the second table is greater than a maximum TCI codepoint of the one or more TCI codepoints.

The wireless device may expect that a maximum TCI codepoint of the one or more TCI codepoints is equal to or greater than a maximum TCI codepoint of the at least one TCI codepoint in the column of the second table. The wireless device may expect that a maximum TCI codepoint of the at least one TCI codepoint in the column of the second table is equal to or less than a maximum TCI codepoint of the one or more TCI codepoints.

The base station may determine the maximum TCI codepoint of the one or more TCI codepoints. The base station may transmit the activation command, for example, based on (and/or after) determining the maximum TCI codepoint of the one or more TCI codepoints.

The base station may determine the maximum TCI codepoint of the at least one TCI codepoint in the column of the second table. The base station may send (e.g., transmit) the activation command, for example, based on (and/or after) determining the maximum TCI codepoint of the at least one TCI codepoint in the column of the second table.

DCI may be sent/received to indicate/schedule one or more cells of the set of cells. The base station may send (e.g., transmit), to the wireless device, the DCI. The wireless device may receive the DCI (e.g., DCI format 0_X, DCI format 1_X). The DCI may comprise a field (e.g., a co-scheduled cell indicator field, scheduled cell indicator field, etc.) indicating/scheduling one or more cells of the set of cells. The one or more cells may comprise the cell. The DCI may comprise a TCI field (e.g., TCI state field, joint TCI field, joint TCI state field, multipleCellTCI field, multiCellTCI field, TCI field in FIG. 19, etc.) indicating a portion of the second table. For example, the TCI field may indicate a row (e.g., an indexed row) in the one or more rows of/in the second table (while a row is discussed herein, a different portion of the second table may also or alternatively be indicated). The TCI state field may comprise a value indicating the row (e.g., the indexed row) of the one or more rows of/in the second table.

The row may indicate/comprise TCI codepoints (e.g., TCI states or TCI state indexes) for the set of cells. The TCI codepoints may comprise at least one TCI codepoint for the one or more cells indicated/scheduled by the DCI. Each TCI codepoint of the at least one TCI codepoint may be for a respective cell of the one or more cells indicated/scheduled by the DCI. For example, a first TCI codepoint of the at least one TCI codepoint may be for a first cell of the one or more cells. A second TCI codepoint of the at least one TCI codepoint may be for a second cell of the one or more cells.

The at least one TCI codepoint for the one or more cells may comprise a TCI codepoint of the cell. The one or more TCI codepoints of the cell may comprise the TCI codepoint in the row of the second cell. The one or more TCI codepoints indicated/activated by the activation command may comprise the TCI codepoint in the row of the second cell. The TCI codepoint may indicate (and/or may be mapped to) a TCI state.

The base station may communicate via the cell (e.g., with the wireless device) based on the TCI state indicated by the TCI codepoint (2130). The base station may receive, via the cell, an uplink transmission based on the TCI state indicated by the TCI codepoint. The base station may send (e.g., transmit), via the cell, a downlink reception based on the TCI state indicated by the TCI codepoint.

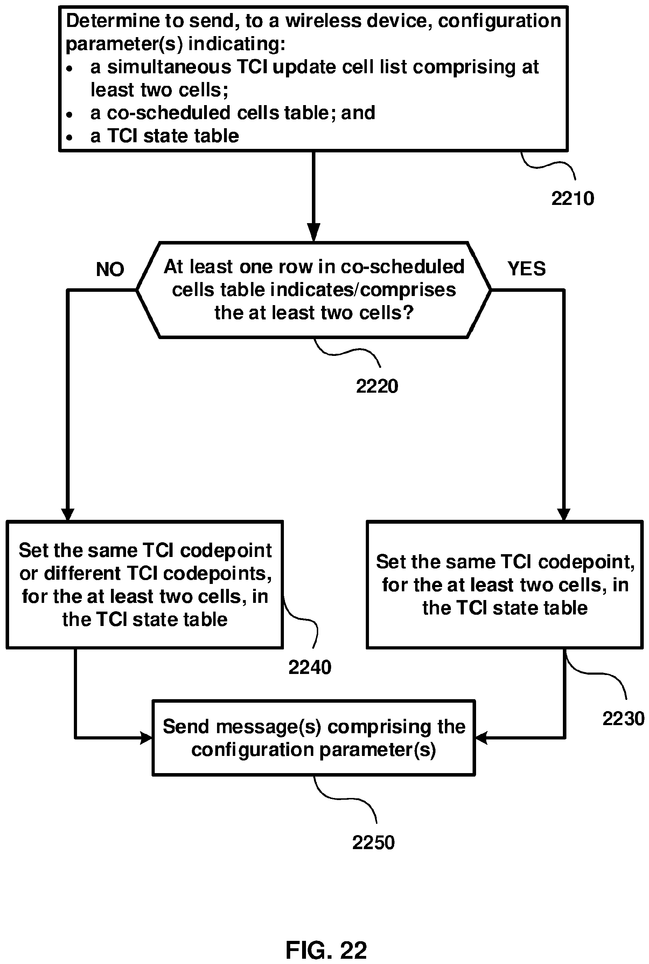

FIG. 22 shows an example flow chart of beam management in multi-cell scheduling. A determination may be made to send one or more configuration parameters (2210). The one or more configuration parameters may comprise/indicate a simultaneous TCI update list parameter (e.g., *simultaneousTCI-UpdateList, simultaneousSpatial-UpdatedList, simultaneousU-TCI-UpdateList*, etc.).

The simultaneous TCI update list parameter may indicate a list of serving cells that may be (e.g., are configured to be, that are able to be, to be) updated simultaneously for spatial relation (e.g., spatial relation, TCI state, TCI relation) based on/with/by an activation command (e.g., MAC-CE, DCI). Being updated simultaneously may refer to being updated at a same/overlapping time and/or being updated based on/with/by a same/single activation command.

The simultaneous TCI update list parameter may indicate a plurality/list of serving cells for which an activation command (e.g., MAC-CE, DCI, Unified TCI States Activation/Deactivation MAC CE) indicating a spatial relation (e.g., spatial relation, TCI state, TCI relation) applies simultaneously (e.g., the activation command applies to the serving cells of the list of serving cells). The simultaneous TCI update list parameter may indicate/comprise a simultaneous TCI update cell list. The simultaneous TCI update cell list may indicate/comprise at least two cells. The simultaneous TCI update list parameter may indicate/comprise the at least two cells, for example, for simultaneous spatial relation update. The simultaneous TCI update list parameter may indicate/comprise the at least two cells, for example, for simultaneous TCI state/relation update.

The set of cells may comprise the at least two cells in/indicated by the simultaneous TCI update cell list. A portion of the first table, such as a row of the one or more rows in the first table (e.g., co-scheduled cell table/list, co-scheduled cell combinations table/list, co-scheduled cell indicator table/list, etc.) may comprise/indicate the at least two cells in/indicated by the simultaneous TCI update cell list. The portion (e.g., the row, as will be discussed herein for ease of explanation) may indicate the at least two cells, of the set of cells, are co-scheduled.

The one or more configuration parameters may indicate, for the at least two cells, the same TCI codepoint in a row of the one or more rows in the second table. The one or more configuration parameters may indicate, for the at least two cells, the same TCI codepoint in the row of the one or more rows in the second table, for example, based on the one or more configuration parameters indicating the simultaneous TCI update cell list that indicates/comprises the at least two cells. The one or more configuration parameters may indicate, for the at least two cells, the same TCI codepoint in the row of the one or more rows in the second table, for example, based on the simultaneous TCI update cell list indicating/comprising the at least two cells.

The one or more configuration parameters may indicate, for the at least two cells, the same TCI codepoint in the row of the one or more rows in the second table, for example, based on the row of the one or more rows in the first table comprising/indicating the at least two cells in the simultaneous TCI update cell list. The one or more configuration parameters may indicate, for the at least two cells, the same TCI codepoint in the row of the one or more rows in the second table, for example, based on at least one row of the one or more rows in the first table comprising/indicating the at least two cells in the simultaneous TCI update cell list.

The one or more configuration parameters may not indicate, for the at least two cells, different TCI codepoints in a row of the one or more rows in the second table. The one or more configuration parameters may not indicate, for the at least two cells, different TCI codepoints in the row of the one or more rows in the second table, for example, based on the one or more configuration parameters indicating the simultaneous TCI update cell list that indicates/comprises the at least two cells. The one or more configuration parameters may not indicate, for the at least two cells, different TCI codepoints in the row of the one or more rows in the second table, for example, based on the simultaneous TCI update cell list indicating/comprising the at least two cells.

The one or more configuration parameters may not indicate, for the at least two cells, different TCI codepoints in the row of the one or more rows in the second table, for example, based on the row of the one or more rows in the first table comprising/indicating the at least two cells in the simultaneous TCI update cell list. The one or more configuration parameters may not indicate, for the at least two cells, different TCI codepoints in the row of the one or more rows in the second table, for example, based on at least one row of the one or more rows in the first table comprising/indicating the at least two cells in the simultaneous TCI update cell list.

The one or more configuration parameters may indicate, for the at least two cells, the same TCI codepoint in each row of the one or more rows in the second table. The one or more configuration parameters may indicate, for the at least two cells, the same TCI codepoint in each row of the one or more rows in the second table, for example, based on the one or more configuration parameters indicating the simultaneous TCI update cell list that indicates/comprises the at least two cells. The one or more configuration parameters may indicate, for the at least two cells, the same TCI codepoint in each row of the one or more rows in the second table, for example, based on the simultaneous TCI update cell list indicating/comprising the at least two cells.

The one or more configuration parameters may indicate, for the at least two cells, the same TCI codepoint in each row of the one or more rows in the second table, for example, based on the row of the one or more rows in the first table comprising/indicating the at least two cells in the simultaneous TCI update cell list. The one or more configuration parameters may indicate, for the at least two cells, the same TCI codepoint in each row of the one or more rows in the second table, for example, based on at least one row of the one or more rows in the first table comprising/indicating the at least two cells in the simultaneous TCI update cell list.

The one or more configuration parameters may not indicate, for the at least two cells, different TCI codepoints in any row of the one or more rows in the second table. The one or more configuration parameters not may indicate, for the at least two cells, different TCI codepoints in any row of the one or more rows in the second table, for example, based on the one or more configuration parameters indicating the simultaneous TCI update cell list that indicates/comprises the at least two cells. The one or more configuration parameters may not indicate, for the at least two cells, different TCI codepoints in any row of the one or more rows in the second table, for example, based on the simultaneous TCI update cell list indicating/comprising the at least two cells.

The one or more configuration parameters may not indicate, for the at least two cells, different TCI codepoints in any row of the one or more rows in the second table, for example, based on the row of the one or more rows in the first table comprising/indicating the at least two cells in the simultaneous TCI update cell list. The one or more configuration parameters may not indicate, for the at least two cells, different TCI codepoints in any row of the one or more rows in the second table, for example, based on at least one row of the one or more rows in the first table comprising/indicating the at least two cells in the simultaneous TCI update cell list.

A determination may be made as to whether at least one row in the first table (e.g., co-scheduled cells table) indicates/comprises the at least two cells (e.g., in/indicated by the simultaneous TCI update cell list) (2220). The base station may determine whether the at least one row in the first table indicates/comprises the at least two cells. The at least two cells may be co-scheduled/indicated, for example, for simultaneous spatial relation update and/or for simultaneous TCI state/relation update.

It may be determined that at least one row in the first table indicates/comprises the at least two cells (2220 - YES branch). A same TCI codepoint may be set, for the at least two cells, in the second table (e.g., the TCI state table) (2230). The same TCI codepoint may be set based on the determination that the at least one row in the first table indicates/comprises the at least two cells (2220 - YES branch). The base station may set the same TCI codepoint, for the at least two cells, in a row of the one or more rows in the second table indicated by the one or more configuration parameters. The base station may set the same TCI codepoint, for the at least two cells, in the row of the one or more rows in the second table, for example, based on the one or more configuration parameters indicating the simultaneous TCI update cell list that indicates/comprises the at least two cells. The base station may set the same TCI codepoint, for the at least two cells, in the row of the one or more rows in the second table, for example, based on the simultaneous TCI update cell list indicating/comprising the at least two cells. The base station may set the same TCI codepoint, for the at least two cells, in the row of the one or more rows in the second table, for example, based on the row of the one or more rows in the first table comprising/indicating the at least two cells in the simultaneous TCI update cell list. The base station may set the same TCI codepoint, for the at least two cells, in the row of the one or more rows in the second table, for example, based on at least one row of the one or more rows in the first table comprising/indicating the at least two cells in the simultaneous TCI update cell list.

The base station may set the same TCI codepoint, for the at least two cells, in each row of the one or more rows in the second table indicated by the one or more configuration parameters. The base station may set the same TCI codepoint, for the at least two cells, in each row of the one or more rows in the second table, for example, based on the one or more configuration parameters indicating the simultaneous TCI update cell list that indicates/comprises the at least two cells. The base station may set the same TCI codepoint, for the at least two cells, in each row of the one or more rows in the second table, for example, based on the simultaneous TCI update cell list indicating/comprising the at least two cells. The base station may set the same TCI codepoint, for the at least two cells, in each row of the one or more rows in the second table, for example, based on the row of the one or more rows in the first table comprising/indicating the at least two cells in the simultaneous TCI update cell list. The base station may set the same TCI codepoint, for the at least two cells, in each row of the one or more rows in the second table, for example, based on at least one row of the one or more rows in the first table comprising/indicating the at least two cells in the simultaneous TCI update cell list.

The base station may not set different TCI codepoints, for the at least two cells, in each/any row of the one or more rows in the second table indicated by the one or more configuration parameters. The base station may not set different TCI codepoints, for the at least two cells, in any row of the one or more rows in the second table, for example, based on the one or more configuration parameters indicating the simultaneous TCI update cell list that indicates/comprises the at least two cells. The base station may not set different TCI codepoints, for the at least two cells, in any row of the one or more rows in the second table, for example, based on the simultaneous TCI update cell list indicating/comprising the at least two cells. The base station may not set different TCI codepoints, for the at least two cells, in any row of the one or more rows in the second table, for example, based on the row of the one or more rows in the first table comprising/indicating the at least two cells in the simultaneous TCI update cell list. The base station may not set different TCI codepoints, for the at least two cells, in any row of the one or more rows in the second table, for example, based on at least one row of the one or more rows in the first table comprising/indicating the at least two cells in the simultaneous TCI update cell list.

It may be determined that at least one row of the one or more rows in the first table (e.g., co-scheduled cells table) may not comprise/indicate the at least two cells in the simultaneous TCI update cell list (2220 - NO branch). Each/any row of the one or more rows in the first table may not comprise/indicate the at least two cells in the simultaneous TCI update cell list.

The one or more configuration parameters may indicate, for the at least two cells, the same TCI codepoint or different TCI codepoints in a row of the one or more rows in the second table, for example, based on each/any row of the one or more rows in the first table not comprising/indicating the at least two cells in the simultaneous TCI update cell list. The one or more configuration parameters may indicate, for the at least two cells, the same TCI codepoint or different TCI codepoints in the row of the one or more rows in the second table, for example, based on at least one row of the one or more rows in the first table not comprising/indicating the at least two cells in the simultaneous TCI update cell list.

The one or more configuration parameters may indicate, for the at least two cells, different TCI codepoints in a row of the one or more rows in the second table, for example, based on each/any row of the one or more rows in the first table not comprising/indicating the at least two cells in the simultaneous TCI update cell list. The one or more configuration parameters may indicate, for the at least two cells, different TCI codepoints in the row of the one or more rows in the second table, for example, based on at least one row of the one or more rows in the first table not comprising/indicating the at least two cells in the simultaneous TCI update cell list.

The one or more configuration parameters may indicate, for the at least two cells, the same TCI codepoint or different TCI codepoints in each row of the one or more rows in the second table, for example, based on each/any row of the one or more rows in the first table not comprising/indicating the at least two cells in the simultaneous TCI update cell list. The one or more configuration parameters may indicate, for the at least two cells, the same TCI codepoint or different TCI codepoints in each row of the one or more rows in the second table, for example, based on at least one row of the one or more rows in the first table not comprising/indicating the at least two cells in the simultaneous TCI update cell list.

A same TCI codepoint or different TCI codepoints may be set, for the at least two cells, in the second table (e.g., the TCI state table) (2240). The same TCI codepoint or different TCI codepoints may be set based on the determination that the at least one row in the first table does not indicate/comprise the at least two cells (2220 - YES branch). The base station may set the same TCI codepoint or different TCI codepoints, for the at least two cells, in a row of the one or more rows in the second table indicated by the one or more configuration parameters, for example, based on a (e.g., each) row of the one or more rows in the first table not comprising/indicating the at least two cells in the simultaneous TCI update cell list. The base station may set the same TCI codepoint or different TCI codepoints, for the at least two cells, in the row of the one or more rows in the second table, for example, based on at least one row of the one or more rows in the first table not comprising/indicating the at least two cells in the simultaneous TCI update cell list.

The base station may set different TCI codepoints, for the at least two cells, in a row of the one or more rows in the second table indicated by the one or more configuration parameters, for example, based on each/any row of the one or more rows in the first table not comprising/indicating the at least two cells in the simultaneous TCI update cell list. The base station may set different TCI codepoints, for the at least two cells, in the row of the one or more rows in the second table, for example, based on at least one row of the one or more rows in the first table not comprising/indicating the at least two cells in the simultaneous TCI update cell list.

The base station may set the same TCI codepoint or different TCI codepoints, for the at least two cells, in each row of the one or more rows in the second table indicated by the one or more configuration parameters, for example, based on each/any row of the one or more rows in the first table not comprising/indicating the at least two cells in the simultaneous TCI update cell list. The base station may set the same TCI codepoint or different TCI codepoints, for the at least two cells, in each row of the one or more rows in the second table, for example, based on at least one row of the one or more rows in the first table not comprising/indicating the at least two cells in the simultaneous TCI update cell list.

One or more messages comprising/indicating the configuration parameters may be sent (2250). The base station may determine to send (e.g., transmit) the one or more messages comprising the one or more configuration parameters. The base station may set the same TCI codepoint (e.g., as in 2230 and/or 2240) or different TCI codepoints (e.g., as in 2240), for the at least two cells, in a (e.g., each) row of the one or more rows in the second table, for example, based on (and/or after) determining to send (e.g., transmit) the one or more messages.

The base station may send (e.g., transmit), to the wireless device, the one or more messages comprising the one or more configuration parameters, for example, based on (and/or after) setting TCI codepoint(s) for the at least two cells, in a (e.g., each) row of the one or more rows in the second table. The base station may send the one or more messages based on (and/or after) setting the same TCI codepoint (e.g., as in 2230 or 2240) or different TCI codepoints (e.g., as in 2240), for the at least two cells, in each row of the one or more rows in the second table.

The base station may send (e.g., transmit), to the wireless device, the one or more messages comprising the one or more configuration parameters, for example, based on (and/or after) setting the same TCI codepoint, for the at least two cells, in the row of the one or more rows in the second table. The base station may determine to send (e.g., transmit) the one or more messages comprising the one or more configuration parameters. The base station may set the same TCI codepoint or different TCI codepoints, for the at least two cells, in each row of the one or more rows in the second table, for example, based on (and/or after) determining to send (e.g., transmit) the one or more messages. The base station may send (e.g., transmit), to the wireless device, the one or more messages comprising the one or more configuration parameters, for example, based on (and/or after) setting the same TCI codepoint or different TCI codepoints, for the at least two cells, in each row of the one or more rows in the second table. The base station may send (e.g., transmit), to the wireless device, the one or more messages comprising the one or more configuration parameters, for example, based on (and/or after) setting the same TCI codepoint or different TCI codepoints, for the at least two cells, in the row of the one or more rows in the second table.

A base station may determine to send (e.g., transmit), to a wireless device, one or more messages comprising one or more configuration parameters. The one or more configuration parameters may indicate a simultaneous TCI update cell list comprising at least two cells. The one or more configuration parameters may indicate a co-scheduled cells table (e.g., the first table discussed with respect to FIG. 19 - FIG. 22) for a set of cells. The one or more configuration parameters may indicate a TCI state table (e.g., the first table discussed with respect to FIG. 19 - FIG. 22) for the set of cells. The set of cells may comprise the at least two cells in the simultaneous TCI update cell list.

At least one row in the co-scheduled cells table may indicate/comprise the at least two cells in the simultaneous TCI update cell list. The base station may set the same TCI codepoint, for the at least two cells, in the TCI state table. The base station may set the same TCI codepoint, for the at least two cells, in the TCI state table indicated by the one or more configuration parameters. The base station may set the same TCI codepoint, for the at least two cells, in each row of the TCI state table indicated by the one or more configuration parameters. The base station may set the same TCI codepoint, for the at least two cells, in the TCI state table indicated by the one or more configuration parameters, for example, based on the at least one row in the co-scheduled cells table indicating/comprising the at least two cells in the simultaneous TCI update cell list. The base station may set the same TCI codepoint, for the at least two cells, in the TCI state table indicated by the one or more configuration parameters, for example, based on the simultaneous TCI update cell list comprising the at least two cells.

The base station may send (e.g., transmit), to the wireless device, one or more messages comprising the one or more configuration parameters. The base station may send (e.g., transmit), to the wireless device, the one or more messages comprising the one or more configuration parameters, for example, based on (e.g., after) setting the same TCI codepoint, for the at least two cells, in each row of the TCI state table (e.g., in each row, a TCI codepoint for one of the at least two cells is the same as a TCI codepoint for the other(s) of the at least two cells). The base station may send (e.g., transmit), to the wireless device, the one or more messages comprising the one or more configuration parameters comprising the TCI state table comprising the same TCI codepoint set for the at least two cells.

At least one row in the co-scheduled cells table may not indicate/comprise the at least two cells in the simultaneous TCI update cell list. The base station may set the same TCI codepoint or different TCI codepoints, for the at least two cells, in the TCI state table. The base station may set the same TCI codepoint or different TCI codepoints, for the at least two cells, in the TCI state table indicated by the one or more configuration parameters. The base station may set the same TCI codepoint or different TCI codepoints, for the at least two cells, in each row of the TCI state table indicated by the one or more configuration parameters. The base station may set the same TCI codepoint or different TCI codepoints, for the at least two cells, in the TCI state table indicated by the one or more configuration parameters, for example, based on the at least one row in the co-scheduled cells table not indicating/comprising the at least two cells in the simultaneous TCI update cell list.

The base station may send (e.g., transmit), to the wireless device, one or more messages comprising the one or more configuration parameters. The base station may send (e.g., transmit), to the wireless device, the one or more messages comprising the one or more configuration parameters, for example, after setting the same TCI codepoint or different TCI codepoints, for the at least two cells, in each row of the TCI state table.

A wireless device may not expect (e.g., assume, be programmed to expect/assume) to be configured with different TCI codepoints (and/or different TCI state IDs) for the serving cells in a row (e.g., in each row) in/of a TCI state table (e.g., configured for the wireless device) based on a row in co-scheduled cell table, configured for the wireless device, including serving cells configured in *simultaneousU-TCI-UpdateList1*, *simultaneousU-TCI-UpdateList2*, *simultaneousU-TCI-UpdateList3* or *simultaneousU-TCI-UpdateList4*.

The one or more configuration parameters may comprise/indicate, for the set of cells, a default beam enabling parameter. The one or more configuration parameters may indicate/comprise, for each cell of the set of cells, a default beam enabling parameter. The default beam enabling parameter may be, for example, a default beam enabling parameter for cross-carrier scheduling (e.g., *enableDefaultBeamForCCS*). The default beam enabling parameter may be, for example, a default beam enabling parameter for multi-cell scheduling (e.g., *enableDefaultBeamForMultiCellScheduling*, *enableDefaultBeamForMCS*, etc.). The default beam enabling parameter for multi-cell scheduling may be different from the default beam enabling parameter for cross-carrier scheduling.

The one or more configuration parameters may or may not comprise/indicate, for the first coreset by which the wireless device receives the DCI, a TCI-present-in-DCI field (e.g., *tci-PresentInDCI-1-X*, *tci-PresentInDCI-0-X*). The one or more configuration parameters may or may not set, for the first coreset by which the wireless device receives the DCI, the TCI-present-in-DCI field to enabled. The base station may or may not set, for the first coreset by which the wireless device receives the DCI, the TCI-present-in-DCI field to enabled.

The one or more configuration parameters may not comprise/indicate, for the first coreset by which the wireless device receives the DCI, a TCI-present-in-DCI field (e.g., *tci-PresentInDCI-1-X*, *tci-PresentInDCI-0-X*). The one or more configuration parameters may not set, for the first coreset by which the wireless device receives the DCI, the TCI-present-in-DCI field to enabled. The base station may not set, for the first coreset by which the wireless device receives the DCI, the TCI-present-in-DCI field to enabled.

The TCI-present-in-DCI field may indicate if (e.g., whether) a TCI field is present or absent in a DCI with a DCI format (e.g., DCI format 1_X, DCI format 0_X). The wireless device may consider/determine the TCI field to be absent/disabled in DCI with the DCI format if the TCI-present-in-DCI field is absent (e.g., based on determining the TCI-present-in-DCI field is absent). The wireless device may determine a size of the DCI with the DCI format based on whether the DCI comprises the TCI field. The wireless device may receive, based on the determined size of the DCI with the DCI format, the DCI with the DCI format. The TCI-present-in-DCI field (e.g., *tci-PresentInDCI-1-X*, *tci-PresentIn-DCI-0-X*) may be different from a second TCI-present-in-DCI field used for a second DCI format (e.g., *tci-PresentInDCI-1-1*, *tci-PresentInDCI-1-2*, and *tci-PresentInDCI-4-2*).

The DCI (e.g., received via the first coreset) may or may not comprise the TCI field. The DCI (e.g., received via the first coreset) may comprise the TCI field, for example, based on the one or more configuration parameters comprising/indicating, for the first coreset by which the wireless device receives the DCI, the TCI-present-in-DCI field. The DCI (e.g., received via the first coreset) may not comprise the TCI field, for example, based on the one or more configuration parameters not comprising/indicating, for the first coreset by which the wireless device receives the DCI, the TCI-present-in-DCI field.

The DCI (e.g., received via the first coreset) may or may not comprise the TCI field. The DCI (e.g., received via the first coreset) may comprise the TCI field, for example, based on the one or more configuration parameters setting, for the first coreset by which the wireless device receives the DCI, the TCI-present-in-DCI field to enabled. The DCI (e.g., received via the first coreset) may not comprise the TCI field, for example, based on the one or more configuration parameters not setting, for the first coreset by which the wireless device receives the DCI, the TCI-present-in-DCI field to enabled. The DCI (e.g., received via the first coreset) may not comprise the TCI field, for example, based on the one or more configuration parameters setting, for the first coreset by which the wireless device receives the DCI, the TCI-present-in-DCI field to disabled.

The DCI (e.g., received via the first coreset) may or may not comprise the TCI field. The DCI (e.g., received via the first coreset) may comprise the TCI field, for example, based on the base station setting, for the first coreset by which the wireless device receives the DCI, the TCI-present-in-DCI field to enabled. The DCI (e.g., received via the first coreset) may not comprise the TCI field, for example, based on the base station not setting, for the first coreset by which the wireless device receives the DCI, the TCI-present-in-DCI field to enabled. The DCI (e.g., received via the first coreset) may not comprise the TCI field, for example, based on the base station setting, for the first coreset by which the wireless device receives the DCI, the TCI-present-in-DCI field to disabled.

The one or more configuration parameters may or may not comprise/indicate, for the first coreset by which the wireless device receives the DCI, the TCI-present-in-DCI field. The one or more configuration parameters may or may not comprise/indicate the TCI-present-in-DCI field based on the one or more configuration parameters comprising/indicating, for the set of cells (e.g., for each cell of the set of cells), the default beam enabling parameter. The one or more configuration parameters may not comprise/indicate, for the first coreset by which the wireless device receives the DCI, the TCI-present-in-DCI field. The one or more configuration parameters may not comprise/indicate the TCI-present-in-DCI field based on the one or more configuration parameters comprising/indicating, for the set of cells (e.g., for each cell of the set of cells), the default beam enabling parameter.

The one or more configuration parameters may or may not set, for the first coreset by which the wireless device receives the DCI, the TCI-present-in-DCI field to be enabled. The one or more configuration parameters may or may not set the TCI-present-in-DCI field to be enabled, for example, based on the one or more configuration parameters comprising/indicating, for the set of cells (e.g., for each cell of the set of cells), the default beam enabling parameter. The one or more configuration parameters may not set, for the first coreset by which the wireless device receives the DCI, the TCI-present-in-DCI field to enabled. The one or more configuration parameters may not set the TCI-present-in-DCI field to enabled, for example, based on the one or more configuration parameters comprising/indicating, for the set of cells (e.g., for each cell of the set of cells), the default beam enabling parameter.

The base station may or may not set, for the first coreset by which the wireless device receives the DCI, the TCI-present-in-DCI field to enabled. The base station may or may not set the TCI-present-in-DCI field to enabled, for example, based on the one or more configuration parameters comprising/indicating, for the set of cells (e.g., each cell of the set of cells), the default beam enabling parameter. The base station may not set, for the first coreset by which the wireless device receives the DCI, the TCI-present-in-DCI field to enabled. The base station may not set the TCI-present-in-DCI field to enabled, for example, based on the one or more configuration parameters comprising/indicating, for the set of cells (e.g., for each cell of the set of cells), the default beam enabling parameter.

The one or more configuration parameters may not comprise/indicate, for the set of cells (e.g., for each cell of the set of cells), a default beam enabling parameter. The default beam enabling parameter may be, for example, a default beam enabling parameter for cross-carrier scheduling (e.g., *enableDefaultBeamForCCS*). The default beam enabling parameter may be, for example, a default beam enabling parameter for multi-cell scheduling (e.g., *enableDefaultBeamForMultiCellScheduling*, *enableDefaultBeamForMCS*, etc.). The default beam enabling parameter for multi-cell scheduling may be different from the default beam enabling parameter for cross-carrier scheduling.

The one or more configuration parameters may comprise/indicate, for the first coreset by which the wireless device receives the DCI, a TCI-present-in-DCI field (e.g., *tci-PresentInDCI-1-X*, *tci-PresentInDCI-0-X*). The one or more configuration parameters may set, for the first coreset by which the wireless device receives the DCI, the TCI-present-in-DCI field to enabled. The base station may set, for the first coreset by which the wireless device receives the DCI, the TCI-present-in-DCI field to enabled.

The TCI-present-in-DCI field may indicate if (e.g., whether) a TCI field is present and/or absent in DCI. The DCI may have a DCI format (e.g., DCI format 1_X, DCI format 0_X). The wireless device may consider/determine the TCI field to be absent/disabled in the DCI (e.g., with the DCI format) based on the TCI-present-in-DCI field being absent. The wireless device may determine a size of the DCI (e.g., with the DCI format) based on whether the DCI comprises the TCI field. The wireless device may receive the DCI based on the determined size of the DCI.

The DCI (e.g., received via the first coreset) may comprise the TCI field, for example, based on the one or more configuration parameters comprising/indicating, for the first coreset by which the wireless device receives the DCI, the TCI-present-in-DCI field. The DCI that the wireless device receives via the first coreset may comprise the TCI field, for example, based on the one or more configuration parameters setting, for the first coreset by which the wireless device receives the DCI, the TCI-present-in-DCI field to enabled. The DCI that the wireless device receives via the first coreset may comprise the TCI field, for example, based on the base station setting, for the first coreset by which the wireless device receives the DCI, the TCI-present-in-DCI field to enabled.

The one or more configuration parameters may comprise/indicate, for the first coreset by which the wireless device receives the DCI, the TCI-present-in-DCI field, for example, based on the one or more configuration parameters not comprising/indicating, for the set of cells, the default beam enabling parameter. The one or more configuration parameters may comprise/indicate, for the first coreset by which the wireless device receives the DCI, the TCI-present-in-DCI field, for example, based on the one or more configuration parameters not indicating/comprising, for each cell of the set of cells, the default beam enabling parameter.

The one or more configuration parameters may set, for the first coreset by which the wireless device receives the DCI, the TCI-present-in-DCI field to enabled. The one or more configuration parameters may set the TCI-present-in-DCI field to enabled, for example, based on the one or more configuration parameters not comprising/indicating, for the set of cells (e.g., for each cell of the set of cells), the default beam enabling parameter. The base station may set the TCI-present-in-DCI field to enabled, for example, based on the one or more configuration parameters not comprising/indicating, for the set of cells (e.g., for each cell of the set of cells), the default beam enabling parameter.

The one or more configuration parameters may not comprise/indicate, for at least one cell of the set of cells, a default beam enabling parameter. For example, the one or more configuration parameters may not indicate/comprise, for each cell of the set of cells, a default beam enabling parameter. For example, the one or more configuration parameters may not indicate/comprise, for first cell(s) of the set of cells, a default beam enabling parameter and indicate/comprise, for second cell(s) of the set of cells, a default beam enabling parameter. The default beam enabling parameter may be, for example, a default beam enabling parameter for cross-carrier scheduling (e.g., *enableDefaultBeamForCCS*). The default beam enabling parameter may be, for example, a default beam enabling parameter for multi-cell scheduling (e.g., *enableDefaultBeamForMultiCellScheduling*, *enableDefaultBeamForMCS*, etc.). The default beam enabling parameter for multi-cell scheduling may be different from the default beam enabling parameter for cross-carrier scheduling.

The one or more configuration parameters may comprise/indicate, for the first coreset by which the wireless device receives the DCI, a TCI-present-in-DCI field (e.g., *tci-PresentInDCI-1-X*, *tci-PresentInDCI-0-X*). The one or more configuration parameters may set, for the first coreset by which the wireless device receives the DCI, the TCI-present-in-DCI field to enabled. The base station may set, for the first coreset by which the wireless device receives the DCI, the TCI-present-in-DCI field to enabled.

The TCI-present-in-DCI field may indicate if a TCI field is present or absent in a DCI with a DCI format (e.g., DCI format 1_X, DCI format 0_X). If the TCI-present-in-DCI field is absent, the wireless device may consider/determine the TCI field to be absent/disabled in a DCI with the DCI format. The wireless device may determine a size of the DCI with the DCI format based on whether the DCI comprises the TCI field or not. The wireless device may receive, based on the determined size of the DCI with the DCI format, the DCI with the DCI format.

The DCI that the wireless device receives via the first coreset may comprise the TCI field, for example, based on the one or more configuration parameters comprising/indicating, for the first coreset by which the wireless device receives the DCI, the TCI-present-in-DCI field. The DCI that the wireless device receives via the first coreset may comprise the TCI field, for example, based on the one or more configuration parameters setting, for the first coreset by which the wireless device receives the DCI, the TCI-present-in-DCI field to enabled. The DCI that the wireless device receives via the first coreset may comprise the TCI field, for example, based on the base station setting, for the first coreset by which the wireless device receives the DCI, the TCI-present-in-DCI field to enabled.

The one or more configuration parameters may comprise/indicate, for the first coreset by which the wireless device receives the DCI, the TCI-present-in-DCI field. The one or more configuration parameters may comprise/indicate, the TCI-present-in-DCI field, for example, based on the one or more configuration parameters not comprising/indicating, for the at least one cell of the set of cells, the default beam enabling parameter.

The wireless device may expect, for the first coreset associated with the search space set for multi-cell scheduling, the TCI-present-in-DCI field to be set to enabled. The wireless device may expect (e.g., assume, be programmed based on the expectation/assumption), the TCI-present-in-DCI field to be set to enabled, for example, based on the one or more configuration parameters not comprising/indicating, for the at least one cell of the set of cells, the default beam enabling parameter. The wireless device may not expect, for the first coreset associated with the search space set for multi-cell scheduling, the TCI-present-in-DCI field to be set to disabled. The wireless device may not expect the TCI-present-in-DCI field to be set to disabled, for example, based on the one or more configuration parameters not comprising/indicating, for the at least one cell of the set of cells, the default beam enabling parameter.

The one or more configuration parameters may set, for the first coreset by which the wireless device receives the DCI, the TCI-present-in-DCI field to enabled, for example, based on the one or more configuration parameters not comprising/indicating, for the at least one cell of the set of cells, the default beam enabling parameter. The wireless device may expect, for the first coreset associated with the search space set for multi-cell scheduling, the TCI-present-in-DCI field to be set to enabled, for example, based on the one or more configuration parameters not comprising/indicating, for the at least one cell of the set of cells, the default beam enabling parameter. The wireless device may not expect, for the first coreset associated with the search space set for multi-cell scheduling, the TCI-present-in-DCI field to be set to disabled, for example, based on the one or more configuration parameters not comprising/indicating, for the at least one cell of the set of cells, the default beam enabling parameter. The base station may set, for the first coreset by which the wireless device receives the DCI, the TCI-present-in-DCI field to enabled, for example, based on the one or more configuration parameters not comprising/indicating, for the at least one cell of the set of cells, the default beam enabling parameter.

The wireless device may expect, for the first coreset associated with the search space set for multi-cell scheduling, the TCI-present-in-DCI field set to be enabled. The wireless device may expect the TCI-present-in-DCI field set to be enabled, for example, based on the one or more configuration parameters not comprising/indicating, for the at least one cell of the set of cells, the default beam enabling parameter. The wireless device may not expect, for the first coreset associated with the search space set for multi-cell scheduling, the TCI-present-in-DCI field set to be disabled, for example, based on the one or more configuration parameters not comprising/indicating, for the at least one cell of the set of cells, the default beam enabling parameter.

For multi-carrier/cell scheduling by DCI (e.g., DCI format 1_X, DCI format 0_X), the base station may set a TCI-present-in-DCI field to enabled for a first coreset (e.g., *ControlResourceSet*), used/monitored for multi-carrier/cell scheduling by the DCI, in the first cell (e.g., the scheduling cell). The TCI-present-in-DCI field may be set to enabled for the first coreset if the default beam enabling parameter (e.g., *enableDefaultBeamForMultiCellScheduling*, *enableDefaultBeamForMCS enableDefaultBeamForCCS*) is not configured, by the one or more configuration parameters, for at least one cell of the set of cells.

The one or more configuration parameters may not comprise/indicate, for the set of cells (e.g., for each cell of the set of cells), a default beam enabling parameter. The one or more configuration parameters may not indicate/comprise, for a first cell that is not in/among the set of cells, a default beam enabling parameter.

The one or more configuration parameters may comprise/indicate, for the set of cells (e.g., for each cell of the set of cells), a default beam enabling parameter. The one or more configuration parameters may not indicate/comprise, for a first cell of/in/among the set of cells, a default beam enabling parameter. The one or more configuration parameters may also, or alternatively, indicate/comprise, for a second cell of/in/among the set of cells, a default beam enabling parameter. The one or more configuration parameters may comprise/indicate, for each cell of the set of cells, a default beam enabling parameter. Also, or alternatively, the one or more configuration parameters may not comprise/indicate, for each cell of the set of cells, a default beam enabling parameter.

The one or more configuration parameters may comprise/indicate, for the set of cells, a unified TCI state type parameter (e.g., *unifiedTCI-StateType*). The unified TCI state type parameter may be set to the same type for two or more cells of the set of cells (e.g., for each cell of the set of cells). For example, the one or more configuration parameters may comprise/indicate, for each cell of the set of cells, a unified TCI state type parameter that is set to 'joint'. For example, the one or more configuration parameters may comprise/indicate, for each cell of the set of cells, a unified TCI state type parameter that is set to 'separate'. The one or more configuration parameters may not comprise/indicate, for a first cell of the set of cells, a unified TCI state type parameter that is set to 'joint' and/or may comprise/indicate, for a second cell of the set of cells, a unified TCI state type parameter that is set to 'separate'.

A row of the one or more rows in the first table (e.g., co-scheduled cell table/list, co-scheduled cell combinations table/list, co-scheduled cell indicator table/list, etc.) may comprise/indicate at least two cells of the set of cells. The one or more configuration parameters may comprise/indicate, for the at least two cells, a unified TCI state type parameter (e.g., *unifiedTCI-StateType*). The unified TCI state type parameter may be set to the same type for the at least two cells. For example, the one or more configuration parameters may comprise/indicate, for each cell of the at least two cells, a unified TCI state type parameter that is set to 'joint'. For example, the one or more configuration parameters may comprise/indicate, for each cell of the at least two cells, a unified TCI state type parameter that is set to 'separate'. The one or more configuration parameters may not comprise/indicate, for a first cell of the at least two cells, a unified TCI state type parameter that is set to 'joint' and/or may comprise/indicate, for a second cell of the at least two cells, a unified TCI state type parameter that is set to 'separate'.

One or more first rows of the one or more rows in the first table may comprise at least two cells. The one or more configuration parameters may comprise/indicate, for the at least two cells in each row of the one or more first rows in the first table, a unified TCI state type parameter (e.g., *unifiedTCI-StateType*) set to the same type. For example, the one or more configuration parameters may comprise/indicate, for each cell of the at least two cells in a row of the one or more first rows, a unified TCI state type parameter that is set to 'joint'. For example, the one or more configuration parameters may comprise/indicate, for each cell of the at least two cells in a row of the one or more first rows, a unified TCI state type parameter that is set to 'separate. The one or more configuration parameters may not comprise/indicate, for a first cell of the at least two cells in a first row of the one or more first rows, a unified TCI state type parameter that is set to 'joint' and may comprise/indicate, for a second cell of the at least two cells in the first row, a unified TCI state type parameter that is set to 'separate'.

The unified TCI state type parameter may indicate a unified TCI state type of a cell (e.g., serving cell). The one or more configuration parameters indicate, for the cell, downlink TCI states (e.g., by a higher layer parameter *dl-OrJoint-TCI-StateList*) for downlink receptions via the cell, and/or uplink TCI states (e.g., by a higher layer parameter *ul-TCI-ToAddModList*) for uplink transmissions via the cell. The one or more configuration parameters may indicate the downlink TCI states and/or uplink TCI states base on a value of the unified TCI state type parameter being set to 'separate' (e.g., the unified TCI state type is set to 'separate'). The wireless device may apply the downlink TCI states to (e.g., use the downlink TCI states for) downlink receptions via the cell. The wireless device may apply the uplink TCI states to (e.g., use the uplink TCI states for) uplink transmissions via the cell.

The one or more configuration parameters may indicate, for the cell, joint TCI states (e.g., by a higher layer parameter *dl-OrJointTCI-StateList*) for both downlink receptions and uplink transmissions via the cell base on a value of the unified TCI state type parameter being set to 'joint' (e.g., the unified TCI state type is set to 'joint'). The wireless device may apply the joint TCI states to (e.g., use the joint TCI states for) both downlink receptions via the cell and uplink transmissions via the cell.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device from a base station, one or more configuration parameters indicating one or more sets of transmission configuration indicator (TCI) codepoints for a set of cells.

Clause 2. The method of clause 1, further comprising receiving an activation command mapping one or more TCI states to one or more TCI codepoints for a first cell of the set of cells.

Clause 3. The method of any one of clauses 1-2, further comprising receiving downlink control information (DCI) configured to schedule a communication via the first cell, wherein the DCI indicates a set of TCI codepoints, of the one or more sets of TCI codepoints for the set of cells, comprising a first TCI codepoint for the first cell.

Clause 4. The method of any one of clauses 1-3, wherein the DCI indicates information scheduling one or more cells, of the set of cells, for use in communications, wherein the one or more cells comprise the first cell and a set of TCI codepoints, of the one or more sets of TCI codepoints for the set of cells, wherein the set of TCI codepoints comprises a first TCI codepoint for the first cell.

Clause 5. The method of any one of clauses 1-4, further comprising, based on the one or more TCI codepoints for the first cell not comprising the first TCI codepoint, communicating, with the base station via the first cell, based on a default TCI state of the one or more TCI states.

Clause 6. The method of any one of clauses 1-5, further comprising determining, based on the receiving the DCI, that the first TCI codepoint is not one of the one or more TCI codepoints for the first cell.

Clause 7. The method of any one of clauses 1-6, wherein the one or more TCI codepoints for the first cell not comprising the first TCI codepoint indicates that the first TCI codepoint is not activated for the first cell.

Clause 8. The method of any one of clauses 1-7, wherein the communicating with the base station comprises one or more of: sending a physical uplink shared channel (PUSCH) transmission to the base station; or receiving a physical downlink shared channel (PDSCH) reception from the base station.

Clause 9. The method of any one of clauses 1-8, wherein each set of TCI codepoints of the one or more sets of TCI codepoints indicates respective TCI state codepoints for the set of cells.

Clause 10. The method of any one of clauses 1-9, wherein the DCI schedules one or more PDSCH receptions via the one or more cells, wherein each PDSCH reception of the one or more PDSCH receptions is for (and/or associated with) a respective cell of the one or more cells and the one or more PDSCH receptions are via the cell.

Clause 11. The method of clause 10, wherein the set of TCI codepoints comprise one or more TCI codepoints, comprising the first TCI codepoint, to be applied to the one or more PDSCH receptions via the one or more cells.

Clause 12. The method of any one of clauses 10-11, wherein at least one demodulation reference signal (DM-RS) port of the PDSCH reception is quasi co-located with a reference signal indicated by the default TCI state.

Clause 13. The method of any one of clauses 1-12, wherein the DCI is configured to schedule schedules one or more PUSCH transmissions via the one or more cells, wherein each PUSCH transmission of the one or more PUSCH transmissions is for (or associated with) a respective cell of the one or more cells and the one or more PUSCH transmissions are via the cell.

Clause 14. The method of clause 13, wherein the set of TCI codepoints comprise one or more TCI codepoints, comprising the first TCI codepoint, to be applied to the one or more PUSCH transmissions via the one or more cells.

Clause 15. The method of any one of clauses 13-14, wherein at least one demodulation reference signal (DM-RS) port of the PUSCH transmission is quasi co-located with a reference signal indicated by the default TCI state.

Clause 16. The method of any one of clauses 1-15, wherein each set of TCI codepoints of the one or more sets of TCI codepoints comprises a TCI codepoint associated with a respective cell of the set of cells.

Clause 17. The method of any one of clauses 1-16, wherein the one or more cells are one or more of active, not deactivated, and/or not dormant.

Clause 18. The method of any one of clauses 1-17, further comprising mapping, based on the activation command, each TCI codepoint of the one or more TCI codepoints to a respective TCI state of the one or more TCI states.

Clause 19. The method of any one of clauses 1-18, wherein the first TCI codepoint is greater than a maximum TCI codepoint of the one or more TCI codepoints.

Clause 20. The method of any one of clauses 1-19, wherein the default TCI state is indicated by one or more of: a lowest TCI state index of one or more TCI state indexes of the one or more TCI states; a lowest TCI codepoint of the one or more TCI codepoints for the first cell; or a lowest TCI codepoint, of the one or more TCI codepoints, that is mapped to a single TCI state.

Clause 21. The method of any one of clauses 1-20, further comprising: receiving second DCI configured to schedule a second communication via a second cell of the set of cells, wherein the second cell indicates a second set of TCI codepoints, of the one or more sets of TCI codepoints for the set of cells comprising a second TCI codepoint for the second cell.

Clause 22. The method of any one of clauses 1-21, further comprising: receiving second DCI indicating information scheduling one or more second cells, of the set of cells, for use in communications, wherein the one or more second cells comprise a second cell and a second set of TCI codepoints, of the one or more sets of TCI codepoints for the set of cells, wherein the second set of TCI codepoints comprises a second TCI codepoint for the second cell.

Clause 23. The method of any one of clauses 1-22, further comprising: based on the second TCI codepoint being activated for the second cell, communicating, with the base station via the second cell, based on a TCI state indicated by the second TCI codepoint.

Clause 24. The method of any one of clauses 1-23, further comprising determining, based on the default TCI state, one or more of: a spatial filter, a power, or a reference signal, for use in the communicating via the first cell.

Clause 25. A wireless device comprising one or more processors and memory storing instructions that, when executed by the one or more processors, cause the wireless device to perform the method of any one of clauses 1-24.

Clause 26. A system comprising a wireless device configured to perform the method of any one of clauses 1-24; and a base station configured to communicate with the wireless device via the first cell.

Clause 27. A computer-readable medium storing instructions that, when executed, cause performance of the method of any one of clauses 1-24.

Clause 28. A method comprising receiving, from a base station, a command activating one or more transmission configuration indicator (TCI) states for a cell.

Clause 29. The method of clause 28, further comprising receiving downlink control information (DCI) configured to schedule the cell for use in communications, wherein the DCI indicates a portion of TCI state table for a set of cells comprising the cell.

Clause 30. The method of any one of clauses 28-29, further comprising receiving downlink control information (DCI) comprising information scheduling the cell for use in communications and an indication of a portion of a TCI state table for a set of cells comprising the cell.

Clause 31. The method of any one of clauses 28-30, further comprising determining, based on the receiving the DCI, that the portion of the TCI state table does not indicate, for the cell, any of the one or more activated TCI states.

Clause 32. The method of any one of clauses 28-31, further comprising communicating, based on the determining, based on a default TCI state of the one or more activated TCI states.

Clause 33. The method of any one of clauses 28-32, further comprising receiving, from the base station, one or more configuration parameters indicating the TCI state table for the set of cells.

Clause 34. The method of any one of clauses 28-33, wherein the command activating the one or more TCI states maps one or more activated TCI codepoints to the one or more activated TCI states.

Clause 35. The method of any one of clauses 28-34, wherein the DCI indicates one or more co-scheduled cells comprising the cell.

Clause 36. The method of any one of clauses 28-35, wherein the default TCI state is indicated by one or more of a default TCI state index of one or more TCI state indexes of the one or more activated TCI states; or a default TCI codepoint of one or more TCI codepoints corresponding to the one or more activated TCI states for the cell.

Clause 37. The method of any one of clauses 28-36, wherein the communicating based on the default TCI state comprises applying the default TCI state to one or more communications via the cell.

Clause 38. A wireless device comprising one or more processors and memory storing instructions that, when executed by the one or more processors, cause the wireless device to perform the method of any one of clauses 28-37.

Clause 39. A system comprising a wireless device configured to perform the method of any one of clauses 28-37; and a base station configured to send the command.

Clause 40. A computer-readable medium storing instructions that, when executed, cause performance of the method of any one of clauses 28-37.

Clause 41. A method comprising receiving, by a wireless device from a base station, one or more configuration parameters indicating one or more sets of transmission configuration indicator (TCI) codepoints for a set of cells.

Clause 42. The method of clause 41, further comprising receiving downlink control information (DCI) configured to schedule a first cell, of the set of cells, for use in communications, wherein the DCI indicates a set of TCI codepoints, of the one or more sets of TCI codepoints, for the set of cells, comprising a first codepoint for the first cell.

Clause 43. The method of any one of clauses 41-42, further comprising receiving DCI indicating information scheduling a first cell, of the set of cells, for use in communications and a set of TCI codepoints, of the one or more sets of TCI codepoints for the set of cells, wherein the set of TCI codepoints comprises a first TCI codepoint for the first cell.

Clause 44. The method of any one of clauses 41-43, further comprising, based on the first TCI codepoint not being activated for the first cell, communicating, with the base station via the first cell, based on a default TCI state that is activated for the first cell.

Clause 45. The method of any one of clauses 41-44, further comprising, receiving an activation command mapping one or more activated TCI states to one or more activated TCI codepoints for the first cell of the set of cells, wherein the first TCI codepoint is not among the one or more activated TCI codepoints.

Clause 46. The method of any one of clauses 41-45, wherein the DCI is configured to schedule one or more of a PDSCH reception via the first cell; or a PUSCH transmission via the first cell.

Clause 47. The method of any one of clauses 41-46, wherein the one or more configuration parameters indicating the one or more sets of TCI codepoints comprises a TCI state table.

Clause 48. The method of any one of clauses 41-47, wherein the DCI indicates a row, of the TCI state table, comprising the set of TCI codepoints.

Clause 49. A wireless device comprising one or more processors and memory storing instructions that, when executed by the one or more processors, cause the wireless device to perform the method of any one of clauses 41-48.

Clause 50. A system comprising a wireless device configured to perform the method of any one of clauses 41-48; and a base station configured to send the one or more configuration parameters.

Clause 51. A computer-readable medium storing instructions that, when executed, cause performance of the method of any one of clauses 41-48.

Clause 52. A method comprising sending, by a base station to a wireless device, one or more messages comprising one or more configuration parameters indicating a transmission configuration indicator (TCI) table for a set of cells.

Clause 53. The method of clause 52, wherein each column in the TCI table indicates at least one TCI codepoint for a respective cell of the set of cells.

Clause 54. The method of any one of clauses 52-53, further comprising, based on a column, in the TCI table, comprising at least one TCI codepoint for a cell of the set of cells, sending an activation command indicating mapping of one or more TCI states to one or more TCI codepoints for the cell.

Clause 55. The method of any one of clauses 52-54, wherein a maximum TCI codepoint among the one or more TCI codepoints is equal to or greater than each TCI codepoint of the at least one TCI codepoint in the column.

Clause 56. The method of any one of clauses 52-55, further comprising communicating with the wireless device based on a first TCI state indicated by a first TCI codepoint of the one or more TCI codepoints.

Clause 57. The method of any one of clauses 52-56, wherein the communicating is via the first cell.

Clause 58. The method of any one of clauses 52-57, wherein the communicating comprises one or more of: receiving a physical uplink shared channel (PUSCH) reception; or sending a physical downlink shared channel (PDSCH) transmission.

Clause 59. The method of any one of clauses 52-58, wherein the DCI schedules one or more PDSCH transmissions via the one or more cells.

Clause 60. The method of clause 59, wherein each PDSCH transmission of the one or more PDSCH transmissions is for (and/or associated with) a respective cell of the one or more cells and the one or more PDSCH transmissions are scheduled via the cell.

Clause 61. The method of any one of clauses 59-60, wherein the first TCI codepoint is to be applied to the one or more PDSCH receptions via the one or more cells.

Clause 62. The method of any one of clauses 59-61, wherein at least one demodulation reference signal (DM-RS) port of the PDSCH transmission is quasi co-located with a reference signal indicated by first TCI state.

Clause 63. The method of any one of clauses 52-62, wherein the DCI schedules one or more PUSCH receptions via the one or more cells.

Clause 64. The method of clause 63, wherein each PUSCH reception of the one or more PUSCH receptions is for (and/or associated with) a respective cell of the one or more cells and the one or more PUSCH receptions are scheduled via the cell.

Clause 65. The method of any one of clauses 63-64, wherein the first TCI codepoint is to be applied to the one or more PUSCH receptions via the one or more cells.

Clause 66. The method of any one of clauses 63-67, wherein at least one demodulation reference signal (DM-RS) port of the PUSCH reception is quasi co-located with a reference signal indicated by the default TCI state.

Clause 67. The method of any one of clauses 52-66, wherein each row of TCI codepoints in the TCI table comprises TCI codepoints associated with the set of cells.

Clause 68. A base station comprising one or more processors and memory storing instructions that, when executed by the one or more processors, cause the wireless device to perform the method of any one of clauses 52-67.

Clause 69. A system comprising a base station configured to perform the method of any one of clauses 52-67; and a wireless device configured to receive the one or more messages.

Clause 70. A computer-readable medium storing instructions that, when executed, cause performance of the method of any one of clauses 52-67.

Clause 71. A method comprising determining, by a base station, to transmit one or more messages comprising one or more configuration parameters to a wireless device.

Clause 72. The method of clause 71, wherein the one or more configuration parameters indicate:
a simultaneous transmission configuration indicator (TCI) update list comprising at least two cells.

Clause 73. The method of any one of claims 71-72, wherein the one or more configure parameters indicate: a first table indicating combinations of co-scheduled cells among a set of cells, wherein a first row in the first table indicates the at least two cells among the set of cells.

Clause 74. The method of any one of claims 71-73, wherein the one or more configure parameters indicate: a second table indicating combinations of TCI codepoints for the set of cells, wherein each row in the second table indicates the same TCI codepoint for the at least two cells based on the simultaneous TCI update list comprising the at least two cells.

Clause 75. The method of any one of claims 71-74, further comprising sending, to the wireless device, the one or more messages comprising the one or more configuration parameters.

Clause 76. The method of any one of claims 71-75, wherein a second row in the second table does not indicate different TCI codepoints for the at least two cells based on the simultaneous TCI update list comprising the at least two cells.

Clause 77. The method of any one of claims 71-76, wherein the second row in the second table indicates the same TCI codepoint for the at least two cells based on the first row in the first table indicating the at least two cells.

Clause 78. The method of any one of claims 71-77, further comprising setting, in the second row in the second table, the same TCI codepoint for the at least two cells.

Clause 79. The method of any one of claims 71-78, wherein the setting is based on the first row indicating the at least two cells (configured) in the simultaneous TCI update list.

Clause 80. The method of any one of claims 71-79, further comprising: determining to transmit one or more second messages comprising one or more second configuration parameters to the wireless device.

Clause 81. The method of any one of claims 71-80, wherein the one or more second configuration parameters indicate: a second simultaneous TCI update list comprising at least two second cells.

Clause 82. The method of any one of claims 71-81, wherein the one or more second configuration parameters indicate: a third table indicating combinations of co-scheduled cells among a second set of cells comprising the at least two second cells, wherein each row in the third table does not indicate the at least two second cells.

Clause 83. The method of any one of claims 71-82, wherein the one or more second configuration parameters indicate: a fourth table indicating combinations of TCI codepoints for the second set of cells, wherein a row in the fourth table indicates the same TCI codepoint or different TCI codepoints for the at least two second cells based on each row in the third table not indicating the at least two second cells.

Clause 84. The method of any one of claims 71-83, further comprising sending, to the wireless device, the one or more second messages comprising the one or more second configuration parameters.

Clause 85. A base station comprising one or more processors and memory storing instructions that, when executed by the one or more processors, cause the wireless device to perform the method of any one of clauses 71-84.

Clause 86. A system comprising a base station configured to perform the method of any one of clauses 71-84; and a wireless device configured to receive the one or more messages.

Clause 87. A computer-readable medium storing instructions that, when executed, cause performance of the method of any one of clauses 71-84.

Clause 88. A method comprising receiving, by a wireless device from a base station, one or more messages comprising one or more configuration parameters indicating a transmission configuration indicator (TCI) table for a set of cells.

Clause 89. The method of clause 88, further comprising receiving a medium-access control (MAC) control element (CE) indicating mapping of a subset of TCI states to one or more TCI codepoints of a cell of the set of cells.

Clause 90. The method of any one of clauses 88-89, further comprising receiving a downlink control information (DCI) comprising a scheduled cell indicator field scheduling one or more cells among the set of cells, wherein the one or more cells comprise the cell.

Clause 91. The method of any one of clauses 88-90, further comprising receiving a downlink control information (DCI) comprising a TCI field indicating a row in the TCI table, wherein the row indicates a TCI codepoints for the set of cells.

Clause 92. The method of any one of clauses 88-91, further comprising based on (e.g., in response to) the one or more TCI codepoints of the cell not comprising a TCI codepoint, among the TCI codepoints in the row, of the cell, communicating, with the base station and via the cell, using a default TCI state of the subset of TCI states.

Clause 93. The method of any one of clauses 88-92, wherein the communicating with the base station comprises one or more of sending a physical uplink shared channel (PUSCH) transmission to the base station; or receiving a physical downlink shared channel (PDSCH) reception from the base station.

Clause 94. The method of any one of clauses 88-93, wherein each row of one or more rows in the TCI state table indicates respective TCI state codepoints for the set of cells.

Clause 95. The method of any one of clauses 88-94, wherein the DCI schedules one or more of one or more PDSCH receptions via the one or more cells, wherein each PDSCH reception of the one or more PDSCH receptions is for (or associated with) a respective cell of the one or more cells and the one or more PDSCH receptions comprise the PDSCH reception via the cell; or one or more PUSCH transmissions via the one or more cells, wherein each PUSCH transmission of the one or more PUSCH transmissions is for (or associated with) a respective cell of the one or more cells and the one or more PUSCH transmissions comprise the PUSCH transmission via the cell.

Clause 96. The method of any one of clauses 88-95, wherein each TCI codepoint of the TCI codepoints in the row is associated with a respective cell of the set of cells.

Clause 97. The method of any one of clauses 88-97, wherein the TCI codepoints in the row comprise one or more TCI codepoints to be applied, by the wireless device, to the one or more PDSCH receptions or the one or more PUSCH transmissions via/for the one or more cells, wherein the one or more TCI codepoints of the one or more cells comprise the TCI codepoint of the cell.

Clause 98. The method of any one of clauses 88-97, wherein the one or more cells are one or more of active; not deactivated; or not dormant.

Clause 99. The method of any one of clauses 88-98, further comprising, based on the receiving the MAC-CE, mapping the subset of TCI states to the one or more TCI codepoints, wherein each TCI codepoint of the one or more TCI codepoints indicate one or more respective TCI states of the subset of TCI states.

Clause 100. The method of any one of clauses 88-99, wherein the TCI codepoint is greater than maximum TCI codepoint among the one or more TCI codepoints of the cell.

Clause 101. The method of any one of clauses 88-100, wherein the default TCI state is indicated by one or more of: a lowest TCI state index among one or more TCI state indexes of the subset of TCI states; a lowest TCI codepoint of the one or more TCI codepoints of the cell; or a lowest TCI codepoint among at least one TCI codepoint, of the one or more TCI codepoints, indicating a single TCI state.

Clause 102. The method of any one of clauses 88-101, further comprising receiving a second DCI.

Clause 103. The method of clause 102, wherein the second DCI comprises a scheduled cell indicator field indicating one or more second cells among the set of cells, wherein the one or more second cells comprise the cell.

Clause 104. The method of any one of clauses 102-103, wherein the second DCI comprises a TCI field indicating a second row in the TCI table, wherein the second row indicates second TCI codepoints for the set of cells.

Clause 105. The method of any one of clauses 102-104, further comprising, based on the one or more TCI codepoints of the cell comprising a second TCI codepoint, among the second TCI codepoints in the second row, of the cell, communicating, with the base station and via the second cell, using a TCI state indicated by the second TCI codepoint.

Clause 106. The method of any one of clauses 88-105, wherein the second DCI comprises, wherein at least one demodulation reference signal (DM-RS) port of the PDSCH reception is quasi co-located with a reference signal indicated by the default TCI state.

Clause 107. The method of any one of clauses 88-106, wherein the sending the PUSCH transmission uses one or more of a spatial filter determined based on a reference signal indicated by the default TCI state; or a transmission power based on one or more power control parameters associated with the default TCI state.

Clause 108. A wireless device comprising one or more processors and memory storing instructions that, when executed by the one or more processors, cause the wireless device to perform the method of any one of clauses 88-107.

Clause 109. A system comprising a wireless device configured to perform the method of any one of clauses 88-107; and a base station configured to send the one or more messages.

Clause 110. A computer-readable medium storing instructions that, when executed, cause performance of the method of any one of clauses 88-107.

A wireless device may perform a method comprising multiple operations. The wireless device may receive, from a base station, one or more configuration parameters indicating one or more sets of transmission configuration indicator (TCI) codepoints for a set of cells. The wireless device may receive an activation command mapping one or more TCI states to one or more TCI codepoints for a first cell of the set of cells. The wireless device may receive downlink control information (DCI) configured to schedule a communication via the first cell, wherein the DCI indicates a set of TCI codepoints, of the one or more sets of TCI codepoints for the set of cells, comprising a first TCI codepoint for the first cell. The DCI may indicate information scheduling one or more cells, of the set of cells, for use in communications, wherein the one or more cells comprise the first cell. The DCI may indicate a set of TCI codepoints, of the one or more sets of TCI codepoints for the set of cells, wherein the set of TCI codepoints comprises a first TCI codepoint for the first cell. The wireless device may, based on the one or more TCI codepoints for the first cell not comprising the first TCI codepoint, communicate, with the base station via the first cell, based on a default TCI state of the one or more TCI states. The wireless device may determine, based on the receiving the DCI, that the first TCI codepoint is not one of the one or more TCI codepoints for the first cell. The one or more TCI codepoints for the first cell may not comprise the first TCI codepoint indicates that the first TCI codepoint is not activated for the first cell. The wireless device may communicate with the base station by one or more of: sending a physical uplink shared channel (PUSCH) transmission to the base station; or receiving a physical downlink shared channel (PDSCH) reception from the base station. Each set of TCI codepoints of the one or more sets of TCI codepoints may indicate respective TCI state codepoints for the set of cells. The DCI may be configured to schedule one or more PDSCH receptions via the one or more cells, wherein each PDSCH reception of the one or more PDSCH receptions may be for (and/or associated with) a respective cell of the one or more cells and the one or more PDSCH receptions are via the cell. The set of TCI codepoints may comprise one or more TCI codepoints, comprising the first TCI codepoint, to be applied to the one or more PDSCH receptions via the one or more cells. At least one demodulation reference signal (DM-RS) port of the PDSCH reception may be quasi co-located with a reference signal indicated by the default TCI state. The DCI may schedule one or more PUSCH transmissions via the one or more cells, wherein each PUSCH transmission of the one or more PUSCH transmissions is for (or associated with) a respective cell of the one or more cells and the one or more PUSCH transmissions are via the cell. The set of TCI codepoints may comprise one or more TCI codepoints, comprising the first TCI codepoint, to be applied to the one or more PUSCH transmissions via the one or more cells. At least one demodulation reference signal (DM-RS) port of the PUSCH transmission may be quasi co-located with a reference signal indicated by the default TCI state. Each set of TCI codepoints of the one or more sets of TCI codepoints may comprise a TCI codepoint associated with a respective cell of the set of cells. The one or more cells may be one or more of active, not deactivated, and/or not dormant. The wireless device may map, based on the activation command, each TCI codepoint of the one or more TCI codepoints to a respective TCI state of the one or more TCI states. The first TCI codepoint may be greater than a maximum TCI codepoint of the one or more TCI codepoints. The default TCI state may be indicated by one or more of: a lowest TCI state index of one or more TCI state indexes of the one or more TCI states; a lowest TCI codepoint of the one or more TCI codepoints for the first cell; or a lowest TCI codepoint, of the one or more TCI codepoints, that is mapped to a single TCI state. The wireless device may receive second DCI configured to schedule a second communication via a second cell of the set of cells, wherein the second cell indicates a second set of TCI codepoints, of the one or more sets of TCI codepoints for the set of cells comprising a second TCI codepoint for the second cell. The wireless device may receive second DCI indicating information scheduling one or more second cells, of the set of cells, for use in communications, wherein the one or more second cells comprise a second cell. The wireless device may receive second DCI indicating a second set of TCI codepoints, of the one or more sets of TCI codepoints for the set of cells, wherein the second set of TCI codepoints comprises a second TCI codepoint for the second cell. The wireless device may, based on the second TCI codepoint being activated for the second cell, communicate, with the base station and via the second cell, based on a TCI state indicated by the second TCI codepoint. The wireless device may determine, based on the default TCI state, one or more of: a spatial filter, a power, or a reference signal, for use in the communicating via the first cell. A wireless device may comprise one or more processors and memory storing instructions that, when executed by the one or more processors, cause the base station to perform the described method, additional operations, and/or include additional elements. A system may comprise the wireless device configured to perform the described method, additional operations, and/or include the additional elements; and a base station configured to communicate with the wireless device via the first cell. A computer-readable medium may store instructions that, when executed, cause performance of the described method, additional operations, and/or include additional elements. A base station may perform a corresponding method comprising multiple operations. The base station may perform a corresponding method, for example, by sending the message.

A wireless device may perform a method comprising multiple operations. The wireless device may receive, from a base station, a command activating one or more transmission configuration indicator (TCI) states for a cell. The wireless device may receive downlink control information (DCI) configured to schedule the cell for use in communications, wherein the DCI indicates a portion of TCI state table for a set of cells comprising the cell. The wireless device may receive downlink control information (DCI) comprising information scheduling the cell for use in communications and an indication of a portion of a TCI state table for a set of cells comprising the cell. The wireless device may determine, based on the receiving the DCI, that the portion of the TCI state table does not indicate, for the cell, any of the one or more activated TCI states. The wireless device may communicate, based on the determining, based on a default TCI state of the one or more activated TCI states. The wireless device may receive, from the base station, one or more configuration parameters indicating the TCI state table for the set of cells. The command may activate the one or more TCI states maps one or more activated TCI codepoints to the one or more activated TCI states. The DCI may comprise an indication of a one or more co-scheduled cells comprising the cell. The default TCI state is indicated by one or more of a default TCI state index of one or more TCI state indexes of the one or more activated TCI states; or a default TCI codepoint of one or more TCI codepoints corresponding to the one or more activated TCI states for the cell. The communicating based on the default TCI state may comprise applying the default TCI state to one or more communications via the cell. A wireless device may comprise one or more processors and memory storing instructions that, when executed by the one or more processors, cause the base station to perform the described method, additional operations, and/or include additional elements. A system may comprise the wireless device configured to perform the described method, additional operations, and/or include the additional elements; and a base station configured to send the command. A computer-readable medium may store instructions that, when executed, cause performance of the described method, additional operations, and/or include additional elements. A base station may perform a corresponding method comprising multiple operations. The base station may perform a corresponding method, for example, by sending the message.

A wireless device may perform a method comprising multiple operations. The wireless device may receive, from a base station, one or more configuration parameters indicating one or more sets of transmission configuration indicator (TCI) codepoints for a set of cells. The wireless device may receive downlink control information (DCI) configured to schedule a first cell, of the set of cells, for use in communications, wherein the DCI indicates a set of TCI codepoints, of the one or more sets of TCI codepoints, for the set of cells, comprising a first codepoint for the first cell. The wireless device may receive DCI indicating information scheduling a first cell, of the set of cells, for use in communications and a set of TCI codepoints, of the one or more sets of TCI codepoints for the set of cells, wherein the set of TCI codepoints comprises a first TCI codepoint for the first cell. The wireless device may, based on the first TCI codepoint not being activated for the first cell, communicate, with the base station via the first cell, based on a default TCI state that is activated for the first cell. The wireless device may receive an activation command mapping one or more activated TCI states to one or more activated TCI codepoints for the first cell of the set of cells, wherein the first TCI codepoint is not among the one or more activated TCI codepoints. The DCI may be configured to schedule one or more of a PDSCH reception via the first cell; or a PUSCH transmission via the first cell. The one or more configuration parameters indicating the one or more sets of TCI codepoints may comprise a TCI state table. The DCI may indicate a row, of the TCI state table, comprising the set of TCI codepoints. A wireless device may comprise one or more processors and memory storing instructions that, when executed by the one or more processors, cause the base station to perform the described method, additional operations, and/or include additional elements. A system may comprise the wireless device configured to perform the described method, additional operations, and/or include the additional elements; and a base station configured to send the one or more configuration parameters. A computer-readable medium may store instructions that, when executed, cause performance of the described method, additional operations, and/or include additional elements. A base station may perform a corresponding method comprising multiple operations. The base station may perform a corresponding method, for example, by sending the message.

A base station may perform a method comprising multiple operations. The base station may send, to a wireless device, one or more messages comprising one or more configuration parameters indicating a transmission configuration indicator (TCI) table for a set of cells. Each column in the TCI table indicates at least one TCI codepoint for a respective cell of the set of cells. The base station may, based on a column, in the TCI table, comprising at least one TCI codepoint for a cell of the set of cells, send an activation command indicating mapping of one or more TCI states to one or more TCI codepoints for the cell. A maximum TCI codepoint among the one or more TCI codepoints may be equal to or greater than each TCI codepoint of the at least one TCI codepoint in the column. The base station may communicate with the wireless device based on a first TCI state indicated by a first TCI codepoint of the one or more TCI codepoints. The communicating may be via the first cell. The communicating may comprise one or more of: receiving a physical uplink shared channel (PUSCH) reception; or sending a physical downlink shared channel (PDSCH) transmission. The DCI may schedule one or more PDSCH transmissions via the one or more cells. Each PDSCH transmission of the one or more PDSCH transmissions may be for (and/or associated with) a respective cell of the one or more cells and the one or more PDSCH transmissions are scheduled via the cell. The first TCI codepoint may be to be applied to the one or more PDSCH receptions via the one or more cells. At least one demodulation reference signal (DM-RS) port of the PDSCH transmission may be quasi co-located with a reference signal indicated by first TCI state. The DCI may schedule one or more PUSCH receptions via the one or more cells. Each PUSCH reception of the one or more PUSCH receptions may be for (and/or associated with) a respective cell of the one or more cells and the one or more PUSCH receptions are scheduled via the cell. The first TCI codepoint may be to be applied to the one or more PUSCH receptions via the one or more cells. At least one demodulation reference signal (DM-RS) port of the PUSCH reception may be quasi co-located with a reference signal indicated by the default TCI state. Each row of TCI codepoints in the TCI table may comprise TCI codepoints associated with the set of cells. A base station may comprise one or more processors and memory storing instructions that, when executed by the one or more processors, cause the base station to perform the described method, additional operations, and/or include additional elements. A system may comprise the base station configured to perform the described method, additional operations, and/or include the additional elements; and a wireless device configured to receive the one or more messages. A computer-readable medium may store instructions that, when executed, cause performance of the described method, additional operations, and/or include additional elements. A base station may perform a corresponding method comprising multiple operations. The base station may perform a corresponding method, for example, by sending the message.

A base station may perform a method comprising multiple operations. The base station may determine to transmit one or more messages comprising one or more configuration parameters to a wireless device. The one or more configuration parameters may indicate a simultaneous transmission configuration indicator (TCI) update list comprising at least two cells. The one or more configure parameters may indicate a first table indicating combinations of co-scheduled cells among a set of cells, wherein a first row in the first table indicates the at least two cells among the set of cells. The one or more configure parameters may indicate: a second table indicating combinations of TCI codepoints for the set of cells, wherein each row in the second table indicates the same TCI codepoint for the at least two cells based on the simultaneous TCI update list comprising the at least two cells. The base station may send, to the wireless device, the one or more messages comprising the one or more configuration parameters. A second row in the second table does not indicate different TCI codepoints for the at least two cells based on the simultaneous TCI update list comprising the at least two cells. The second row in the second table may indicates the same TCI codepoint for the at least two cells based on the first row in the first table indicating the at least two cells. The base station may set, in the second row in the second table, the same TCI codepoint for the at least two cells. The setting may be based on the first row indicating the at least two cells (configured) in the simultaneous TCI update list. The base station may determine to transmit one or more second messages comprising one or more second configuration parameters to the wireless device. The one or more second configuration parameters may indicate a second simultaneous TCI update list comprising at least two second cells. The one or more second configuration parameters may indicate a third table indicating combinations of co-scheduled cells among a second set of cells comprising the at least two second cells, wherein each row in the third table does not indicate the at least two second cells. The one or more second configuration parameters may indicate a fourth table indicating combinations of TCI codepoints for the second set of cells, wherein a row in the fourth table indicates the same TCI codepoint or different TCI codepoints for the at least two second cells based on each row in the third table not indicating the at least two second cells. The base station may send, to the wireless device, the one or more second messages comprising the one or more second configuration parameters. A base station may comprise one or more processors and memory storing instructions that, when executed by the one or more processors, cause the base station to perform the described method, additional operations, and/or include additional elements. A system may comprise the base station configured to perform the described method, additional operations, and/or include the additional elements; and a wireless device configured to receive the one or more messages. A computer-readable medium may store instructions that, when executed, cause performance of the described method, additional operations, and/or include additional elements. A base station may perform a corresponding method comprising multiple operations. The base station may perform a corresponding method, for example, by sending the message.

A wireless device may perform a method comprising multiple operations. The wireless device may receive, from a base station, one or more messages comprising one or more configuration parameters indicating a transmission configuration indicator (TCI) table for a set of cells. The wireless device may receive a medium-access control (MAC) control element (CE) indicating mapping of a subset of TCI states to one or more TCI codepoints of a cell of the set of cells. The wireless device may receive a downlink control information (DCI) comprising a scheduled cell indicator field scheduling one or more cells among the set of cells, wherein the one or more cells comprise the cell. The wireless device may receive a downlink control information (DCI) comprising a TCI field indicating a row in the TCI table, wherein the row indicates a TCI codepoints for the set of cells. The wireless device may, based on (e.g., in response to) the one or more TCI codepoints of the cell not comprising a TCI codepoint, among the TCI codepoints in the row, of the cell, communicate, with the base station and via the cell, using a default TCI state of the subset of TCI states. The communicating with the base station comprises one or more of send a physical uplink shared channel (PUSCH) transmission to the base station; or receive a physical downlink shared channel (PDSCH) reception from the base station. Each row of one or more rows in the TCI state table may indicate respective TCI state codepoints for the set of cells. The DCI may schedule one or more of one or more PDSCH receptions via the one or more cells, wherein each PDSCH reception of the one or more PDSCH receptions is for (or associated with) a respective cell of the one or more cells and the one or more PDSCH receptions comprise the PDSCH reception via the cell; or one or more PUSCH transmissions via the one or more cells, wherein each PUSCH transmission of the one or more PUSCH transmissions is for (or associated with) a respective cell of the one or more cells and the one or more PUSCH transmissions comprise the PUSCH transmission via the cell. Each TCI codepoint of the TCI codepoints in the row may be associated with a respective cell of the set of cells. The TCI codepoints in the row may comprise one or more TCI codepoints to be applied, by the wireless device, to the one or more PDSCH receptions or the one or more PUSCH transmissions via/for the one or more cells, wherein the one or more TCI codepoints of the one or more cells comprise the TCI codepoint of the cell. The one or more cells may be one or more of active; not deactivated; or not dormant. The wireless device may, based on the receiving the MAC-CE, mapping the subset of TCI states to the one or more TCI codepoints, wherein each TCI codepoint of the one or more TCI codepoints indicate one or more respective TCI states of the subset of TCI states. The TCI codepoint is greater than maximum TCI codepoint among the one or more TCI codepoints of the cell. The default TCI state may be indicated by one or more of: a lowest TCI state index among one or more TCI state indexes of the subset of TCI states; a lowest TCI codepoint of the one or more TCI codepoints of the cell; or a lowest TCI codepoint among at least one TCI codepoint, of the one or more TCI codepoints, indicating a single TCI state. The wireless device may receive a second DCI. The second DCI may comprise a scheduled cell indicator field indicating one or more second cells among the set of cells, wherein the one or more second cells comprise the cell. The second DCI may comprise a TCI field indicating a second row in the TCI table, wherein the second row indicates second TCI codepoints for the set of cells. The wireless device may, based on the one or more TCI codepoints of the cell comprising a second TCI codepoint, among the second TCI codepoints in the second row, of the cell, communicate, with the base station and via the second cell, using a TCI state indicated by the second TCI codepoint. The second DCI may comprise, wherein at least one demodulation reference signal (DM-RS) port of the PDSCH reception is quasi co-located with a reference signal indicated by the default TCI state. The sending the PUSCH transmission uses one or more of a spatial filter determined based on a reference signal indicated by the default TCI state; or a transmission power based on one or more power control parameters associated with the default TCI state. A wireless device may comprise one or more processors and memory storing instructions that, when executed by the one or more processors, cause the base station to perform the described method, additional operations, and/or include additional elements. A system may comprise the wireless device configured to perform the described method, additional operations, and/or include the additional elements; and a base station configured to send the one or more messages. A computer-readable medium may store instructions that, when executed, cause performance of the described method, additional operations, and/or include additional elements. A base station may perform a corresponding method comprising multiple operations. The base station may perform a corresponding method, for example, by sending the message.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3 GPP or non-3 GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, abase station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a wireless device from a base station, one or more configuration parameters indicating one or more sets of transmission configuration indicator (TCI) codepoints for a set of cells;
   receiving an activation command mapping one or more TCI states to one or more TCI codepoints for a first cell of the set of cells;
   receiving downlink control information (DCI) configured to schedule a communication via the first cell, wherein the DCI indicates a set of TCI codepoints, of the one or more sets of TCI codepoints for the set of cells, comprising a first TCI codepoint for the first cell; and
   based on the one or more TCI codepoints for the first cell not comprising the first TCI codepoint, communicating, with the base station via the first cell, based on a default TCI state of the one or more TCI states.

2. The method of claim 1, further comprising determining, based on the receiving the DCI, that the first TCI codepoint is not one of the one or more TCI codepoints for the first cell.

**3.** The method of any one of claims 1-2, wherein the one or more TCI codepoints for the first cell not comprising the first TCI codepoint indicates that the first TCI codepoint is not activated for the first cell.

**4.** The method of any one of claims 1-3, wherein the communicating with the base station comprises one or more of:

sending a physical uplink shared channel (PUSCH) transmission to the base station; or
receiving a physical downlink shared channel (PDSCH) reception from the base station.

**5.** The method of any one of claims 1-4, wherein each set of TCI codepoints of the one or more sets of TCI codepoints comprises TCI codepoints associated with respective cells of the set of cells.

**6.** The method of any one of claims 1-5, further comprising mapping, based on the activation command, each TCI codepoint of the one or more TCI codepoints to a respective TCI state of the one or more TCI states.

**7.** The method of any one of claims 1-6, wherein the first TCI codepoint is greater than a maximum TCI codepoint of the one or more TCI codepoints.

**8.** The method of any one of claims 1-7, wherein the default TCI state is indicated by one or more of:

a lowest TCI state index of one or more TCI state indexes of the one or more TCI states;
a lowest TCI codepoint of the one or more TCI codepoints for the first cell; or
a lowest TCI codepoint, of the one or more TCI codepoints, that is mapped to a single TCI state.

**9.** The method of any one of claims 1-8, further comprising:

receiving second DCI configured to schedule a second communication via the second cell, wherein the second DCI indicates a second set of TCI codepoints, of the one or more sets of TCI codepoints for the set of cells, comprising a second TCI codepoint for the second cell; and
based on the second TCI codepoint being activated for the second cell, communicating, with the base station via the second cell, based on a TCI state indicated by the second TCI codepoint.

**10.** The method of any one of claims 1-9, further comprising determining, based on the default TCI state, one or more of:

a spatial filter,
a power, or
a reference signal,
for use in the communicating via the first cell.

**11.** The method of any one of claims 1-10, wherein the DCI is configured to schedule one or more of:

one or more PDSCH receptions via one or more cells of the plurality of cells, wherein each PDSCH reception, of the one or more PDSCH receptions, is associated with a respective cell of the one or more cells; or
one or more PUSCH transmissions via the one or more cells, wherein each PUSCH transmission, of the one or more PUSCH transmissions, is associated with a respective cell of the one or more cells.

**12.** The method of any one of claims 1-11, wherein each TCI codepoint, of a set of TCI codepoints of the one or more sets of TCI codepoints, is associated with a respective cell of the set of cells.

**13.** A wireless device comprising:

one or more processors; and
memory storing instructions that, when executed by the one or more processors, cause the wireless device to perform the method of any one of claims 1-12.

**14.** A system comprising:

a wireless device configured to perform the method of any one of claims 1-12; and
a base station configured to send the one or more configuration parameters.

**15.** A computer-readable medium storing instructions that, when executed, cause performance of the method of any one of claims 1-12.

100

DN(s)

CN
102

RAN
104

Wireless
Device
106

**FIG. 1A**

DN(s)

UPF
158B

AMF
158A

AMF/UPF 158

5G-CN 152

NG    NG    NG    NG

gNB
160A

Base Station
160B

Xn

ng-eNB
162A

Base Station
162B

Xn

Xn    Xn

NG-RAN 154

Uu

Uu

Wireless Device
156A

Wireless Device
156B

Wireless
Devices 156

150

**FIG. 1B**

## Wireless Device 210

| SDAP |
| 215 |

| PDCP |
| 214 |

| RLC |
| 213 |

| MAC |
| 212 |

| PHY |
| 211 |

## Base Station 220

| SDAP |
| 225 |

| PDCP |
| 224 |

| RLC |
| 223 |

| MAC |
| 222 |

| PHY |
| 221 |

## FIG. 2A

## Wireless Device 210

| NAS |
| 217 |

| RRC |
| 216 |

| PDCP |
| 214 |

| RLC |
| 213 |

| MAC |
| 212 |

| PHY |
| 211 |

## Base Station 220

| RRC |
| 226 |

| PDCP |
| 224 |

| RLC |
| 223 |

| MAC |
| 222 |

| PHY |
| 221 |

## AMF 230

| NAS |
| 237 |

## FIG. 2B

**IP Packets**

**FIG. 3**

**FIG. 4A**

**FIG. 4B**

EP 4 432 593 A1

Logical
Channels

PCCH   BCCH   CCCH   DCCH   DTCH

Transport
Channels

PCH     BCH                    DL-SCH

Physical
Channels

DCI

PBCH              PDSCH  PDCCH

Physical
Signals

PSS/        CSI-RS      DM-RS      PT-RS
SSS

Downlink

**FIG. 5A**

CCCH    DCCH    DTCH

UL-SCH           RACH

UCI

PUSCH   PUCCH   PRACH

DM-RS       PT-RS       SRS

Uplink

**FIG. 5B**

**FIG. 6**

FIG. 7

Resource Element (RE)
1 Symbol x 1 Subcarrier

Resource Block (RB)
12 Subcarriers

One Slot (14 Symbols)

NR Carrier Bandwidth
(Up to 3300 Subcarriers)

FIG. 8

Time

Frequency

FIG. 9

EP 4 432 593 A1

Component Carrier

Intraband,
contiguous
1002

Freq. Band
A

Freq. Band
B

Intraband,
non-contiguous
1004

Freq. Band
A

Freq. Band
B

Interband
1006

Freq. Band
A

Freq. Band
B

**FIG. 10A**

PUCCH Group
1010

PUCCH Group
1050

Downlink
Component
Carriers

PCell
1011

SCell
1012

SCell
1013

PSCell
1051

SCell
1052

SCell
1053

UCI
1032

UCI
1031

UCI
1072

UCI
1071

UCI
1033

UCI
1073

Uplink
Component
Carriers

PCell
1021

SCell
1022

SCell
1023

PSCell
1061

SCell
1062

SCell
1063

**FIG. 10B**

**FIG. 11A**

**FIG. 11B**

Base Station

Tx beam

Wireless Device

Rx beam

P1

P2

P3

FIG. 12A

Base Station

Rx beam

Wireless Device

Tx beam

U1

U2

U3

FIG. 12B

Wireless Device — Base Station

Configuration 1310

⋮

Msg 1 1311

Msg 2 1312

Msg 3 1313

Msg 4 1314

**FIG. 13A**

Wireless Device — Base Station

Configuration 1320

⋮

Msg 1 1321

Msg 2 1322

**FIG. 13B**

Wireless Device — Base Station

Configuration 1330

⋮

Msg A 1331

Preamble 1341

1342 Transport block

Msg B 1332

**FIG. 13C**

EP 4 432 593 A1

EP 4 432 593 A1

CORESET
1404

CORESET
1403

CORESET
1402

CORESET
1401

Bandwidth

One slot

**FIG. 14A**

CORESET → CCE-to-REG mapping → Search Space

→ PDCCH candidate
→ PDCCH candidate
→ PDCCH candidate

**FIG. 14B**

Air Interface
1506

| Peripheral(s) 1526 | TX Processing System 1520 | | TX Processing System 1510 | Peripheral(s) 1516 |

| Memory 1524 | Processing System 1518 | | Processing System 1508 | Memory 1514 |

| GPS Chipset 1527 | RX Processing System 1522 | | RX Processing System 1512 | GPS Chipset 1517 |

Wireless Device
1502

Base Station
1504

FIG. 15A

**FIG. 15B**

**FIG. 16A**

**FIG. 16B**

**FIG. 16D**

**FIG. 16C**

EP 4 432 593 A1

FIG. 17

EP 4 432 593 A1

Base Station — 1810

Activation command 1 — 1820
(Coreset pool index 0)
— 1825

DCI 1 — 1830
(TCI field = 110)
1835
1838

Coreset 1
(Coreset pool index 0)

Activation command 2 — 1840
(Coreset pool index 1)
— 1845

DCI 2 — 1850
(TCI field = 001)
1855
1858

Coreset 2
(Coreset pool index 1)

$T_1$  $T_2$  $T_3$  $T_4$

Wireless Device — 1805

TCI state 26 is activated

TCI state 61 is activated

| TCI codepoint | TCI state(s) |
|---|---|
| 000 | TCI state 4 |
| 001 | TCI state 5 |
| ... | ... |
| 110 | TCI state 26 |
| 111 | TCI state 42 |

1870b  1870a

| TCI codepoint | TCI state(s) |
|---|---|
| 000 | TCI state 8 |
| 001 | TCI state 61 |
| ... | ... |
| 110 | TCI state 21 |

1880b  1880a

FIG. 18

FIG. 19

Receive configuration parameter(s) indicating
a TCI state table    2010

Receive DCI with:
- a co-scheduled cell indicator field indicating cell(s) among a set of cells; and
- a TCI state field indicating a row in the TCI state table, wherein the row indicates TCI codepoints for the set of cells

2020

2030

Is a TCI codepoint, of the TCI codepoints in the row, associated with a cell, of the cell(s), activated for the cell?

NO      YES

2040

2050

Communicate via the cell based on a default TCI state

Communicate via the cell based on a TCI state indicated by the TCI codepoint

FIG. 20

Send configuration parameter(s) indicating a TCI state table for a set of cells, wherein the TCI state table indicates at least one TCI codepoint for a cell of the set of cells

2110

Send an activation command mapping a subset of TCI states to one or more TCI codepoints, for the cell, comprising a each TCI codepoint of the at least one TCI codepoint for the cell

2120

Communicate, with the wireless device via the cell, based on a TCI state indicated by a TCI codepoint of the one or more TCI codepoints

2130

FIG. 21

Determine to send, to a wireless device, configuration
parameter(s) indicating:
- a simultaneous TCI update cell list comprising at
  least two cells;
- a co-scheduled cells table; and
- a TCI state table

2210

NO — At least one row in co-scheduled
cells table indicates/comprises
the at least two cells? — YES

2220

Set the same TCI codepoint
or different TCI codepoints,
for the at least two cells, in
the TCI state table

2240

Set the same TCI codepoint,
for the at least two cells, in
the TCI state table

2230

Send message(s) comprising the
configuration parameter(s)

2250

FIG. 22

Europäisches
Patentamt

European
Patent Office

Office européen
des brevets

# EUROPEAN SEARCH REPORT

**Application Number**

EP 24 16 3633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/007675 A1 (MATSUMURA YUKI [JP] ET AL) 5 January 2023 (2023-01-05) * Paragraphs 23, 33, 37, 40-41, 50, 54, 56, 85, 90, 111-115, 122-123, 140, 155-158, 180, 290-292; figures 2D, 3A, 3B, 6 * | 1-15 | INV. H04L5/00 H04B7/06 H04W72/23 |
| A | WO 2021/095025 A1 (ERICSSON TELEFON AB L M [SE]) 20 May 2021 (2021-05-20) * paragraphs [0054], [0103] - [0121]; figures 7, 13-16 * | 1-15 | |
| A | WO 2023/014673 A1 (OFINNO LLC [US]) 9 February 2023 (2023-02-09) * paragraphs [0193] - [0197], [0243] - [0257]; figure 17 * | 1-15 | |

**TECHNICAL FIELDS SEARCHED (IPC)**

H04B
H04W
H04L

The present search report has been drawn up for all claims

| Place of search | Date of completion of the search | Examiner |
|---|---|---|
| The Hague | 31 July 2024 | Lähteenmäki, Laura |

EPO FORM 1503 03.82 (P04C01)

## ANNEX TO THE EUROPEAN SEARCH REPORT
## ON EUROPEAN PATENT APPLICATION NO.

EP 24 16 3633

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | | Publication date | Patent family member(s) | | Publication date |
|---|---|---|---|---|---|
| US 2023007675 | A1 | 05-01-2023 | AU | 2019476586 A1 | 30-06-2022 |
| | | | CN | 115039428 A | 09-09-2022 |
| | | | EP | 4068830 A1 | 05-10-2022 |
| | | | JP | 7480176 B2 | 09-05-2024 |
| | | | JP | WO2021106092 A1 | 03-06-2021 |
| | | | US | 2023007675 A1 | 05-01-2023 |
| | | | WO | 2021106092 A1 | 03-06-2021 |
| WO 2021095025 | A1 | 20-05-2021 | NONE | | |
| WO 2023014673 | A1 | 09-02-2023 | CN | 118176689 A | 11-06-2024 |
| | | | EP | 4344465 A1 | 03-04-2024 |
| | | | US | 2024121802 A1 | 11-04-2024 |
| | | | WO | 2023014673 A1 | 09-02-2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63452073